(19)

Europäisches
Patentamt
European
Patent Office
Office européen
des brevets

(11) **EP 1 962 234 A1**

(12) **EUROPEAN PATENT APPLICATION**
published in accordance with Art. 158(3) EPC

(43) Date of publication:
**27.08.2008 Bulletin 2008/35**

(21) Application number: **06834369.8**

(22) Date of filing: **04.12.2006**

(51) Int Cl.:
**G06N 3/00** *(2006.01)*

(86) International application number:
**PCT/JP2006/324614**

(87) International publication number:
**WO 2007/066787 (14.06.2007 Gazette 2007/24)**

(84) Designated Contracting States:
**DE**

(30) Priority: **05.12.2005 JP 2005350770**

(71) Applicant: **National University Corporation
Nagoya University
Nagoya-shi, Aichi 464-8601 (JP)**

(72) Inventors:
• **SAKATA, Makoto
Nagoya-shi, Aichi 464-8601 (JP)**
• **NISHIBORI, Eiji
Nagoya-shi, Aichi 464-8601 (JP)**

(74) Representative: **TBK-Patent
Bavariaring 4-6
80336 München (DE)**

(54) **METHOD OF OPTIMIZING MULTIPLE PARAMETERS BY HYBRID GA, METHOD OF ANALYZING DATA BY PATTERN MATCHING, METHOD OF ESTIMATING SUBSTANCE BASED ON RADIATION DIFFRACTOMETRIC DATA AND PROGRAM, RECORDING MEDIUM AND VARIOUS DEVICES RELATED THERETO**

(57) The present invention provides a Hybrid GA (HGA) in which local optimization operation is performed to only a few individual with lower fitness among a widely distributed large generation in genetic algorithm (GA). Since this HGA shows very strong and wide searching ability even in the multi-dimensional parameter space having strong multi-peaks, the present invention may efficiently determine a great number of structural parameters from a little information included in X-ray diffraction circles. As a result, the present invention may determine a complicated material structure from powder specimen even though it is difficult to make a single crystal, and thus the development of new materials is highly accelerated in the field of medicines or materials, etc.

FIG.2

**Description**

**BACKGROUND OF THE INVENTION**

**1. Field of the Invention**

(1) Determination of Material Structure

This patent application is directed to a series of inventions resulted from inventors' research of estimating a structure of materials of a powder specimen based on peak position data of intensity distribution that diffraction circles obtained by irradiating an X-ray on the powder specimen have.

Therefore, the present invention belongs to a "material structure determination technology" field that identifies a material structure of a specimen by radiation diffraction. More particularly, the present invention belongs to a "radiation diffraction data analysis technology" field that estimates a material structure of a powder specimen by analyzing a diffraction pattern of, for example, an X-ray irradiated on the powder specimen.

In general, a "material structure" is a term that refers to at least any one of a crystal structure of the material, a lattice structure and a molecular structure which are included in the crystal structure. Also, a "crystal structure" of a material is a technical term that includes both a "lattice structure" (lattice constant of the crystal) and a "molecular structure" (molecular arrangement in the crystal). However, the "material structure" is not limited to such a structural parameter of a molecule, but may also refer to an electronic density distribution parameter, a crystallographic structural parameter, etc. Also, a "structure determination" described herein refers to as accurate and precise estimation as possible of any one included in the material structure.

That is, the present invention relates to a technology that makes it possible to high precisely determine a crystal structure or a molecular structure of a material of a specimen, a radiation diffraction pattern of which is obtained only as intensity distribution data of diffraction circles, including a powder specimen composed of a plurality of fine grains, as well as a single crystal specimen. Therefore, according to the present invention, since the structure determination of a material, of which it is difficult to make a single crystal having a size over a certain value, can be achieved, the present invention is suited to the structure determination of medicine, new materials or the like, which have unknown molecular structures.

(2) Hybrid GA

The present invention also belongs to a technical field of "parameter optimization" or "optimal parameter search", which optimizes a plurality of parameters by hybrid GA, or a technical field of "data analysis by pattern matching".

A key concept of the present invention is hybrid GA for improving convergence through hybridization by incorporating local optimization operation in genetic algorithm (which will be abbreviated to "GA") in a specific manner.

Also, with regard to the GA, in which the local optimization treatment is incorporated, several variations have been already well known, and will be explained with reference to publications in the following description of the related art. In the English-speaking world, the aforementioned algorithm is commonly called a "Lamarckian GA", which is named after an early proponent of the theory of use and disuse. However, because the same algorithm as above is commonly called a "hybrid GA" in Japan, the "hybrid GA" will be used in this specification. The hybrid GA can also be abbreviated to "HGA" as needed.

**2. Description of the Related Art**

1. Outlook on Material Structure Determination Technology by X-Ray Diffraction

(1) Structure Determination by Direct Method

The most important and basic information in the research and development of substances or medicine is information about atomic arrangement of the substance. That is, if we can know the three-dimensional atomic arrangement pattern in the molecules of the corresponding material, the function of the material can be estimated to a certain extent, and thereby various application researches can be made.

Such circumstances are not almost changed in the research and development of a molecular material in all fields. In other words, what is first needed when designing and newly creating molecules is determination of the atomic arrangement to detect whether the intended molecules are being made or not. If the atomic arrangement is determined, it can be detected whether the intended molecules are being made or not, and other important information is obtained. For example, from a distance between two adjacent atoms spaced apart from each other, many information necessary to determine the features of the molecules, such as a bonding pattern of the two atoms (if they are carbon atoms, the bonding pattern is a double bond or single bond) or a valence of each atom, can be obtained.

However, of the atomic arrangement determination methods, a method capable of providing the most convincing and direct evidence is an X-ray diffraction method. There is also another structure measurement method, for example, a nuclear magnetic resonance (NMR) method. But, the NMR method generally provides only circumstantial evidence. According to the X-ray diffraction method, the three-dimensional arrangement of all atoms in the corresponding molecule can be determined with high precision (less than about 0.01 nm). Also, there is an electron microscope inspection method as an atom inspection method for an inorganic substance. However, because the molecular determination is weak to electron beams, the atomic arrangement inspection using an electron microscope cannot be achieved for such a substance.

At present, according to common sense in the general X-ray diffraction field, a single crystal specimen is necessary for the atomic arrangement determination of the molecular crystal. This is because only if the single crystal specimen can be formed, the atomic arrangement (structure) can be almost automatically determined with respect to most substances except for macromolecules such as protein. Such a structure determination method of the crystal specimen by the X-ray diffraction is called a direct method, developed by J. Karle, H. A. Hauptman, who won the Nobel prize in 1985, by which the crystal structure is directly determined.

Recently, with the progress of the X-ray apparatus technology and the calculating performance of a computer used for analysis, a system capable of determining the structure, by use of only a diffraction apparatus and personal computer, is established and being widely spread. In general, each department of science and engineering of domestic and foreign universities possesses at least one single crystal X-ray diffraction apparatus. Also, such diffraction apparatuses are being widely spread to industries related to medicine or substance development.

(2) Difficulty of Creation of Single Crystal

However, the inevitable biggest difficulty or bottleneck occurring when carrying out the atomic arrangement determination method by the single crystal X-ray diffraction is to obtain a single crystal specimen. This is because the creation of the crystal having a size enough to be used as a single crystal specimen will not be achieved easily in many cases.

That is, because a single crystal material is very rare in the natural world, it is not too much to say that no single crystal material exists in the natural world. Although a large single crystal exceptionally exists, it is extremely rare in the natural world, and thus it will be an expensive gem. Also, there is no artificial large single crystal substance available but a semiconductor substance (e.g., silicon). Accordingly, the creation of the single crystal may refer to a process of forming a specific state of a material, which is not a commonly existing state. Generally, in order to form the single crystal, it is necessary to attempt crystallization of the specimen material in various crystallization conditions. And, this process requires much time, a great number of specimens and enormous labors. For example, supposing it took ten years to determine the structure of a certain material, the case that eight years of the above period were taken to form the single crystal having a size sufficient for X-ray diffraction was not a rare thing.

From this point of view, the materials, in which the single crystal is successfully formed and the atomic arrangement can be practically determined, are only several percent of a plurality of created materials.

As such, the fact that the atomic arrangement cannot be determined due to impossibility of creation of the single crystal specimen is a big obstacle to development and research using a molecular substance. For example, in a case of medicine, because it cannot be verified whether a desired molecule is being made or not, the developed new material cannot be often used as medicine. Also in a case of functional substance, even though a material having desirable characteristics in an electrical conductivity can be created, it cannot be known which material structure results in the characteristics or function of the material.

As described above, because the specimen material of a single crystal cannot be made, the structure determination cannot be achieved by a direct method using an X-ray diffraction pattern, and thus the information for material design was insufficient. As a result, material developments, which were extemporaneous and had unnecessarily many trials and errors, have been made until now.

2. Current State in Representative Fields

For the above reasons, the development of technology of determining the material structure of a powder specimen is really needed in very broad fields in which research and development on molecular substances are vigorously made. So as to clearly understand such circumstances, the current state of the related art will be explained with reference to the medicine development field and the nanotechnology material development field hereinafter.

(1) Medicine Development

Generally, because the medicines (or drugs) are used in a powder state in many cases, what is essentially needed in the research and development of the medicine is the material structure in a powder state.

However, in a case of medicine which is generally composed of organic molecules, the structure cannot be determined from the powder as described above. Thus, the structure is determined by forming the single crystal by endeavors over a long period. Recently, the newly developed material cannot be permitted as medicine until the material structure is verified that it is safe. Thus, in many cases, even though a new material having an effect of a medicine is found, when a large single crystal cannot be made of the material and the three-dimensional molecular structure cannot be analyzed, the new material cannot be used as medicine.

If the molecular structure of the medicine can be determined from the powder specimen, the development of new medicine would make rapid progress. In addition, there is possibility that the following advantages are generated in the medicine development field.

There are many organic molecules used in medicine, which have different three-dimensional arrangement of atoms in the molecules or different crystal structures while having the same molecular formula or structural formula notation. As such, the molecules having different crystal structures while having the same structural formula notation are called molecules having a "crystal polymorph" in the medicine field.

In a case where the molecules of a certain medicine are a crystal polymorph, because even powders having the same structural formula have different crystal structures, the powders may have different melting points, densities, thermodynamic stabilities and solubilities in solvent. Therefore, if a phase other than the desired phase of the crystal polymorph is used, a problem may occur such that the powders are not dissolved in water, contrary to the purpose, and thus are not medicinal. That is, the properties of crystal polymorph is a very important problem in the medicine development field.

Furthermore, the compression or heat treatment of the powder specimen is occasionally carried out in the process of producing medicines, for example, forming tablets. However, the structure of the molecular crystal may be changed in such a process. In order to detect the change of the structure in such a process, the structure determination from the powder specimen is necessary. However, at present, because there is no method of determining the structure from the powder specimen, the structure determination is not performed.

If the structure of the medicine can be determined from the powder specimen, the medicine development is rapidly accelerated, and as a result the health of people in the world is promoted. However, there has been no related solution for practical use until now.

(2) Nanotech Material Development

Molecular materials, such as organic conducting materials or fullerene-related materials, are expected as key materials of nanotechnology, in the near future, in about 10 years. The researches of molecular materials are being made by many domestic and foreign researchers. Also in such researches, the structure information by X-ray diffraction is most important at the beginning of the material development.

In the initial research on the carbon soccer-ball-shaped molecules known as fullerenes, which are used in more than 10 products, such as bowling balls, tennis rackets, heads of golf clubs, cosmetics, etc., the structure determination was the most important theme. That is, after the structure was determined, the forming processes or various features of the functional materials, such as super conducting materials or magnetic materials, could be understood based on the structure, and the application researches have been made. Also, since the commercial plants for generating the fullerenes, which have producing capabilities of several tens of tons per year, have been recently established, the fullerenes are used in more and more products.

However, because any molecular material, without being limited to the fullerene, has molecules as the constituent unit of the crystal, the kinds of materials that can be created are numerous in comparison with inorganic materials such as silicon. Though a great number of new materials are compounded by researchers, there are many materials whose structure is not still revealed, because the single crystal specimen is necessary for the structure determination of the materials. As described above, the fact itself, of that the structure is not revealed, becomes an obstacle to promotion of the researches on new material creation.

For example, in many cases, when the structure of the new material is determined at the moment the single crystal is made as a result of endeavors of measuring the properties of the new material in advance, the molecules of the new material may be different from the expected molecules, or may be the same as the molecules created by other methods. However, if such a problem occurs, it means that most of the resources inputted in the research by that time have been meaninglessly wasted.

If there is a technology for determining the structure from the powder specimen even at the beginning of the material creation in which the single crystal cannot be made, the research on the technology can be rapidly accelerated.

Therefore, there is possibility such that the technology for determining the structure from the powder specimen becomes a basic technology also in the nanotechnology field using the molecular materials. However, the present invention is motivated by the fact that there is no solution for the structure determination from the powder specimen.

3. Reasons that Structure Determination from Powder Specimen is Difficult

(1) Summary

It has been described above that if there is a technology for determining the material structure from the powder specimen, the technology obviously may play a decisive role in the development of medicine and material, but the technology has not yet been realized. Hereinafter, the reasons that the structure determination of the powder specimen, which is a desperately needed technology, has not been practically used until now will be explained.

Briefly describing the reasons, because a physical quantity having too many degrees of freedom has been required to be precisely evaluated based on too little information, the current optimal parameter searching technology could not satisfy the above requirement.

(2) Amount of Information of Diffraction circle

First, it will be explained that the amount of information included in X-ray diffraction circles obtained from the powder specimen is too small.

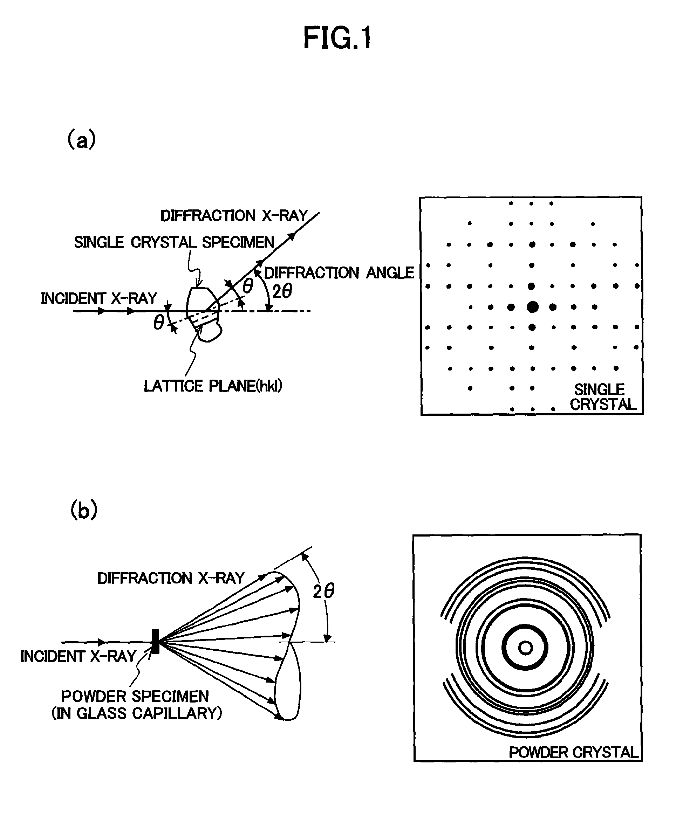

Suppose that a crystal having a certain size (e.g., about submillimeters) could be created from the corresponding material, and a test was performed such that the created crystal was applied to an X-ray diffraction test apparatus as a specimen. As shown in FIG. 1 (a), the X-ray incident on the crystal is diffracted, and a diffraction pattern, in which a diffraction intensity is distributed in a lattice shape (or cross-stripe shape), is generated.

On the other hand, suppose that the crystal having a size necessary for the diffraction test could not be created from the corresponding material, and the powder specimen of the corresponding material was applied to the X-ray diffraction test apparatus. As shown in FIG. 1 (b), the X-ray incident on the powder specimen is diffracted in a coaxial conical shape, and a diffraction pattern (diffraction circle), in which a diffraction intensity is distributed in a concentric circle shape, is generated.

Comparing the two-dimensional diffraction pattern shown in FIG. 1 (a) and the diffraction circles shown in FIG. 1 (b) with each other, it is known that the diffraction circles have only the intensity distribution data, in which the diffraction intensity is unidimensionally distributed along a radial direction according to a size of the diffraction angle. Therefore, the amount of information of the diffraction circles caused by the X-ray diffraction of the powder specimen is much smaller than the amount of information of the two-dimensional diffraction pattern obtained from the single crystal specimen.

In addition, because the X-ray diffraction direction and diffraction angle become different depending on the direction of the lattice plane (hkl) of the specimen crystal, in many cases, the diffraction circles obtained from the powder specimen have the overlapped diffraction peaks caused by a plurality of minute crystals included in the powder specimen. In such a case, because the overlapped peaks cannot be separated from each other, the amount of information included in the diffraction circles becomes small. Also, because a small number of peaks are dispersed within an excessively broad angle range in the diffraction intensity distribution of the powder specimen, in most cases, the diffraction data is incorporated into the numerical data showing the pairs of peak position and peak intensity.

Explaining quantitatively, the precision of the currently-used X-ray diffraction apparatus or the X-ray detector is about 0.1 to 0.01 degrees, supposed that the diffraction angle is set to $2\theta$. Because the range of the diffraction angle $2\theta$ is set to about 150 degrees, the resolution has a magnitude of only about $10^3$ to $10^4$ as a gray level. The gray level (i.e., brightness level) of the X-ray intensity in the diffraction circles has a magnitude of about $10^3$ to $10^6$.

(3) When Intending to Determine Lattice constant

When intending to determine the lattice constant that the crystal of the specimen material has, the cause of the trouble is the fact that the amount of information included in the diffraction circles is very small, but the precision required for the lattice constant determination is very high and the solution space is very broad.

That is, the problem when determining a group of six lattice constants (a, b, c, $\alpha$, $\beta$, $\gamma$) and an origin shift parameter (t) based on the unidimensional intensity distribution data from the diffraction circles of the powder specimen is that the precision required for the determination of the respective lattice constants is very high. In most cases, the standard (a, b, c) values of the specimen material, whose lattice constants are to be determined, have a magnitude of about 10 to 30 $\overset{\circ}{A}$, however the precision required to such determination is considerably fine, i.e., 0.01 to 0.001 $\overset{\circ}{A}$. Therefore, the determination precision in the searching space of the parameters (a, b, c) is required to have a magnitude

of about $10^5$ to $10^6$ with respect to each parameter, when the precision is expressed by the gradation (resolution with respect to a width whose value can be obtained).

Accordingly, in a case where the structural parameters to be determined are the lattice constants, when the required precision is expressed by the gradation, because the parameters (a, b, c) respectively have a magnitude of about $10^5$ to $10^6$ and the parameters ($\alpha$, $\beta$, $\gamma$) respectively have a magnitude of about $10^4$ to $10^5$, the precision becomes very high at any case. In addition, also the parameter (t) regarding to the origin position misalignment should be determined as the gradation having a magnitude of about $10^2$ to $10^3$.

As a result, though the number of cases of getting the plurality of parameters to be searched in the solution space is very large, i.e., about $10^{29}$ to $10^{36}$, the parameters should be determined from the small amount of information that the diffraction circles have, as described above. That is why it is difficult to determine the lattice constants based on the diffraction circles even though the number of lattice constants to be determined is only six.

### (4) When Intending to Determine Crystal Structure of Molecules

In such a case, the number of atoms composing the molecules are increased, and the rotatable coupling portions in the molecules are also increased. Accordingly, the rotational degrees of freedom in the molecules are increased. In a case of complicated molecules, to determine the crystal structure showing the three-dimensional arrangement type of the respective atoms in the molecules is to search the solutions in the multi-dimensional solution space having many degrees of freedom. Therefore, it is certain that as the degrees of freedom of the molecular structure are increased (i.e., as the number of parameters to be determined is increased), the structure determination becomes difficult exponentially.

### (5) Application of Genetic Algorithm (GA)

It has been explained above that the number of cases which the solution space can take is very large. Suppose that the number of cases is roughly $10^{20}$ at most, and the computer available can perform 10000 operations per second. In such a case, it takes about 3 hundred million years to carry out the total searching in a carpet bombing manner, which is a clearly unacceptable calculation time.

In this regard, various attempts are being made, so as to shorten the calculation time necessary to determine the material structure, by more wisely performing the optimal parameter searching. Of them, also the attempt using the genetic algorithm (GA) that is vigorously researched in the artificial intelligence field is being made, and the present invention has been devised from the researches made on the aforementioned backgrounds.

In the following description, the publications considered to be relevant to the present invention within the range that inventors can investigate will be enumerated and explained very briefly. The publications described below include publications regarding methods for determining the material structure and publications regarding hybrid GA devised by improving GA.

### 4. Brief Explanation of Publications

### (1) Patent Reference

#### * Patent Reference 1

This reference discloses the three-dimensional structure determination technology in which a crystal having a predetermined size is grown from one kind of orthorhombic system protein crystal belonging to a predetermined space group by using a droplet vapor diffusion method, and a compound isotope substitution method is used by the X-ray diffraction of the single crystal specimen (refer to paragraphs [0010] and [0011]). In this technology, the single crystal specimen was grown to have a size enough to be applied to the X-ray diffraction test, and the material structure determination by the diffraction circle data analysis was not carried out.

#### * Patent Reference 2

This reference discloses a technology of performing the material structure analysis, such as thin film structure analysis, single crystal structure analysis or powder structure analysis, by irradiating an X-ray or the like on the specimen. This technology is characterized in that a best solution is found from a general genetic algorithm (GA) or a $\mu$GA, which is the improvement of the GA, and the best solution (corresponding to an individual having the highest fitness) is subjected to local optimization, so as to perform the structural parameter determination with a high precision in a short time (refer to FIG. 1 of this reference). In the GA or the μGA used in this technology, the elite individual having the high fitness survives in the next generation thereof as it is, and the crossover is performed by using another individual as a parent individual (refer to paragraph [0018] and FIG. 2 of this reference).

In this technology, a worker should wait until the best solution converges on approximation to a correct solution by the optimal parameter searching using the GA or the μGA, thereby determining the structural parameters with the high precision. Therefore, this technology is anticipated to have an effect of shortening the calculation time necessary for the structural parameter determination to a certain extent, in comparison with the simple GA or μGA.

However, until the best solution approaches the correct solution by the GA searching, the application of the local optimization to the best solution is meaningless. Thus, a worker should wait until she/he can be convinced that the best solution has approached the correct solution. Accordingly, the effect of shortening the calculation time is restrictive.

That is, because this technology is basically characterized in that the local optimization can be applied just to the final step of the wide area searching conducted by the GA or the μGA, directivity is not applied to the evolution of the individual. This technology is merely to accelerate the final step, which is difficult to be achieved by the stochastic wide area searching by the GA or the μGA, by applying the local optimization as a conclusive operation. From this point of view, it is likely that the main point of this technology is a little bit different from that of the "Lamarckian GA" which it is commonly called in the English-speaking world.

* Patent Reference 3

This reference discloses an X-ray diffraction measurement apparatus which can decrease an influence by the dispersed X-ray by modifying a specimen holder and a peripheral portion of the holder.

* Patent Reference 4

This reference discloses a technology of measuring the data for interpolating a distance between pixels by moving a detector more precisely than the distance between the pixels, in order to increase the space resolution in the powder diffraction data measurement by an X-ray or synchrotron radiation. This technology can be applied to a one-dimensional detector or a two-dimensional detector.

* Patent Reference 5

This reference discloses a specimen holder of an X-ray diffraction test apparatus, which is devised so as to easily hold a small specimen even when a capillary storing the powder specimen is thin or the specimen itself has a thin linear shape.

* Patent Reference 6

This reference discloses a method of determining a crystal structure by crystallizing a mutant of protein kinase, and a result thereof.

* Patent Reference 7

This reference discloses a technology of maintaining diversity of population when genetic algorithm is applied to the optimization problem. This technology is characterized in that the population is divided into several groups, each of which is called an "island", and individuals are exchanged between the islands, or a hierarchical structure of the islands, which is called a "tower", is introduced.

A phrase of "hybrid type genetic algorithm" is written at the first in the "title of the invention" of this reference, however it is likely that this reference does not explain what the hybrid type genetic algorithm means. There is brief explanation of "a genetic algorithm combined with an existing algorithm" (refer to claim 1 and paragraph [0063] of this reference), but such explanation lacks concreteness. There is also description of "it is assumed that there is a high velocity existing algorithm to solve the optimization problem. Here, the existing algorithm refers to an algorithm based on a heuristic solution" (refer to paragraph [0006]), however a reader may think that the description of this reference is merely an assumption. In addition, no concrete numerical example is disclosed in this reference, and the content described in the "embodiment" is a content that should have been described in the "industrial applicability".

Thus, there is doubt whether the technology disclosed in this reference can solve a predetermined problem or not and whether the technology disclosed in this reference is perfect as an invention or not. There is also doubt whether or not the technology disclosed in this reference can be practically applied, when the objective is not to just find a solution having high fitness, but to analyze data having a single correct solution, such as the material structure estimation by the X-ray diffraction.

* Patent Reference 8

This reference discloses a technology of considering continuity of parameters in a crossover process of genetic algorithm when the optimization of the parameters or the searching of the optimal parameters is performed by using the genetic algorithm.

That is, as described in paragraph [0041] of this reference, a center point is first found in a parameter space with respect to two parent individuals selected as a parent at the crossover, and then two offspring individuals are generated according to successive probabilistic distribution such as normal distribution centering on the center point. As described in paragraph [0044] with reference to FIG. 8 of this reference, a standard deviation of the normal distribution is set in proportion to a distance between the parent individuals 1 and 2 or a distance between a line connecting the parent individuals and a third parent individual 3. As a result, the parent individuals positioned near each other in the parameter space are understood to be positioned near each other also in the gene space and crossed over, and thereby the offspring individuals resembling the parent individuals are created. Accordingly, because the distance between the parent individuals is large at the beginning of searching, the searching is performed in the relatively wide range. And, because the parent individuals are generally adjacent to each other at the end of searching, the local searching is performed.

It is described in paragraph [0046] of this reference that mutation is an operation of adding a normal random number to the gene of the offspring individuals, and is put in charge of the local searching, so that the end of searching can be efficiently performed. It is also described in paragraph [0058] of this reference that a local searching method, such as a steepest descent method, may be combined to efficiently reach a local peak at the end of searching.

However, according to the description of paragraph [0010] of this reference, initial convergence comes into question, and thus there is doubt whether the wide area searching can be sufficiently performed or not. This is because only the offspring individuals resembling the parent individuals are created at the crossover and the range of newborn individuals newly generated by the mutation is restricted within the normal distribution, and thus if the distribution of the parent individuals at the initial generation is biased, it is assumed that the initial convergence occurs as it is.

As described above, although it is described in paragraph [0058] that the local searching method is combined, the combination is achieved "after optimizing the parameters by the genetic algorithm". Thus, the technology of this reference may be considered to be practically the same as that of the aforementioned patent reference 2. In this regard, there is also a description that "by performing the optimization by the local searching method with respect to the optimized parameters using the genetic algorithm", in paragraph [0143] of the "Effects of the Invention".

Further, in this reference, a concept of "local small group" is introduced as a modified example of a first embodiment of this reference, and a content that the gene manipulation is performed within the small group is described in paragraphs [0062] and [0063]. However, this is like a situation in which people get married to only others living in the same village. Thus, this is totally contrary to the direction of finding diversity of the gene. Further, it is difficult to think that the gene manipulation performed within the small group has a function of solving the initial convergence which comes into question in this reference.

(2) Non-Patent Reference

Non-patent references, in which a technology of performing the wide area searching using the GA, will be first described.

* Non-Patent Reference 1

This reference discloses a kind of hybrid GA, in which the local optimization is combined with the GA, as a solution to a blank problem of the wide area optimization which has remarkable multi-peaks (i.e., has many valleys) (refer to the end of section 1). The hybrid GA is made by incorporating the local optimization operation by a quasi-Newton method into the estimation process of the GA (refer to the beginning of section 4 and FIG. 4 of this reference).

Referring to FIG. 9 and section 4.8 of this reference, the characteristics of this incorporation method is to perform the local optimization operation for the respective individuals (or for all newborn individuals newly generated by crossover or mutation).

Further, a σ-discarding process (exclusion depending on the fitness) and a linear scaling process to the fitness to maintain the diversity of the individuals are carried out as pre-treatments of a selection process (weeding out process) of the GA. The selection process employs an expectation strategy, in which the individuals of the numbers depending on a height of the fitness are selected as the parent individuals, and an elite preservation strategy, in which the individual having the highest fitness survives.

As a result, in spite of a problem that an object is considerably complicated, the above solution obtained an effect such that the object converged between only about 30 and 40 generations (refer to FIG. 7 of this reference). However, the calculation time necessary for the 40 generations is about 90 hours, i.e., nearly 4 days, even though using a workstation of 28.5 MIPS and 4.2 Mflops (refer to the end of section 5 of this reference).

* Non-Patent Reference 2

According to an investigation of this reference, the technology disclosed in this reference is substantially the same as the technology disclosed in the aforementioned non-patent reference 1.

* Non-Patent Reference 3

This reference discloses a method of dispersing and parallel processing a searching method (wide area optimization method) using GA, in order to apply the method to a problem of large-scale wide area searching (or wide area optimization) including a three-dimensional structure prediction problem of protein. As such a method, a distribution GA, an expanded distribution GA, a distribution probabilistic model GA, a neighborhood cultivation GA, an adaptive adding GA, and a hybrid method of combining the above GAs are introduced. However, the hybrid method described in this reference just relates to how to combine the above GAs, but is not likely to incorporate the local optimization operation into the GA.

* Non-Patent Reference 4

This reference discloses a method of determining a material structure of a powder specimen by analyzing X-ray diffraction data of the powder specimen, and also explains a practical application of the GA very well. From an investigation of this reference, we can know a background art at the time (1997) of writing this reference well.
It is described in the introduction of this reference that it is difficult to determine a crystal structure by a conventional method, because the overlap of intensity peaks is large even though intending to determine the crystal structure of a specimen material based on diffraction circle data obtained by irradiating an X-ray on a fine powder specimen. A main point of this reference is that the research on application of the GA to the diffraction circle data analysis is made and authors have tried to apply a certain idea devised in the application of the GA to the X-ray diffraction data of the powder specimen of the material whose structure has been already determined.
However, there is no special mention in this reference of hybrid GA in which the local optimization operation is applied to the GA. Thus, if a degree of freedom or precision of parameters to be determined at the crystal structure determination is increased, the calculation time is more likely to be increased explosively.

* Non-Patent Reference 5

This reference discloses a Lamarckian GA (i.e., hybrid GA) as a new method of determining the material structure by analyzing X-ray diffraction data of a powder specimen, and a calculation example in which the structure determination is achieved during an extremely short alternation of the generations. However, according to the technology disclosed in this reference, because the local optimization is applied to both offspring individuals created by crossover and newborn individuals newly generated by mutation, the number of alternation of the generations is small, but the calculation amount at each generation becomes large. As a result, although the technology of this reference is used, there is a limitation in an effect of shortening the calculation time necessary for the material structure determination.

* Non-Patent Reference 6

This reference discloses a technology of using GA as a method of finding crystal lattice constants of a specimen material from X-ray diffraction data of the powder specimen (not of determining the material structure (i.e., atomic arrangement in molecules) from the X-ray diffraction data of the powder specimen), and a practical example of analysis of the diffraction circle data. This reference explains the difficulty in lattice constant determination and the reasons therefor, however the GA used in the wide area parameter searching is well-known on the whole.

* Non-Patent Reference 7

This reference was referred to as information for explaining a BLX-$\alpha$ method at crossover of GA. In other words, in the crossover process of the GA, there is a method of expanding a portion of a parameter space, which should be optimized with respect to genetic parameters of two parent individuals, to an adequate range. Such a method is called a "blend crossover", and is simply expressed as a "BLX-$\alpha$" in many cases because a new parameter $\alpha$ is introduced to set a proper expansion. Also, when the parameter $\alpha$ is set to, for example, 0.5, the method is expressed as a "BLX-0.5".

* Non-Patent References 8 to 10

Researches on a technology of directly determining a crystal structure have a long history, and non-patent references 8 to 10 are representative references disclosing the technology of directly determining the crystal structure. That is, non-patent reference 8 discloses derivation of a theoretical equation, and non-patent reference 9 discloses an influential relation to solve an equation. Non-patent reference 10 explains a crystallographic processing of an equation.

(3) Latest Prior Art

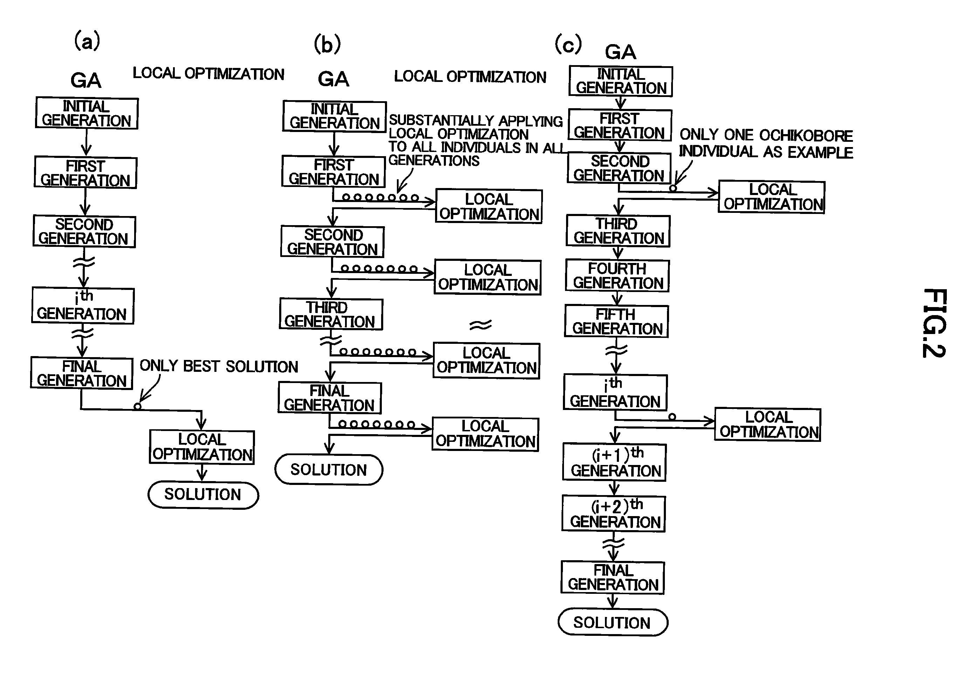

Of the above-described references, only patent reference 2 and non-patent references 1, 2 and 5 disclose the hybrid GA in which the local optimization is incorporated into the GA at any type. Thus, inventors understand that the above four references correspond to the latest prior art of the present invention.
Accordingly, the prior art related to the wide area optimization, in which the local optimization is incorporated into the GA, will be classified into two types disclosed in patent reference 2 and non-patent references 1, 2 and 5, and will be described in this specification. That is, as disclosed in patent reference 2, the wide area optimization technology, which is characterized in that the wide area searching of the parameter space by the GA is first performed and then the local optimization is performed for only the individual having the highest fitness of the population belonging to the final generation, will be referred to as a "prior art 1" (refer to FIG. 2 (a)). As disclosed in non-patent references 1, 2 and 5, the so-called Lamarckian GA, in which the wide area searching is performed by applying the local optimization to all of the newborn individuals newly generated by the GA, will be referred to as a "prior art 2" (refer to FIG. 2 (b)).

(4) List of Publications

[Patent Reference 1] Japanese Patent Laid-Open Publication No. 2000-86696, Kaji Akira and Anders Rirujas, "... PROTEIN CRYSTAL AND APPLICATION TO RATIONAL DRUG DESIGN BASED ON THREE-DIMENSIONAL STRUCTURAL INFORMATION OBTAINED FROM THE CRYSTAL"
[Patent Reference 2] Japanese Patent Laid-Open Publication No. 2001-83106, Alexander Uriyanenkofu and Harada Jinpei, "METHOD AND APPARATUS FOR ANALYZING MATERIAL STRUCTURE"
[Patent Reference 3] Japanese Patent Laid-Open Publication No. 2002-71589, Nishibori Eiji and Takada Masaki, "X-RAY DIFFRACTOMETER"
[Patent Reference 4] Japanese Patent Laid-Open Publication No. 2003-149180, Takada Masaki, Nishibori Eiji, Sakata Makoto and Harada Jinpei, "POWDER X-RAY DIFFRACTION DATA MEASURING METHOD ..."
[Patent Reference 5] Japanese Patent Laid-Open Publication No. 2004-37345, Harada Jinpei, Nishibori Eiji, Wakui Giichi, Kumazawa Katsuyoshi, Washimi Takao, Kozuka Motoki, Takada Masaki and Sakata Makoto, "SPECIMEN HOLDER AND X-RAY APPARATUS"
[Patent Reference 6] Japanese Patent Publication No. 2005-500844, Novartis Institutes for BioMedical Research, Switzerland (Applicant), "KINASE CRYSTAL STRUCTURE AND ... FOR KINASE ACTIVATION"
[Patent Reference 7] Japanese Patent Laid-Open Publication No. 2001-117901, Sasagawa Fumiyoshi and Shinagawa Akio (Applicant: Fujitsu LTD.) "OPTIMIZATION PROBLEM PROCESSING METHOD FOR ISLAND MODEL OF HYBRID TYPE GENETIC ALGORITHM AND PROCESSING PROGRAM RECORDING MEDIUM THEREFOR"
[Patent Reference 8] Japanese Patent Laid-Open Publication No. 2003-288579, Murakawa Masahiro and Hicuchi Tetsuya (Applicant: National Institute of Advanced Industrial & Technology) "METHOD AND APPARATUS FOR OPTIMAL FITTING PARAMETER DETERMINATION ..."
[Non-Patent Reference 1] Fujita Kikuo, Akagi Shinsuke and Hirokawa Noriyasu, "Approach for Optimal Nesting Using Genetic Algorithm and Local Minimization Algorithm", Transactions of the Japan Society of Mechanical Engineers (C), Vol. 59, No. 564 (1993), pp. 2576-2583, Paper No. 92-1875
[Non-Patent Reference 2] Fujita Kikuo, Akagi Shinsuke and Hirokawa Noriyasu, "Hybrid Approach for Optimal Nesting Using a Genetic Algorithm and a Local Minimization Algorithm", Proceedings of the 1993 ASME Design Automation Conference, DE-Vol. 65-1, (Sept. 1993), pp. 477-484, Albuquerque, New Mexico, U.S.A.
[Non-Patent Reference 3] Hiroyasu Tomoyuki, "Development and Parallization of Intelligent Optimization by Evolutionary Computation", Doshisha University Academic Frontier, Intelligent Information Science (AFIIS) Symposium 2001 (2002)
[Non-Patent Reference 4] K. Harris, R. Jhonston and B. Kariuki: Acta Cryst. (1998). A54, 632-645, "The Genetic Algorithm: Foundation and Applications in Structure Solution from Powder Diffraction Data"
[Non-Patent Reference 5] G. Turner, E. Tedesco, K. Harris, R. Jhonston and B. Kariuki: Chemical Physics Letters 321 (2000), 183-190, "Implementation of Lamarckian Concepts in a Genetic Algorithm for Structure Solution from Powder Diffraction Data"

[Non-Patent Reference 6] B. Kuriuki, S. Belmonte, M. McMahon, R. Jhonston, K. Harris and R. Nelmes: Journal of Synchrotron Radiation (1999) 6, 87-92, "A new approach for indexing powder diffraction data based on whole-profile fitting and global optimization using a genetic algorithm"

[Non-Patent Reference 7] L. J. Eshelman and J. D. Schaffer: "Real-Coded Genetic Algorithm and Interval Schemata", Foundation of Genetic Algorithm 2, pp. 187-202 (1993)

[Non-Patent Reference 8] D. Harker and J. S. Kasper: Acta Cryst. 1 (1948) 70., "Phases of Fourier Coefficients directly from Crystal Diffraction Data"

[Non-Patent Reference 9] D. Sayre: Acta Cryst. 5 (1952) 60., "The Squaring Method: a New Method for Phase Determination"

[Non-Patent Reference 10] W. Cochran: Acta Cryst. 8 (1955) 473., "Relation between the Phases of Structures"

## SUMMARY OF THE INVENTION

As described above, the conventional direct method by X-ray diffraction has a problem such that if a single crystal cannot be grown to a certain size (e.g., a diameter of about zero point several millimeters), the structure of materials cannot be substantially determined.

However, in many cases, a powder is obtained from even a new material at a step in which a single crystal cannot be obtained. In other words, in general, at an initial step right after the material is created, only a powder of the corresponding material is obtained. Therefore, if the material structure can be determined at this time, it can be determined promptly whether the target material is being created or not. Further, if the material structure becomes definite, the functional features thereof is also understood, thereby promoting the design of material based on the structure.

Therefore, an objective of the present invention is to provide solutions capable of high precisely determining the material structure of a specimen with a calculation load of a practical range, based on measured data of diffraction circles obtained by applying radiation to the specimen material of a powder type (not a single crystal). That is, the objective of the present invention is to provide solutions capable of determining structural parameters, such as a crystal structure or molecular arrangement, from intensity distribution data of X-ray diffraction circles obtained from a material, from which it is difficult to make a single crystal having a certain size, like a lot of new materials.

So as to solve the above objective, the present invention provides a "method of estimating structure of materials based on radiation diffraction data" (method invention), a "program of estimating structure of materials" and a "recording medium" thereof (software invention), and "various apparatus" related thereto (apparatus invention).

Another objective of the present invention is to provide solutions capable of reducing a convergence time by accelerating the GA searching, and precisely and efficiently optimizing, determining or estimating the more parameters than a prior art within a practical cost range, by using the above core technologies. A further objective of the present invention is to provide solutions capable of precisely and efficiently optimizing or estimating the more parameters than a prior art through pattern matching at a higher speed, while being based on measured data having a relatively small amount of information.

More particularly, the present invention provides a "method of optimizing multiple parameters by hybrid GA" and a "method of data analysis by pattern matching" (method invention). In addition, the present invention also provides a "program of searching for an optimal set of multiple parameters" or a "recording medium" thereof (software invention).

[Particulars of the Invention]

By using an X-ray diffraction measurement apparatus, such as a synchrotron radiation equipment of "SPring-8" (proper noun), to apply various radiation including an X-ray to a specimen material, the inventors of the present invention have performed measurement of a diffraction pattern and structure analysis of the corresponding material (e.g., patent reference 3, 4 and 5). As described in the above "Background Art" or "Technical Problem", inventors realized keenly the necessity of determination of a material structure based on radiation diffraction data (measured data of diffraction circles) of the powder specimen.

In this regard, inventors have continuously endeavored to find a powerful wide area optimization method (also called a large area optimization method) which is suitable to the determination of the structural parameters, such as lattice constants of the crystal or three-dimensional molecular structure, to develop a software to realize the wide area optimization method, and to determine the material structure from diffraction circles. As a result, the following invention has been fortunately completed, and is patent-applied herein.

The application of the present invention is not limited to measured data obtained from huge equipment such as the SPring-8 (proper noun), but can also be made to measured data obtained from small-scaled X-ray diffraction measurement apparatus installed in laboratories of enterprises or universities.

[Unity of the Application]

As described in the above "technical field", the core point of the present invention is a "hybrid GA" itself in which local optimization operation is incorporated in genetic algorithm (GA) in a specific manner. That is, the present invention provides a method of optimizing the multiple parameters by executing the hybrid GA and a program related thereto, and provides a technology of performing the sufficient wide area optimization for structural parameters in the multi-dimensional parameter space having multi-peaks and thereby estimating (i.e., determining) the material structure from radiation diffraction data such as diffraction circles with a high accuracy.

Accordingly, the solutions of the present invention described herein will be respectively named as follows. Every solution includes a unitary core idea of the present invention (i.e., using the "hybrid GA"), and commonly has the same technical features.

(1) Method Invention

* "Method of Optimizing Multiple Parameters by Hybrid GA"
* "Method of Data Analysis by Pattern Matching"
* "Method of Estimating Structure of Materials Based on Radiation Diffraction Data"

(2) Software Invention

* "Program of Searching for an Optimal Set of Multiple Parameters"
* "Program of Estimating Structure of Materials"
* "Recording Medium"

(3) Apparatus Invention

* "Computer Equipped with Hybrid GA"
* "Analyzing Apparatus Equipped with Hybrid GA"
* "Apparatus for Estimating Structure of Materials Based on Radiation Diffraction Pattern"

Therefore, the following solutions of the present invention are considered to satisfy the unity condition, and are united as a single application. The numbers of the respective solutions which will be described hereinafter correspond to the numbers of the respective claims at the filing date of this application. Also, the constitutional features of the respective solutions and the operational effects caused by the constitution will be explained briefly hereinafter.

[Category of the Method Invention]

1. Method of Optimizing Multiple Parameters by Hybrid GA

(1) First Means

(Outline of First Means)

A first means of the present invention is a "method of optimizing multiple parameters by hybrid GA", which will be explained hereinafter. A "genetic algorithm" (abbreviated to GA) in which a local optimization operation is incorporated will be referred to as a "hybrid GA" or "HGA" (abbreviation of "hybrid GA").

The term of "hybrid GA" is generally used in Japan as described above, and the term of "Lamarckian GA" (corresponding to "hybrid GA") is widely used in the English-speaking world. However, it cannot be declared that the term of "hybrid GA" used in Japan is perfectly equivalent to the term of "Lamarckian GA" used in the English-speaking world. This is because the "hybrid GA" used in Japan is characterized in that the final step is accelerated by the local optimization in many cases as described in the above explanation of patent reference 2, however the "Lamarckian GA" used in the English-speaking world is characterized in that the local optimization is performed for all of the new individuals at every step to accelerate the evolution.

At least a part of code strings in the respective individuals are multiple parameters corresponding to a predetermined set of physical quantities. This means is a kind of methods of wide-area optimizing the multiple parameters by the GA in order to search for an appropriate combination of a plurality of parameters.

(Definition of First Means)

A first means of the present invention is a method of optimizing multiple parameters by Hybrid GA (Genetic Algorithm), which is a kind of GA to search for an appropriate combination of a plurality of parameters at least some of which are corresponding to a predetermined set of physical quantities, wherein the parameters are encoded to form at least a part of a code string in each individual, the GA starts with an initial generation which population includes a plurality of the individuals that stand for the parameters distributed moderately, in every generation, the GA repeats: an evaluation process to evaluate fitness of at least newborn individuals which are newly generated among the population in the generation concerned; a crossover process to generate new individuals as offspring by performing crossing-over between the plurality of individuals as parents among the population; and a selection process to select a plurality of the proper individuals which should be left as survivals in the next generation and to weed out the other individuals, also the GA repeats a mutation process to change a part of some of the individuals occasionally among the generations, expecting that the individuals with better fitness are generated while alternation of the generations is repeated in order to search for the optimum combination of the plurality of the parameters, the method being characterized in that the GA is Hybrid GA, and comprising a local optimization process in which local optimization operation is given to at least one selected from: one or more specific individuals corresponding to at least a part of the population in a plurality of specific generations as a part of all generations; and one or more specific individuals corresponding to a part of the population in a plurality of specific generations as at least a part of all generations.

Because it is difficult to understand the definition of the first means with only the above description, the constitution of this means will now be explained by being divided into a general constitution and a characterizing constitution so that a person who reads this specification can easily understand this means.

(General Constitution of First Means)

Briefly speaking, the general constitution of this means is to have GA.

A method of optimizing multiple parameters by Hybrid GA according to this means, for example, has a general constitution such that the GA starts with an initial generation which population includes a plurality of the individuals that stand for the parameters distributed moderately, in every generation, the GA repeats: an evaluation process to evaluate fitness of at least newborn individuals which are newly generated among the population in the generation concerned; a crossover process to generate new individuals as offspring by performing crossing-over between the plurality of individuals as parents among the population; and a selection process to select a plurality of the proper individuals which should be left as survivals in the next generation and to weed out the other individuals, and the GA also repeats a mutation process to change a part of some of the individuals occasionally among the generations, expecting that some individuals with better fitness are generated while alternation of the generations is repeated in order to search for the optimum combination of the plurality of the parameters.

In other words, the GA that this means has as a precondition of the constitution is an algorithm which starts with an initial generation which population includes a plurality of the individuals that stand for the parameters distributed moderately, and expects that some individuals with better fitness are generated while alternation of the generations is repeated. In every generation, while the evaluation process, the crossover process and the selection process are repeated, the GA performs alternation of the generations while adequately crossing-over the mutation process. The evaluation process refers to a process to evaluate fitness of at least newborn individuals which are newly generated among the population in the generation concerned. The crossover process refers to a process to generate new individuals as offspring by performing crossing-over between the plurality of individuals as parents among the population. The selection process refers to a process to select a plurality of the proper individuals which should be left as survivals in the next generation and to weed out the other individuals. The mutation process refers to a process to change a part of some of the individuals. As described above, this means is a method of optimizing multiple parameters by the GA repeating alternation of the generations in order to search for the optimum combination of the plurality of the parameters.

In the phrase of "expecting that the individuals with better fitness are generated while alternation of the generations is repeated", "the individuals" mean individuals that have the best fitness of the newborn individuals, as a result of the local optimization operation, the crossover or the mutation. Here, "the" just has a meaning that satisfies the conditions described previously, but does not have a meaning that defines the individuals which survive from the previous generation.

There are many variations of the constitution of GA. It does not matter if the general constitution may be changed, so long as the GA has at least the crossover process and the mutation process and expects that the individuals with better fitness are generated while alternation of the generations is repeated.

In other words, the portion, in which the respective processes of the general constitution of this means are described, may be changed into, for example, "in every generation, the GA repeats: an evaluation process to evaluate fitness of at least a part of the individuals among the population in the generation concerned; a selection process to select a plurality of the individuals as parents from the population; and a crossover process to generate new individuals as offspring by performing crossing-over between the individuals as parents ...".

(Characterizing Constitution of First Means)

The method of optimizing multiple parameters by Hybrid GA according to this means has a characterizing constitution of a local optimization process in which local optimization operation is given to at least one selected from: one or more specific individuals corresponding to at least a part of the population in a plurality of specific generations as a part of all generations; and one or more specific individuals corresponding to a part of the population in a plurality of specific generations as at least a part of all generations.

In short, an object subjected to the local optimization operation is not all individuals of all generations, but is some generations among the whole generations, some individuals of the whole generations, or some individuals of the population of the some generations. In other words, the object subjected to the local optimization operation is any one selected from some individuals of some generations among the whole generations, some individuals of the whole generations, and all individuals of some generations.

There may be various patterns in distribution of specific generations. That is, even when the specific generations lie scattered, the specific generations need not always occur periodically at every predetermined number of generations, and a frequency of occurrence or a period of occurrence of the specific generation may be changed during alternation of the generations. Also, it will be good to make the specific generations occur also in the initial generations. Contrary thereto, it will be good to forbid the initial generations to become the specific generations.

The number of the specific individuals chosen from each specific generation may be constant among all specific generations, or may be changed during alternation of the generations. In a case where the specific individuals are a part of the population, the number of the specific individuals may be set to the absolute number, or a predetermined percentage (e.g., 1 % or 0.1 %) of the population may be chosen as the specific individuals. If the population is uniform, the both types are equivalent to each other. However, if the population is changed due to alternation of the generations, the both types have a difference from each other. Alternatively, the number of the specific individuals may be set to occupy a predetermined percentage with respect to the number of the newborn individuals generated by the crossover or the mutation. Of course, such a percentage does not need to be constant, and may be changed at alternation of the generations.

For example, suppose that the population including 1000 individuals repeats alternation of the generations by the GA.

First, according to an extreme embodiment, one of the population of each generation is selected as the specific individual at every alternation of the generations, and is subjected to the local optimization operation. In many cases, such an embodiment may be the most preferred embodiment.

This is because if a half (500) of the population (1000 individuals) of each generation is newborn individuals, the number of the local optimization operation at each generation according to this embodiment is reduced to about one five-hundredth in comparison with the Lamarckian GA. This means a drastic decrease in the amount of computation. In addition, different from the Lamarckian GA, since the most individuals of the population of the generation concerned are subjected to the local optimization operation, the diversity of the individuals is not almost lost. Moreover, regardless of including the initial generation or not, directivity is applied to the evolution in all generations at every alternation of the generations by a certain extent, so that the evolution is successively accelerated. Therefore, the possibility of attaining the wide-area optimal value with an extremely small amount of computation becomes high.

Next, according to an intermediate embodiment, specific generations exist at every 23 generations or every 10 generations, for example, and one or some specific individuals of the population of the generation concerned are subjected to the optimization operation.

According to another extreme embodiment, the local optimization operation is performed for all individuals forming the population of the generation concerned, for example, once at every 100 generations.

However, as a result of performing the local optimization for a plurality of individuals, some of the individuals belonging to the population of the same generation may be occasionally gathered to a position corresponding to the same local optimal value in the parameter space. Accordingly, the plurality of individuals gathered adjacent to each other, at the positions which can be considered as substantially the same point or equivalence, may be regarded as one individual, and the decreasing number of the individuals may be supplemented by the newborn individuals generated by the crossover or the mutation.

While alternation of the generations is repeated, the individual, which has been already local-optimized in the previous generation, may be selected again as the specific individual, and may be subjected to the local optimization operation. In order to prevent such a problem, it will be good to attach marks (flags or the like) to the individuals to indicate whether the local optimization has been completed or not. Though not performing such a thing, if the number of the specific individuals subjected to the local optimization operation is too small with respect to the population, it is considerably rare that the same individual is selected again as the specific individual. Thus, such a case does not practically create a problem. Even if the local optimization operation is repeatedly performed for the same individual, the same operation after the second time is completed instantly, which does not lay a burden on the computing process.

Returning to the subject, in this means, the distribution of the specific generations and the number of specific individuals selected from the population of the generation concerned have considerably wide variations.

However, as disclosed in patent reference 2 of the above-described publications, if the specific generation whose individuals can be subjected to the local optimization is only one generation as the final generation, such a case is not included in this means. Also, like the "Lamarckian GA" disclosed in non-patent references 1, 2 and 5, if the local optimization is performed for all newborn individuals of all generations (i.e., all generations are specific generations and all individuals thereof are specific individuals), such a case is not included in this means.

Further, in this means, there is no particular limitation in the constitution of the GA as the background of this means and in the method of the local optimization operation incorporated in the GA. That is, the characteristics of this means lies on how to incorporate the local optimization operation in the GA to achieve hybridization.

Therefore, the GA as the background of this means may have the simple constitution such that "in every generation, the GA repeats the evaluation process, the weeding out process (selection process) and the crossover process, and expects that the individuals with better fitness are generated while the mutation process is adequately crossed over and alternation of the generations is repeated". Alternatively, the evaluation process may be included in the selection process, and thereby the GA may have the simpler constitution such that "the GA has the selection process (weeding out process), the crossover process and the mutation process".

Definition of some terms will be added hereto. A representative of the radioactive ray is an X-ray, however the radioactive ray also includes a particle beam such as a neutron beam, an electron beam, etc. The X-ray also includes a high energy X-ray such as radiation (synchrotron orbit radiation), coherent light in the X-ray region, etc. The diffraction primarily means transmission diffraction, however also includes diffraction by a reflection phenomenon. That the fitness of each individual is a successive quantity in the whole searching range is a sufficient condition for performing the local optimization operation regarding the fitness for the individuals.

(Operational Effect of First Means)

This means is not constituted such that the wide area searching is performed by the simple GA evolving stochastically without being applied with directivity and it is expected until the convergence on approximation to the optimal solution by the GA is surely achieved like prior art 1 (refer to FIG. 2 (a)). Also, this means is not constituted such that the local optimization operation is performed for all individuals (or all newborn individuals) of each generation like prior art 2 (refer to FIG. 2 (b)).

However, according to the predetermined embodiment of this means, the "specific individuals", which are subjected to the local optimization operation, are a tiny part of individuals which lie scattered in a plurality of dispersed generations ("specific generations") corresponding to a part of all generations and belong to the population of the generation concerned. As an extreme example, the embodiment of this means also includes a case where the "specific individuals" are a tiny part of individuals of the population of each generation among all generations, or the "specific individual" is any one of all individuals of a dispersed tiny part of generations among all generations.

Therefore, depending on the setting of the frequency of occurrence of the specific generation and the method of choosing the specific individual from the generation, this means is able to drastically decrease the number of local optimization operations, when compared with prior art 2.

A point which deserves attention is that a very complicated computing process is necessary because a differential process or another computing process similar thereto for calculating an inclination of the fitness in the neighborhood of the specific individual is repeatedly needed in order to perform the local optimization. Also, as the dimensions of the parameter space to be searched are increased by the increase in the number of parameters to be optimized or the degrees of freedom, a computation load necessary for the differential process is increased. Therefore, if the number of local optimization operations can be reduced, the effect of decreasing the computation load can be enhanced.

Accordingly, if the number of local optimization operations can be drastically reduced in comparison with prior art 2 by carrying out this means, in a case where the number of parameters to be optimized is large, the computation load can be remarkably decreased. That is, according to this means, it can be anticipated that the more the number of parameters to be optimized is, the more the calculation time is shortened than in prior art 2. As a result, this means has possibility of solving the problem of many parameters which have not been put to practical use due to an obstacle of a long calculation time.

In addition, this means does not have a problem such that diversity of the population of each generation is quickly lost like prior art 2. Therefore, this means has a powerful wide area searching capability with a few omissions, and as a result the wide area optimal value can be obtained for a short calculation time.

Different from prior art 1, according to this means, a worker does not need to wait until she/he can be convinced that the best solution of the GA converges on approximation to a correct solution without applying directivity to evolution of the GA. Describing more accurately, this means is characterized in that directivity is adequately applied to the evolution during alternation of the generations and thus the number of alternation of the generations can be reduced. Further, in most cases, the local optimization is performed for the final step in which the wide area optimal value is obtained.

That is, according to this means, since directivity can be applied to the evolution by performing the local optimization operation for certain individuals of some generations even during alternation of the generations, the number of alternation of the generations until the convergence on the wide area optimal value is achieved can be drastically decreased. Moreover, if the number of local optimization operations is set to be much smaller than the number of all newborn individuals generated by the crossover or mutation, the average calculation load at every alternation of the generation is not much increased in comparison with the GA having the local optimization operations as the general constitution.

Consequently, according to this means, though directivity is adequately applied to the evolution during alternation of the generations, the average calculation load at every alternation of the generations is not much increased in comparison with prior art 1 in which the wide area searching is performed by the simple GA. In other words, because the calculation load is not much increased when compared with the simple GA while directivity is adequately applied to the evolution during alternation of the generations, this means has an advantage that the number of alternation of the generations until the wide area optimal value is obtained is drastically decreased from the number of alternation of the generations in prior art 1. Specifically, if the individual reaches a portion of a peak (even a foot of a mountain) formed by the wide area optimal value (correct solution) and the local optimization is applied to the individual, the individual can reach the correct solution immediately. Accordingly, this means has an advantage of shortening the calculation time taken until the wide area optimal value is obtained, when compared with prior art 1 as well as prior art 2.

That is, this means has effects of drastically enhancing the wide area searching capability and remarkably shortening the calculation time necessary for the wide area optimization of a plurality of parameters, when compared with any one of prior art 1 and prior art 2. As a result, this means has possibility of solving a problem of optimization of a plurality of parameters, which has not yet been solved by prior art 1 or prior art 2 because a multi-peak space subjected to the wide area searching is too complicated.

(Inquiry into First Means)

\* Point

The reason for improving the convergence feature of the GA and remarkably shortening the time necessary for the wide area optimization of a plurality of parameters by properly incorporating the local optimization in the GA, like this means, is considered that the local optimization and the GA make up for the defects of each other.

The wide area searching of a plurality of parameters by the GA refers to a stochastic searching method. The GA has an ability of rapidly (i.e., with a small calculation load), even though rough, wide-area searching the multi-peak (i.e., having many valleys) and multi-dimensional parameter space and finding the combination of the parameters with properly good fitness. On the other hand, even though the individual get closer to the wide area optimal point (i.e., "correct solution" to be found), this cannot be recognized. Thus, it is hard for the individual to reach the optimal point from a pinpoint. In many cases, although the individual is generated near the optimal point, which the individual might reach by the local optimization, the individual is weeded out due to a reason that the fitness of the individual is not so good, and thus cannot survive in the next generation thereof in the process of alternation of the generations.

The searching by the local optimization operation refers to a deterministic searching method. Therefore, the local optimization, if applied to the limited area without multi-peaks in the multi-dimensional parameter space, is characterized in that the individual rapidly and easily reaches the optimal point. However, it is hard to wide area search the multi-dimensional space with strong multi-peak features.

If the GA and the local optimization are adequately combined, the advantages of the GA and the local optimization make up for the shortcomings of each other, thereby creating a possibility of solving a difficult problem that the wide area searching is applied to the multi-peak and multi-dimensional space and the individual reaches the optimal point from the pinpoint. Since this means is a technology developed based on such an idea, whether this means can have the above effects to a certain extent or not primarily depends on how to properly combine the local optimization and the GA.

There are two important points in combining the local optimization and the GA. A first point is a frequency of occurrence of the specific generation during alternation of the generations, and the number or percentage of the specific individuals with respect to the population of the generation concerned. A second point is to use which criteria for choosing the predetermined number of specific individuals from the population of the specific generation. In order to sufficiently obtain the effects resulted from the combination of the local optimization and the GA, it is necessary to pay attention to design of the GA itself, such as a rule for selecting the individuals which survive in the selection process, or a rule for methods of crossing-over or choosing the parent individuals to be crossed over in the crossover process.

Many solutions dependent upon this means include restrictions on a method of combining the GA and the local optimization or restrictions on how to design the GA itself in the combination. In this regard, it is desired to read out attentively the following description.

* Obstructive Factors in Combination of Both Prior Arts

As described above, the hybrid GA in which the local optimization operation is incorporated in the GA is conventionally classified into two types. One type of hybrid GA is prior art 1 in which the wide area searching is performed by successively repeating alternation of the generations by the GA and then the local optimization operation is applied to only the final step. The other type of hybrid GA is prior art 2 in which the local optimization is applied to all newborn individuals at every alternation of the generations of the GA.

That is, prior art 1 is constituted such that the wide area searching is stochastically performed by repeating alternation of the generations according to the Darwin evolution by the simple GA and then the local optimization is applied to only the individual with the best fitness of the population of the finally remaining generation. Such a technology includes a selection strategy in the selection process or selection of the parent individuals in the crossover process, but the GA is not fundamentally changed into a common GA until the final generation is generated. Therefore, since directivity of the evolution is never applied to the GA until the final generation is generated, the evolution by the GA is not accelerated. Occasionally, if the best individual of the final generation lies on approximation to the wide area optimal solution, the individual could reach the optimal solution. However, if not, the individual cannot reach the wide area optimal solution and the searching is terminated.

Prior art 2 is constituted such that all newborn individuals are subjected to the local optimization at every alternation of the generations of the GA and the direction of the evolution is intensely set in all generations, thereby the fitness being definitely rapidly improved in the extremely initial several generations and specifically the average fitness of the population of each generation being remarkably improved. However, during the above operation, diversity of the individuals forming the population is lost, and thereafter the fitness is not much improved, which may create possibility that the wide area searching capability in the multi-peak space is damaged, contrary to the intention. Moreover, because the local optimization operation having a great large amount of calculation is performed for all newborn individuals, the amount of computation necessary for one alternation of the generations becomes considerably large. Thus, the effect of shortening the calculation time necessary for the wide area optimization of a plurality of parameters is considered to be small.

Conclusively speaking, prior art 1 relates to a wide area searching method, in which the evolution is repeated totally according to the Darwin's survival of the fittest without applying directivity to the evolution during alternation of the generations and then directivity is applied to only the best individual in the final step. On the other hand, prior art 2 relates to a technology, in which the local optimization is applied to all newborn individuals and directivity is compulsorily applied to the evolution. As a result, diversity is lost from the population, and thus there is a tendency that the individual easily falls into a pit in the multi-dimensional parameter space with strong multi-peak features.

Now, let's inquire into why the concept of incorporating the local optimization in only a part of the GA, as described in the first means of the present invention, was difficult for even experts, and what the obstructive factors were in the above concept.

Briefly describing, it is guessed that the prevention of loss of diversity from the population in spite of the repetition of alternation of the generations and the application of directivity to the evolution cannot be compatible with each other until now. It is likely that the need to combine the security of diversity and the direction setting of evolution in balance has not been realized from the first. And, inventors have heard nothing about any evidence that such a need has been realized.

In other words, according to prior art 1, an attempt to apply directivity to the evolution performed by the GA has never been made until the final generation is generated. According to prior art 2, because diversity of the individuals necessary to efficiently perform the wide area searching is not secured, diversity gets lost rapidly from the population just after the individuals pass through the initial several generations. From a result of inventors' inquiry, it is difficult to consider that the defects of the two above prior arts were certainly realized before the present invention. It is more difficult to consider that the development of the GA, in which directivity is adequately applied in the evolution process while preventing the loss of diversity of the individuals belonging to the population in spite of the repeated alternation of the generations, was realized as the problem to be solved in this art.

Because the evolution theory of the Darwin's survival of the fittest is based on the random probability, it has a distinct tendency theoretically contrary to the Lamarckian evolution which refers to the idea that the individual effort brings about adaptations which are transmitted to the offspring. Such a tendency should be considered as an obstructive factor in combining prior art 1 and prior art 2. Therefore, it is unreasonable to understand that the present invention can be easily achieved by the combination of prior art 1 and prior art 2.

That is, it is natural to consider that there were many obstructive factors when experts in the hybrid GA or the Lamarckian GA as the genetic algorithm or its improvement intended to devise the technology like the present invention.

* Conclusion

In order to accomplish the first means according to the present invention, it is necessary to realize that directivity can be applied to the evolution only by performing the local optimization operation for a tiny part of individuals in the generations lying scattered during the repetition of alternation of the generations. The method of combining the local optimization and the GA according to this means has an advantage that diversity necessary for the wide area searching capability is not lost from the population in spite of change of the generations while directivity can be applied to the evolution.

As a result, this means has effects of preventing the individual from falling into a pit even in a multi-dimensional parameter space with strong multi-peak features, and having a much more powerful wide area searching capability than any one of the two prior arts. Further, if there is an individual that approached the wide area optimal value during alternation of the generations and the local optimization was performed for the individual, even though by chance, the purpose of wide area optimization of a plurality of parameters is immediately achieved. In most cases, such a chance occurs for a calculation time shorter than in any one of the two prior arts. As a result, according to this means, the wide area optimal value (or "correct solution") can be obtained in a much shorter calculation time.

(2) Restrictions on Frequency of Local Optimization Operations

Hereinafter, means applying restrictions on a frequency of the local optimization operations to the above-described first means will be explained.

The reason for the application of such restrictions is to decrease a frequency of the local optimization operations, because a great large amount of calculation is needed to perform the local optimization operations. Also, this is because preventing loss of function of the local optimization for applying directivity to the evolution of the GA is important in decrease in a calculation load of the whole process of searching the wide area optimal value in the multi-peak parameter space.

(Second Means)

In the "method of optimizing multiple parameters by hybrid GA" according to the above-described first means, a second means of the present invention is characterized in that the local optimization process is a process for applying the local optimization operation to the specific individuals as a part of the population in a plurality of specific generations as a part of all generations. That is, in this means, an object subjected to the local optimization operation is some individuals of a plurality of generations as a part of all generations.

The combination of the frequency of occurrence of the specific generation and the number of specific individuals will now be particularly exemplified. For instance, the specific generation may occur once at every 2 ~ 3 generations or some more generations, and the number of specific individuals in the generation may be only one. Also, the specific generation may occur once at every 10 generations to several tens of generations, and the number of specific individuals in the generation may be one to ten. The specific generation occurs in the successive generations at every alternation of the generations. However, there may be a specific generation that does not occur in the initial several generations, or occurs sparsely in only the initial several generations or not.

When compared with the above-described first means, this means has characteristics such that the frequency of the local optimization operations is relatively low. Moreover, depending on the setting method, the frequency of the local optimization operations can be remarkably decreased while adequately applying directivity to the evolution. That is, in a case where the individual lying near the wide area optimal value is occasionally local-optimized while the wide area searching is stochastically performed by the action of the GA, the individual can reach the required optimal value instantly.

Accordingly, when compared with the above-described first means, this means has effects that the calculation load until the wide area optimal value is obtained is considerably decreased, and specifically the effect of shortening the calculation time becomes more prominent when the number of parameters to be optimized is large.

(Third Means)

In the "method of optimizing multiple parameters by hybrid GA" according to the above-described first means, a third means of the present invention is characterized in that the local optimization operation is applied to only one specific individual among the population in the specific generation concerned.

In this means, because the local optimization operation is applied to only one individual among the population belonging to the specific generation (or all generations) subjected to the local optimization operation, the frequency of the local optimization operations is considerably low in comparison with the above-described first means. Accordingly, this means has an effect of more shortening the calculation time, and such an effect becomes more prominent when the number of parameters to be optimized is large.

(Fourth Means)

In the "method of optimizing multiple parameters by hybrid GA" according to the above-described first means, a fourth means of the present invention is characterized in that the local optimization process is performed in the specific generations which lie scattered among at least a part of all generations.

In this means, the generations in which the local optimization operation is performed do not necessarily lie scattered in all generations, and it does not matter if the local optimization operation is never performed in a partial section of all generations. For example, during shallow alternation of the generations, it does not matter if there is a generation in which the local optimization is never performed or if the generation in which the local optimization is not performed continues for a while.

Since the degree of freedom for setting the distribution of the specific generations in all generations is increased, this means has an effect that there is a possibility of more efficiently performing the wide area optimization depending on the setting.

In practice, in some cases of carrying out the material structure determination based on diffraction circles, when the local optimization was not performed till the initial several generations during alternation of the generations, the convergence of the hybrid GA was accelerated, and thereby the calculation time was shortened. In this regard, a part of such features is defined in this means.

Also, the following fifth means and sixth means will be described by partially changing the expression of the above features.

(Fifth Means)

In the "method of optimizing multiple parameters by hybrid GA" according to the above-described first means, a fifth means of the present invention is characterized in that the frequency of occurrence of the specific generation increases as the generation goes down.

In this means, the frequency of occurrence of the specific generation, in which the local optimization operation is performed for the specific individual of any population of the generation, is set to be changed or even increased during alternation of the generations. Because there is no limitation in a method of increasing the frequency of occurrence of the specific generation, it will be good that the frequency of occurrence is increased in a step-shape only once during alternation of the generations or that the frequency of occurrence is gradually increased in a partial section or whole section of alternation of the generations.

Also this means has an effect that the convergence of the hybrid GA becomes much faster, thereby more shortening the calculation time.

(Sixth Means)

In the "method of optimizing multiple parameters by hybrid GA" according to the above-described first means, a sixth means of the present invention is characterized in that the specific generation occurs periodically at every predetermined number of generations in at least a latter part of all generations.

In practice, when carrying out the material structure determination based on diffraction circles, the local optimization was not performed from the initial generation to the predetermined generation, and then the specific generation in which the local optimization was performed for a certain individual was made to occur periodically after the predetermined generation, which resulted in acceleration of the convergence of the hybrid GA and shortening of the calculation time. In this regard, the above features are defined in this means.

Also this means has an effect that the convergence of the hybrid GA becomes much faster, thereby more shortening the calculation time.

(3) Restrictions on Method of Appointing Object Subjected to Local Optimization

(Meaning of Restrictions)

* Necessity of "correct solution"

Next, means about restrictions on a method of appointing the specific individual to be subjected to the local optimization from the population of the specific generation in which the local optimization is performed, will be described

A point in such restrictions is that probability of obtaining a correct solution becomes higher when the local optimization operation is performed for the individual with low fitness, rather than when the local optimization operation is performed for the individual with high fitness. Inventors discovered such a fact owing to serendipity that the convergence became faster extraordinarily due to a program error.

In the above description, the term of "correct solution" has been used, this is because inventors are researchers in a technical field of determination of a structure of materials by radiation diffraction.

That is, different from an optimal design field, this technical field is not satisfied with a condition that fitness of data matching is relatively high, and requires a wide area optimal correct solution (i.e., correct solution with highest fitness). Because a diffraction pattern very similar to measured data is formed in determining the structure of materials, the fitness of data matching is high. However, the structure determination of a material having a structure different from the correct solution is practically meaningless.

* Thought Experiment

A fact that probability of obtaining the correct solution becomes high when the local optimization operation is performed for the individual with low fitness, can be easily understood, for example, from the supposition of a problem of searching the highest peak in a world map. This is a kind of thought experiment.

A world map is a two-dimensional parameter space including a latitude and a longitude, and a land in the map is a range satisfying a predetermined restraint condition. An altitude of a point at which each individual is positioned corresponds to fitness of the individual concerned. Let's suppose to perform the searching having a purpose of reaching a mountaintop of the highest peak by the hybrid GA of the present invention by scattering a plurality of individuals in as a wide range of the land as possible.

The individuals with high fitness lie already on mountain regions, piedmont regions or upland regions, whose altitudes are high. If the individuals are located on the regions connected to the Alps, the Urals, the Rockies or the Andes, even though the individuals make an ascent by the local optimization and reach the mountain top, the individuals cannot reach the highest peak in the world. The individuals having possibility of reaching the top of Mt. Everest (which is also called Chomolungma or Sagarmatha), which is the highest peak in the world, by the local optimization are rather individuals that stayed at an intervale in the north edge of the Ganges river for a while.

From this point of view, the above thought experiment gives validity to the fact that the correct solution can be obtained faster when the individuals with relatively low fitness are selected as an object subjected to the local optimization operation.

However, to adopt such a method in order to select the individuals subjected to the local optimization operation was an idea diametrically opposed to common sense in the GA field, in which an elite strategy or a roulette wheel strategy treating the individuals with high fitness preferentially was emphasized. This is because the above concept has features contrary to the GA created after the model of the evolution theory of the Darwin's survival of the fittest and natural selection.

The following means of the present invention will diversely define the restrictions made based on the above idea.

(Seventh Means)

In the "method of optimizing multiple parameters by hybrid GA" according to the above-described first means, a seventh means of the present invention is characterized in that one or more specific individuals can be appointed from the individuals with comparatively low fitness among the population of the specific generation concerned.

This means has an operational effect as described above. As a result, according to this means, the convergence on the correct solution becomes faster and thus the calculation time is more shortened than when only the individuals with high fitness are selected as an object subjected to the local optimization operation.

(Eighth Means)

In the "method of optimizing multiple parameters by hybrid GA" according to the above-described seventh means, an eighth means of the present invention is characterized in that one or more specific individuals are appointed from an inferior group which is a group including a plurality of individuals with comparatively low fitness among the population of the specific generation concerned.

Because this means has more restrictions on the above-described seventh means, the above operational effects are more enhanced. As a result, this means has higher possibility that the hybrid GA converges much faster on the correct solution, thereby more shortening the calculation time.

(Ninth Means)

In the "method of optimizing multiple parameters by hybrid GA" according to the above-described eighth means, a ninth means of the present invention is characterized in that the inferior group includes a plurality of individuals, each of which belongs to at least one selected from a predetermined number and a predetermined percentage of the individuals with comparatively low fitness among the population concerned.

Because this means has more restrictions on the above-described eighth means, the above operational effects are more enhanced. As a result, according to this means, the searching by the hybrid GA is achieved more rapidly, and thereby the calculation time necessary to reach the correct solution is much more shortened.

(Tenth Means)

In the "method of optimizing multiple parameters by hybrid GA" according to the above-described eighth means, a tenth means of the present invention is characterized in that one or more specific individuals are selected from the inferior group of the generation concerned by one of roulette wheel selection and random selection.

Because this means has more restrictions on the above-described eighth means, the above operational effects are more enhanced. As a result, according to this means, the hybrid GA converges much faster on the correct solution, and thereby the calculation time is much more shortened.

(Eleventh Means)

In the "method of optimizing multiple parameters by hybrid GA" according to the above-described first means, an eleventh means of the present invention is characterized in that the local optimization process is a process of appointing one or more specific individuals as a part of the population in the specific generation concerned in order to perform the local optimization operation for each specific individual, and the appointment of the specific individual has a tendency of weak priority, in which the specific individual with lower fitness is appointed with higher probability.

Although it has been described that this means has a tendency of "weak priority", different from the above-described eighth means and ninth means, there remains possibility that the specific individual is selected from also the elite group which does not belong to the inferior group.

From a point of view that many of the individuals with low fitness reach the correct solution by the local optimization operation as described above, this means is constituted such that the individuals with lower fitness are appointed with higher probability. As a result, according to this means, the hybrid GA converges much faster on the correct solution, and thereby the calculation time is much more shortened.

(4) Restrictions on Selection Strategy in Selection Process

In the selection strategy to select the individuals that survive in the next generation, several means adopting an idea of reversion to the natural selection theory (Darwinism) called survival of the fittest, so-called "survival of the non-fittest", will be described hereinafter.

Please note that the features of the following several means relates to the selection of the individuals surviving in the selection process, but does not relate to the selection of the specific individuals subjected to the local optimization operation.

(Twelfth Means)

In the "method of optimizing multiple parameters by hybrid GA" according to the above-described first means, a twelfth means of the present invention is characterized in that the selection process adopts a selection strategy in which even the individuals with comparatively low fitness among the population in the generation concerned have possibility to survive in the next generation thereof.

In the above-described first means, because the local optimization operation is not performed for all of the individuals newly generated by the crossover or the mutation, there is possibility that the individuals, which could reach the correct solution if the local optimization was performed, are not local-optimized and are left in a state of low fitness.

In this regard, this means is constituted to prevent such individuals from being completely destroyed in alternation of the generations.

That is, the selection process of this means does not adopt the elite strategy in which only the individuals with high fitness survive, and adopts the selection strategy in which even the individuals with comparatively low fitness have possibility to survive in the next generation thereof. As a result, although the individuals, which could reach the correct solution if the local optimization was performed, are not local-optimized and are left as they are in a certain generation, the individuals have possibility to survive in the next generation thereof. Accordingly, such individuals have possibility to be local-optimized and reach the correct solution in spite of change of the generations.

Based on the aforementioned possibility, this means has an effect that there is high possibility that the hybrid GA converges rapidly on the correct solution and thereby the calculation time can be shortened.

(Thirteenth Means)

In the "method of optimizing multiple parameters by hybrid GA" according to the above-described first means, a thirteenth means of the present invention is characterized in that the selection strategy is a rule of selection adopted in the selection process, and the selection strategy is selected from: a random strategy to select each individual at random regardless of its fitness; an inverted elite strategy to give higher priority to each individual with comparatively low fitness to select the same; an inverted roulette wheel strategy in which each individual with comparatively low fitness is selected with higher probability; and any one of an inverted expectation value selection, an inverted ranking selection and an inverted tournament selection, in which higher priority is given to each individual with comparatively low fitness to be selected.

In the above-described twelfth means, the possibility that even the individuals with comparatively low fitness survive in the next generation thereof was not just denied. However, according to this means, the surviving individuals are selected at random regardless of fitness, or rather higher priority is positively given to the survival of the individuals with low fitness. That is, this means suggests the selection strategy in which higher priority is given to the survival of the non-fittest.

As a result, although the individuals, which could reach the correct solution if the local optimization was performed, are not local-optimized and are left as they are in a certain generation, the individuals have higher possibility to survive in the next generation thereof. Accordingly, such individuals have possibility to be local-optimized and reach the correct solution in spite of change of the generations. Based on such higher possibility, this means has an effect that there is higher possibility that the hybrid GA converges rapidly on the correct solution and thereby the calculation time can be shortened.

(Fourteenth Means)

In the "method of optimizing multiple parameters by hybrid GA" according to the above-described twelfth means or thirteenth means, a fourteenth means of the present invention is characterized in that the individual having the best fitness among the population of the generation concerned is called a top individual, and a top preservation strategy is also used with the selection strategy in alternation of the generations in order to make the top individual survive in the next generation thereof without fail.

According to this means, since the survival of the top individual is guaranteed, when the searching reaches the correct solution, the weeding-out of the individual having reached the correct solution in alternation of the generations is prevented. As a result, once the individual converges on the correct solution, the individual does not deviate from the correct solution, and moreover the top individual is not changed in spite of repetition of alternation of the generations, thereby facilitating decision on the convergence.

Accordingly, this means has an effect that the individual having converged on the correct solution does not move any more and thereby decision on the convergence is facilitated.

(5) Alternative Means (Separate Expression of First Means)

(Fifteenth Means)

A fifteenth means of the present invention relates to a "method of optimizing multiple parameters by hybrid GA", that is substantially the same as the above-described first means.

This means is a method of optimizing multiple parameters by GA, which optimizes a plurality of parameters, at least some of which are corresponding to predetermined physical quantities, wherein the parameters are encoded into each individual as a member of population of each generation, and the GA starts with an initial generation in which these parameters are distributed with a certain diversity, and repeats alternation of the generations under predetermined rules to generate the individuals with higher fitness. The features of this means is that local optimization operation is given to at least one selected from: one or more specific individuals corresponding to at least a part of the population in a plurality of specific generations as a part of all generations; and one or more specific individuals corresponding to a part of the population in a plurality of specific generations as at least a part of all generations.

This means has an operational effect that is substantially the same as the first means.

Also, the variations regarding the restrictions corresponding to the above respective means dependent upon the above-described first means can be set to be identically dependent upon this means, and the variations can obtain substantially the same operational effects as those of the above means respectively corresponding thereto.

2. Method of Analyzing Data by Pattern Matching

(Sixteenth Means)

In the "method of optimizing multiple parameters by hybrid GA" according to any one of the above-described first means to fifteenth means, a sixteenth means of the present invention relates to a "method of analyzing data by pattern matching", which is characterized in that the fitness of each individual is an index which shows how much a pattern of assumed data agrees with a pattern of measured data, the pattern of the assumed data being provided by an arithmetic operation based on an assumption of the physical quantities corresponding to a plurality of parameters encoded in the individual code concerned, and the measured data is analyzed by performing pattern matching between the assumed data of the individual concerned and the measured data, for the purpose of estimating the physical quantities by generating one or more individuals with higher fitness.

The fitness described herein is an index which shows a degree of the pattern matching or the data matching. However, an index showing a degree of matching deficiency (magnitude of disagreement) such as a square error may be used.

Since the hybrid GA as a key point of this means has the features described in any one of the above-described first means to fifteenth means, this means has the operational effects peculiar to the respective means. As a result, according to this means, the hybrid GA converges more rapidly on the correct solution of the pattern matching, and thereby the calculation time necessary for the method of analyzing the data can be shortened.

3. Method of Estimating Structure of Materials as Application of HGA

(Seventeenth Means)

A seventeenth means of the present invention relates to a "method of estimating structure of materials based on radiation diffraction data", that has the following features. Although a negative word of "estimating" is used herein, this means can estimate the structure of materials with considerable accuracy (quite superior to that in the two prior arts). Further, because the estimation accuracy is very high, this means is substantially a method of "determining" the structure of materials.

The features of this means is that the "method of optimizing multiple parameters by hybrid GA" described in any one of the above-described first means to fifteenth means is applied to the method of estimating (or determining) the structure of a predetermined specimen material based on the diffraction pattern formed by radiation irradiated to the specimen material. In this means, at least some of the physical quantities are structural parameters which determine the structure of the specimen material. The fitness of each individual stands for an index showing how much a diffraction pattern to be generated if the specimen material has the structural parameters decoded from the individual concerned agrees with the measured diffraction pattern.

Since the hybrid GA as a key point of this means is any one of the above-described first means to fifteenth means and has the features described in these means, the operational effects peculiar to the respective means resulted from such features can be obtained. That is, when the pattern matching of the radiation diffraction pattern is achieved, the convergence on the correct solution of the structural parameters becomes much faster than prior art 1 or prior art 2, by the features of the hybrid GA used in this means.

Therefore, according to this means, since a larger number of parameter spaces can be more precisely optimized by the wide area searching, the calculation time necessary to estimate or determine the material structure is remarkably shortened. As a result, this means has an effect that even the structure of the material, which could not be practically determined by the two prior arts, can be determined within allowable ranges of cost and time.

(Eighteenth Means)

In the "method of estimating structure of materials based on radiation diffraction data" according to the above-described seventeenth means, an eighteenth means of the present invention is characterized in that the structural parameters are at least one selected from: lattice constants which define the crystal structure of the specimen material; molecular structural parameters which define the three-dimensional atomic arrangement in the molecule of the specimen material; electron density distribution parameters which define the probabilistic distribution of the electron density in the molecule; and crystallographic structural parameters which define the three-dimensional atomic arrangement in a crystal or crystals of the specimen material.

That is, this means is a particular restriction on a term of "structural parameters" in the above-described seventeenth means.

Also, the "crystallographic structural parameters which define the three-dimensional atomic arrangement in a crystal or crystals of the specimen material" described herein are polarization coordinates (x, y, z), in which lengths (a, b, c) in the respective axial directions of each crystal are respectively standardized to a unit length of 1. Angle parameters defining the directions (postures) of the whole molecules in each crystal are also included. Generally, x, y and z respectively have a value of 0 to 1.

(Nineteenth Means)

In the "method of estimating structure of materials based on radiation diffraction data" according to the above-described seventeenth means, a nineteenth means of the present invention is characterized in that the diffraction pattern is diffraction circles, whose diffraction intensity is magnified and distributed in a concentric circle shape.

This means has an effect that the structural parameters for determining the structure of the specimen material can be determined even when the diffraction pattern of the radiation formed from the specimen material is diffraction circles. However, the diffraction circles have a shortcoming that there are many overlapped peaks and the amount of information included in the diffraction data is decreased sharply from that of the diffraction pattern of a lattice shape formed by the single crystal. Thus, it is difficult to determine a certain complicated material structure by the diffraction circles.

In other words, even though it is yet impossible to make a crystal having a size suitable to a specimen from a material, which is subjected to the structure determination, it is possible to determine lattice constants of a fine crystal formed by the material or a three-dimensional atomic arrangement structure of molecules forming the material by this means. As a result, it is possible to determine the structure of a new material, which has been generated so recently that a technology of growing a crystal has not yet been established. Therefore, this means is expected to make a great contribution to development of medicines or new materials or material design field.

This is because the hybrid GA used in this means has both the very powerful capability of searching for an optimal value in the wide area and the precise local optimization. That is, as described above, the core technology of this means is the "hybrid GA" of the present invention, and the most primary factor of practical use of this means is to remarkably shorten the calculation time necessary to wide area search and precisely optimize a plurality of parameters by the hybrid GA.

(Twentieth Means)

In the above-described nineteenth means, a twentieth means of the present invention relates to a "method of estimating structure of materials based on radiation diffraction data", which is characterized in that the fitness is an evaluation function which shows how much a measured data of intensity distribution in a radius direction of the diffraction circles agrees with an assumed data generated based on the structural parameters assumed and decoded from the individual concerned.

This means is a particular restriction on the above-described nineteenth means. In this means, an evaluation function, such as a sum of squares of an error between the measured data and the assumed data, can be used as the fitness, thereby facilitating the calculation of the fitness. If doing so, the local optimization operation can be selected from diverse local minimization methods by a minimum square error method.

Accordingly, this means has an effect that a load of calculating the fitness is decreased, thereby more shortening the calculation time.

(Twenty First Means)

A twenty first means of the present invention relates to a "method of estimating structure of materials based on radiation diffraction data", that is very similar to the above-described seventeenth means.

This means is to analyze a diffraction data which indicates intensity distribution of diffraction circles caused by diffraction of radiation irradiated to a specimen material in order to determine the structure of the specimen material which is at least one of a powder specimen including multiple crystals, a polycrystalline specimen as polycrystalline aggregation, an amorphous specimen and a solution specimen. That is, any one of the structural parameters, which show the structure of the specimen material, is estimated by data matching based on the diffraction data.

The hybrid GA (HGA), in which the local optimization operation is incorporated in the genetic algorithm (GA), is used as the algorithm for estimation, and the features of this means lies on the constitution of the HGA.

The GA includes a genesis process to generate population of an initial generation, and a digenesis process to cross over mutation by repeating crossover, replication and selection. That is, in the genesis process, multiple individuals, which include the structural parameters encoded, are generated with a certain diversity for the population of the initial generation. After such a genesis process, the digenesis process is performed, which repeats the crossover and the replication of the individuals, the selection to select the individuals by evaluating the fitness indicating the data matching, and the mutation occurring stochastically.

This means has two features. A first features is that the GA is a HGA which performs the local optimization operation for some individuals of the population concerned in a plurality of generations during the digenesis process. A second features is that the individuals with comparatively low fitness among the population concerned have possibility to be subjected to the local optimization operation.

Since the individuals with comparatively low fitness among the population concerned in a plurality of generations can be subjected to the local optimization operation during alternation of the generations of the GA, this means has substantially the same operational effects as those of the seventh means. As a result, according to this means, the calculation time taken until the individual converges on the correct solution of the structural parameters to be estimated is remarkably shortened, thereby making it possible to determine the material structure, which has not yet been achieved due to enormous calculation time.

(Twenty Second Means)

A twenty second means of the present invention relates to a "method of estimating structure of materials based on radiation diffraction data", which includes the following analysis processes.

The method of this means is based on intensity distribution data of diffraction circles obtained by irradiating radiation to a specimen material, and determines the material structure suitable to the intensity distribution data. Among a lattice constant determination process, a background scattering elimination process, a space group narrowing-down process, a basic structure determination process and a structure refinement process, this means includes at least the lattice constant determination process, the space group narrowing-down process and the basic structure determination process. Also, this means has characteristics of performing the determination of the material structure using the hybrid GA, in which the local optimization operation is incorporated in the genetic algorithm (GA), from at least one of the lattice constant determination process and the basic structure determination process.

First, the lattice constant determination process refers to a process to determine a set of lattice constants of the crystals included in the specimen material. In such a process, the lattice constants defining a unit lattice of the crystal concerned, for example, the lattice constants (a, b, c, $\alpha$, $\beta$, $\gamma$) are determined.

Second, the background scattering elimination process refers to a process to eliminate or decrease an influence of background scattering from the intensity distribution data. There are various causes of the background scattering, any one of which acts as a noise of confusing valuable information or signals. Thus, it is required to decrease the influence of the background scattering as sharply as possible.

Third, the space group narrowing-down process refers to a process to narrow down candidates of space groups which the crystals belong to. In such a process, based on the positions of occurrence of peaks or reflection of the diffraction pattern, the space groups having low possibility among 230 kinds of space groups that the crystals can form are excluded, and the space groups having high possibility are narrowed down to several kinds.

Fourth, the basic structure determination process refers to a process to determine a basic structure of the crystals in an initial stage, in order to identify the space group. In such a process, the space group, which seems to be most certain among the candidates of the space groups narrowed-down in the aforementioned space group narrowing-down process, is determined, and the positions and postures of the molecules and the three-dimensional atomic arrangement in the unit lattice are determined with a little rough precision.

Fifth, the structure refinement process refers to a process to refine the basic structure, in order to more precisely determine the structure of the material constituting the crystals. Also in such a structure refinement process, the electron density distribution in the molecules can be estimated or determined.

The greatest features of this means is that the local optimization operation takes place on the specific individuals as a part of each population in the multiple specific generations between alternation of the generations in the Hybrid GA, and the specific individuals can be chosen from an inferior group which includes multiple individuals with relatively low fitness, indicating agreement with measured data, among the population in the generation concerned.

In this means, the processes of estimating or determining the material structure by stages based on the radiation diffraction data becomes definite, and also the process which should be adopted with the hybrid GA in the above processes becomes definite. In addition, the features of the hybrid GA is restricted, and the structural parameters converge rapidly on the correct solution. Thereby, the calculation time is remarkably shortened.

Accordingly, this means has an effect that it becomes possible to realize the determination of a structure of a new material, such as the material structure determination based on diffraction circles formed by a powder specimen, which has not yet been achieved due to enormous calculation time, according to the predetermined processes.

[Category of the Product Invention]

1. Software Invention

(1) Program of Searching for an Optimal Set of Multiple Parameters

(Twenty Third Means)

A twenty third means of the present invention relates to a computer-executable "program of searching for an optimal set of multiple parameters", which is a computer program for a certain computer to perform a function of searching for an appropriate set of multiple parameters corresponding to a plurality of predetermined physical quantities. The features of this means, in order to perform the "method of optimizing multiple parameters by hybrid GA" according to any one of the first means to fourteenth means, is to include: an initial generation setting step in which the population of the initial generation is generated or read in; and a plurality of calculation steps (i.e., evaluation step, selection step, crossover step, mutation step and local optimization step) respectively corresponding to the evaluation process, the selection process, the crossover process, the mutation process and the local optimization process.

In other words, the "method of optimizing multiple parameters by hybrid GA" according to the above-described first means to fourteenth means is realized by performing the "program of searching for an optimal set of multiple parameters" of this means by using a certain computer.

(Twenty Fourth Means)

A twenty fourth means of the present invention relates to a computer-executable "program of searching for an optimal set of multiple parameters", which is a computer program for a certain computer to perform a function of searching for an appropriate set of multiple parameters corresponding to a plurality of predetermined physical quantities.

The features of this means is that a plurality of parameters corresponding to the predetermined physical quantities are encoded into each individual as a member of population of each generation, and the GA starts with an initial generation in which these parameters are distributed with a certain diversity, and repeats alternation of the generations under predetermined rules to generate the individuals with higher fitness, so that the genetic algorithm (GA) to optimize a plurality of parameters is incorporated with a local optimization step which gives local optimization operation to one or more specific individuals to improve fitness thereof.

This means is also characterized in that the local optimization step is a calculation step applied to at least one selected from: one or more specific individuals as at least a part of the population in a plurality of specific generations as a part of all generations generated by the GA; and one or more specific individuals as a part of the population in a plurality of specific generations as at least a part of all generations generated by the GA.

Since the GA is incorporated with the local optimization step which gives the local optimization operation to the specific individuals to improve fitness thereof in a plurality of specific generations while alternation of the generations is repeated, the convergence of the optimal parameter searching becomes fast, and thus the calculation time is remarkably shortened. As a result, this means has an effect of solving the problem of wide area searching for a plurality of complicated parameters, which has not yet been solved due to enormous calculation time, in a practical calculation time.

Also, since the variations regarding the restrictions on any one of the second means to fourteenth means dependent upon the above-described first means can be performed with respect to this means, this means has the same operational effects as those of the above respective means.

(Twenty Fifth Means)

A twenty fifth means of the present invention relates to a computer-executable "program of searching for an optimal set of multiple parameters", which is a computer program for a certain computer to perform a function of searching for an appropriate set of multiple parameters.

The features of this means is that the parameters are encoded into each individual of population in every generation, and the GA starts with population of an initial generation in which these parameters are distributed with a certain diversity, and repeats alternation of the generations under predetermined rules to generate the individuals with higher fitness, so that the genetic algorithm (GA) to optimize a plurality of parameters is incorporated with a local optimization step which gives local optimization operation to one or more specific individuals to improve fitness thereof.

This means is also characterized in that the local optimization step is a calculation step applied to at least one selected from: one or more specific individuals as at least a part of the population in a plurality of specific generations as a part of all generations generated by the GA; and one or more specific individuals as a part of the population in a plurality of specific generations as at least a part of all generations generated by the GA.

That is, this means excludes the restriction, that an optimal set of multiple parameters to be searched for are physical quantities, from the above-described twenty fourth means, and thus this means can be applied to a problem of searching for an optimal set of multiple parameters other than the physical quantities. Therefore, this means has substantially the same operational effects as those of the above-described twenty third means or twenty fourth means, and the application range can be expanded to include social problems, such as political decision or management, or table games.

Also, since the variations regarding the restrictions on any one of the second means to fourteenth means dependent upon the above-described first means can be performed with respect to this means, this means has the same operational effects as those of the above respective means.

(2) Program of Estimating Structure of Materials

(Twenty Sixth Means)

A twenty sixth means of the present invention relates to a computer-executable "program of estimating structure of materials based on radiation diffraction data", which is a computer program for a certain computer to perform a function of estimating a structure of a predetermined specimen material based on a diffraction pattern formed by radiation irradiated to the specimen.

The features of this means is to include: a measured data reading-in step to read a measured data of the diffraction pattern numerically into the computer; and the initial generation setting step, the evaluation step, the selection step, the crossover step, the mutation step and the local optimization step as described in the "program of searching for an optimal set of multiple parameters" according to the twenty third means. And, the fitness is an index which shows how much an expected value of the diffraction pattern calculated from the supposed structural parameters corresponding to the code strings of each individual concerned agrees with a measured value of the diffraction pattern.

In this means, the estimation of the material structure based on the radiation diffraction pattern can be performed by the program having the powerful searching capability corresponding to the above-described twenty third means. As a result, this means has an effect of solving the problem of wide area searching for a plurality of complicated parameters, which has not yet been solved due to enormous calculation time, in a practical calculation time.

(Twenty Seventh Means)

A twenty seventh means of the present invention relates to a computer-executable "program of estimating structure of materials based on radiation diffraction data", which is a computer program for a certain computer to perform a function of estimating structural parameters defining a structure of a predetermined specimen material based on a diffraction pattern formed by radiation irradiated to the specimen.

The features of this means is that each of multiple individuals forming population of every generation contains code strings corresponding to the structural parameters, and fitness of each individual is an index which shows how much an expected value of the diffraction pattern calculated from the structural parameters of the individual concerned agrees with a measured value of the diffraction pattern. The GA has a step of generating population of an initial generation containing the individuals, in which each element of the structural parameters corresponding to the individuals are distributed with a certain diversity, and the GA starts with the population of the initial generation, and repeats alternation of the generations according to a predetermined order of a selection step, a crossover step and a mutation step, in order to optimize the structural parameters in the expectation that some individuals with higher fitness are generated among the population in the generation concerned. The GA is incorporated with a local optimization step which gives local optimization operation to one or more specific individuals to improve fitness thereof. This means is also characterized in that the local optimization step is a calculation step applied to at least one selected from: one or more specific individuals as at least a part of the population in a plurality of specific generations as a part of all generations generated by the GA; and one or more specific individuals as a part of the population in a plurality of specific generations as at least a part of all generations generated by the GA.

In this means, the estimation of the material structure based on the radiation diffraction pattern is performed by using the hybrid GA having the powerful searching capability. As a result, this means has an effect of solving the problem of wide area searching for a plurality of complicated parameters, which has not yet been solved due to enormous calculation time, in a practical calculation time.

Also, since the variations regarding the restrictions on any one of the second means to fourteenth means dependent upon the above-described first means can be performed with respect to this means, this means has the same operational effects as those of the above respective means.

(3) Recording Medium

(Twenty Eighth Means)

A twenty eighth means of the present invention relates to a computer-readable recording medium. This means is characterized in that the medium contains at least one selected from: the "program of searching for an optimal set of multiple parameters" according to any one of the above-described twenty third means to twenty fifth means; and the "program of estimating structure of materials based on radiation diffraction data" according to one of the above-described twenty sixth means and twenty seventh means.

According to this means, preservation and circulation of these programs are facilitated.

2. Apparatus Invention

(Twenty Ninth Means)

A twenty ninth means of the present invention relates to a "computer equipped with hybrid GA". This means is characterized in that the computer is installed with at least one selected from: the "program of searching for an optimal set of multiple parameters" according to any one of the above-described twenty third means to twenty fifth means; and the "program of estimating structure of materials based on radiation diffraction data" according to one of the above-described twenty sixth means and twenty seventh means.

By the computer of this means, the above programs can be executed. As a result, it is possible to precisely search for an optimal set of multiple parameters in the multi-dimensional wide area and to perform the material structure determination which has not yet been achieved.

(Thirtieth Means)

A thirtieth means of the present invention relates to an "analyzing apparatus equipped with hybrid GA", which is characterized in that the apparatus is able to execute at least one selected from: the "program of searching for an optimal set of multiple parameters" according to any one of the above-described twenty third means to twenty fifth means; and the "program of estimating structure of materials based on radiation diffraction data" according to one of the above-described twenty sixth means and twenty seventh means.

By the analyzing apparatus of this means, the above programs can be executed regardless of determination on whether the apparatus belongs to the computer or not.

(Thirty First Means)

A thirty first means of the present invention relates to an "apparatus for estimating structure of materials based on radiation diffraction pattern", which is characterized in that the apparatus comprises: a measurement apparatus which irradiates radiation to a certain specimen material to measure a diffraction pattern generated from the specimen material; and one selected from the computer of the twenty ninth means and the analyzing apparatus of the thirtieth means, which makes an analysis based on a measured data obtained from the diffraction pattern to estimate the structure of the specimen material.

Here, whether the measurement apparatus is installed at the same place as the computer or analyzing apparatus, whether the diffraction data is transferred on-line or off-line between the measurement apparatus and the computer or analyzing apparatus, and whether a person having the right of possessing or using the measurement apparatus and the computer or analyzing apparatus is the same are not essential problems.

According to this means, a series of operational processes from the measurement of the diffraction pattern by irradiating radiation to the specimen material to the determination of the structure of the specimen material based on the diffraction pattern can be performed consistently. Moreover, as described above, this means has an effect of achieving the determination of the material structure, which has not yet been realized within a realistic cost or time.

## BRIEF DESCRIPTION OF THE DRAWINGS

The above and other objects and features of the present invention will become apparent from the following description of specified embodiment, given in conjunction with the accompanying drawings, in which:

FIG. 1 is an assembly view illustrating comparatively an X-ray diffraction pattern generated from a single crystal specimen and an X-ray diffraction pattern generated from a powder specimen, in which FIG. 1 (a) is a schematic diagram illustrating X-ray diffraction generated from a single crystal specimen and a diffraction pattern thereof, and FIG. 1 (b) is a schematic diagram illustrating X-ray diffraction generated from a powder specimen and diffraction circles thereof;

FIG. 2 is an assembly view illustrating a first features of a HGA as a key point of the present invention by comparing the same with prior arts, in which FIG. 2 (a) is a flowchart showing a schematic constitution of a HGA as prior art 1, FIG. 2 (b) is a flowchart showing a schematic constitution of a HGA as prior art 2, and FIG. 2 (c) is a flowchart showing a schematic constitution of a HGA according to an embodiment of the present invention;

FIG. 3 is a conceptual diagram illustrating a second features of a HGA as a key point of the present invention and operation thereof;

FIG. 4 is an assembly view illustrating a material structure of various powder specimens provided for a comparison test of X-ray diffraction, in which FIGS. 4 (a), 4 (b), 4 (c), 4 (d), 4 (e) and 4 (f) are perspective views illustrating three-dimensional molecular structure and crystal structure of $Pd(tmdt)_2$, $Au(tmdt)_2$, Cytidine, Taurine, $1\text{-}FcAqH(C10_4)$ and Succinic Acid Prednisolone, respectively;

FIG. 5 is a graph comparatively illustrating HGA convergence speeds in an embodiment of the present invention and the two prior arts;

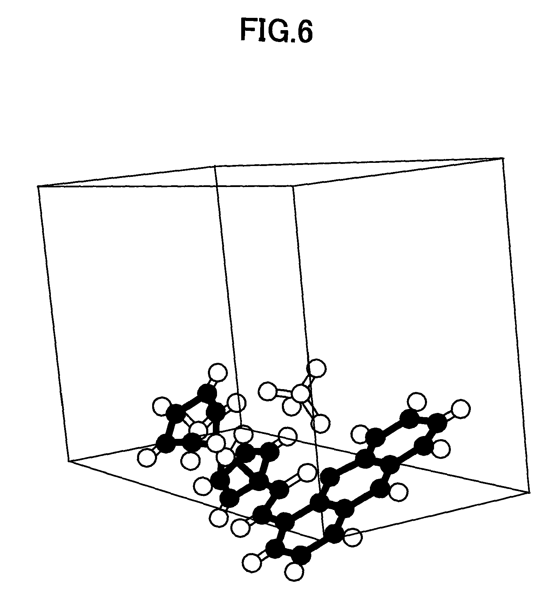

FIG. 6 is a perspective view illustrating a material structure of $1\text{-}FcAqH(ClO_4)$ determined by the present invention;

FIG. 7 is a flowchart showing an order of a method of determining a material structure according to an embodiment of the present invention;

FIG. 8 is a graph of a measured data illustrating intensity distribution of diffraction circles obtained from a powder specimen;

FIG. 9 is a perspective view of schematically illustrating three-dimensional atomic arrangement and crystal structure in molecules;

FIG. 10 is a schematic view illustrating a unit lattice and lattice constants thereof;

FIG. 11 is a flowchart showing a schematic order of a lattice constant determination process according to an embodiment of the present invention;

FIG. 12 is a graph illustrating a peak position in an X-ray intensity distribution data of diffraction circles;

FIG. 13 is a graph illustrating background scattering included in a measured data of intensity distribution;

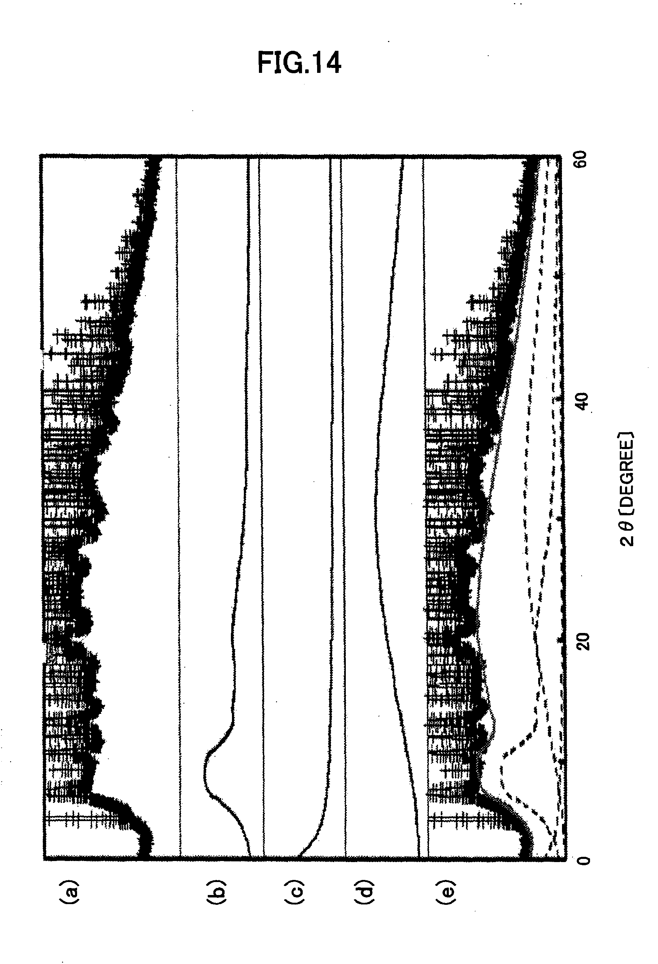

FIG. 14 is an assembly view illustrating operation of a background scattering elimination process according to an embodiment of the present invention, in which FIG. 14 (a) is a graph of a measured data of X-ray intensity distribution from a powder specimen $CsPbCl_3$, FIG. 14 (b) is a graph illustrating a halo pattern generated from a glass capillary, FIG. 14 (c) is a graph illustrating intensity distribution of air scattering, FIG. 14 (d) is a graph illustrating intensity distribution of temperature diffuse scattering from a powder specimen, and FIG. 14 (e) is a graph illustrating a result of fitting each background scattering to a measured data;

FIG. 15 is an assembly view illustrating the kind of structural parameters determined in a basic structure determination process, in which FIG. 15 (a) is a perspective view illustrating positions (x, y, z) of molecules of structural parameters, FIG. 15 (b) is a perspective view illustrating postures ($\theta$, $\varphi$, $\psi$) of molecules of structural parameters, and FIG. 15 (c) is a perspective view illustrating a rotational angle $\tau i$ in a plurality of molecules of structural parameters;

FIG. 16 is a schematic view illustrating a size parameter adjusted in a structure refinement process;

FIG. 17 is an intensity distribution graph illustrating example 1 of a fitting result by a structure refinement process;

FIG. 18 is an intensity distribution graph illustrating example 2 of a fitting result by a structure refinement process;

FIG. 19 is a flowchart illustrating a processing order of a hybrid GA used in an embodiment of the present invention;

FIG. 20 is a schematic view illustrating grouping of lattice constants performed by a HGA in a lattice constant determination process;

FIG. 21 is an assembly view illustrating a problem occurring when grouping of parameters is not performed, in which FIG. 21 (a) is a schematic view illustrating a unit lattice having lattice constants corresponding to code strings of parent individuals, and FIG. 21 (b) is a schematic view illustrating a unit lattice having lattice constants corresponding to code strings of offspring individuals;

FIG. 22 is an assembly view illustrating a triclinic system crossover pattern in a HGA of a lattice constant determination process, in which FIGS. 22 (a), 22 (b) and 22 (c) are schematic views comparatively illustrating parent individuals and offspring individuals of crossover pattern 1, crossover pattern 2 and crossover pattern 3, respectively; and

FIG. 23 is an assembly view illustrating a monoclinic system crossover pattern in a HGA of a lattice constant determination process, in which FIGS. 23 (a), 23 (b) and 23 (c) are schematic views comparatively illustrating parent individuals and offspring individuals of crossover pattern 1, crossover pattern 2 and crossover pattern 3, respectively.

Essential reference signs used in the aforementioned drawings are as follows.

P1: lattice constant determination process (searching for an optimal set of parameters by hybrid GA)
P2: background scattering elimination process
P3: space group narrowing-down process
P4: basic structure determination process (searching for an optimal set of parameters by hybrid GA)
P5: structure refinement process
D: reading-in step (reading an X-ray intensity distribution data of diffraction circles)
S0: pre-processing step (extracting intensity peak positions on an axis of a diffraction angle 2θ)
S1: hybrid GA step

S11: initial generation setting step (generating population of a first generation)
S102: recording step (recording each individual of population of a generation concerned)
S103: crossover step (selecting and crossing over parent individuals to generate newborn individuals)
S104: replication step (choosing and replicating individuals, which will be left as survivals, to preserve individuals in next generation thereof)
S105: selection step (selecting individuals from newborn individuals and replicated individuals to weed out the same)
S106: determination step (stochastically determining whether to bring about mutation)
S107: mutation step (changing forcibly a part of code strings of specific individuals)
S108: determination step (determining specific generations and choosing specific individuals)
S109: local optimization step (local optimization operation for specific individuals)
S110: convergence determination step (termination determination by determination on convergence on solution)
S111: increment step (increment of generation number)

S12: result output step (outputting determined structural parameters)
L: loop of alternation of generations
LC: lattice constants

\* triclinic system lattice constants (a, b, c, α, β, Y)
\* monoclinic system lattice constants (a, b, c, β)

d: distance between lattice planes in crystal (refer to equation 2)
t: origin position disagreement of X-ray detector (one of parameters to be searched for)
R: agreement (difference between peak positions calculated from lattice constants and measured data, refer to equation 3)
Rwp: reliability factor (numerical value defined by equation 1, the lower the reliability factor is, the higher the reliability as fitness is)

## DESCRIPTION OF THE SPECIFIC EMBODIMENTS

Various embodiments of the present invention will now be described in detail with reference to the accompanying drawings.
Because the description made herein is vast and the constitution thereof is complicated, a table of contents (only heads) will be first provided, in order for readers to easily understand the whole contents explained herein.
According to the following table of contents, the research results obtained from the present invention will be first described in the order of explaining an embodiment of the present invention, so as to understand effects of the present invention in the technology field of determining structure of materials. Subsequently, the concrete constitution, by which an embodiment of the present invention is realized to obtain such research results, will be explained.

[Table of Contents]

1. Meaning of Embodiments of the Present Invention

    (1) Leading Research by Huge Equipment
    (2) Simplification to Laboratory Level

2. Embodiments of the Present Invention

    (1) Two Features of Embodiments of the Present Invention
    (2) Comparison between Embodiments 1 and 2 of the Present Invention and Comparative Example
    (3) Means Performed according to Embodiments

3. Overall Constitution of Data Analysis Method (0) Outline of Analysis Order

    (1) Lattice Constant Determination Process
    (2) Background Scattering Elimination Process
    (3) Space Group Narrowing-down Process
    (4) Basic Structure Determination Process
    (5) Structure Refinement Process

4. HGA in Lattice Constant Determination Process

    (1) Summary of HGA
    (2) Details of HGA

5. HGA in Basic Structure Determination Process

    (1) Summary of HGA
    (2) Details of HGA

6. Other Embodiments

1. Meaning of Embodiments of the Present Invention

Hereinafter, the "method of estimating structure of materials based on radiation diffraction data" according to the present invention, embodiments related thereto, and embodiments of the hybrid GA as a core technology thereof will be clearly and sufficiently explained, so that other researchers in this field can understand and carry out the present invention. The description made herein is mainly based upon the good results obtained from an actual measurement test of X-ray diffraction circles and data analysis thereof performed by inventors of the present invention.

(1) Leading Research by Huge Equipment

As described above, inventors have concentrated their efforts on the analysis or determination of structure of various specimen materials by using radiation X-ray having top-level energy intensity or brightness generated from the SPring-8 (proper noun of large-scaled equipment: hereinafter, the annotation will be omitted). Because the X-ray generated from the SPring-8 has considerably high intensity or brightness as described above, a diffraction circle data of top-level precision including a plurality of peaks rising extremely keenly, which cannot be obtained from other equipment, is obtained from even a powder specimen of only several milligrams (mg).

However, even though the measured data of diffraction circles with so high precision is obtained, there was no powerful data analysis method of determining a material structure by effectively carrying out data analysis with respect to the high measurement precision. Thus, an ironic state, that the superior measurement capability of the SPring-8 cannot be perfectly shown because the structure determination based on the data of diffraction circles measured by the SPring-8 cannot be achieved, has lasted until now.

In this regard, inventors perfected the above-described invention, and realized the embodiments according to the present invention, which will be described below, so as to determine the structure of materials based on the measured data of diffraction circles obtained by irradiating a high-energy X-ray to the powder specimen in the SPring-8.

As a result, the "structure estimation" (which could not be called "structure determination" due to low reliability or precision and many errors in structure determination) in the medicine industry was advanced to the "structure determination" with high accuracy and precision. That is, the structure determination of an organic low molecule used in the medicine can be achieved with a very high agreement (e.g., 98 %, reliability factor Rwp is 2 %) with the measured data, and an error at this time is estimated to be only about 0.0001 nm on each side of a unit lattice and also about 0.0001 nm in atomic arrangement.

Every material structure determined for the first time in the world by the present invention has been announced in lectures of seminars or papers by inventors until now. However, the material structure determination technology itself according to the present invention and the hybrid GA as a core thereof have never been concretely disclosed until this patent application.

(2) Simplification to Laboratory Level

Inventors of the present invention have conducted the leading researches using the top-level large-scaled equipment as described above, and also have tried to perform the method of determining the material structure by using prevalent equipment of a laboratory level which are prevalent in universities or enterprises.

Accordingly, from the data analysis of the diffraction circles measured by an X-ray diffraction apparatus prevailed in laboratories of universities or enterprises, the results substantially equivalent to those from the material structure determination performed based on the measured data by the SPring-8 could be obtained. Further, the apparatus used in the data analysis was an upper-grade apparatus, however just a PC on the market.

As the X-ray diffraction apparatus, a fundamental difference between the large-scaled equipment such as the SPring-8 and the prevalent equipment of the laboratory level is that the large-scaled equipment has the better performance of X-ray intensity, energy resolution and X-ray parallelism. Whether or not the measurement can be achieved in a short time and further whether or not the measurement by an extremely small amount of specimen can be achieved are dependent upon the difference of the X-ray intensity. Also, the difference of the energy resolution and the difference of the X-ray parallelism become a difference of a S/N ratio as they are. In addition, the data of the X-ray diffraction circles have a small amount of information due to peak overlap, and thereby a smaller amount of information is given to the prevalent equipment rather than the large-scaled equipment. Therefore, it is more difficult to perform the structure determination based on the diffraction data measured by the prevalent equipment than by the large-scaled equipment.

Further, even when the present invention is conducted under the simplification from the top-level large-scaled equipment to the laboratory-level prevalent equipment, there is no special change in the data analysis method. That is, the basically same hybrid GA, which is a core of the present invention, is used by the same method, and the basically same data analysis program is executed by the same PC.

As described above, the present invention has very wide prevalence features, such that the material structure determination can be achieved by the prevalent equipment which any university or enterprise can possess or use with relatively low costs. As a result, according to the present invention, since the determination of crystal structure or material structure can be achieved to a satisfactory extent without the large-scaled equipment, the effects and the pace on the costs of the researches requiring the structure determination are anticipated to be drastically improved.

2. Embodiments of the Present Invention

(1) Two Features of Embodiments of the Present Invention

The "method of estimating structure of materials based on radiation diffraction data" as the embodiment of the present invention uses the hybrid GA which is a core of the present invention in the lattice constant determination process and the basic structure determination process. The detailed description of the embodiment as the determination method of material structure will be made later, and two features of the hybrid GA (which will be referred to as the "HGA") will be conceptually explained hereinafter.

* First Features: Local Optimization Operation being Scattered

As shown in FIG. 2 (c), the first features of the HGA is that the local optimization operation is performed in a plurality of generations (specific generations) distributed during the repetition of alternation of the generations of the GA, and the number of the individuals (specific individuals) subjected to the local optimization operation is extremely small, for example, one.

The expression that the specific generations are "a plurality of generations distributed" includes a case where the specific generations lie scattered among all generations and a case where the specific generations exist at every alternation of the generations and thus the specific generations are succeeded. Therefore, in order to clarify the difference from FIG. 2 (b) showing the Lamarckian GA, FIG. 2 (c) showing the HGA illustrates that the local optimization is performed scattered. However, it may be illustrated in FIG. 2 (c) that the local optimization is performed at every alternation of the generations.

That is, because the local optimization operation is sometimes performed in the hybrid GA used in the present invention, the number of the individuals subjected to the local optimization operation is extremely small among the population. In particular, the specific individuals appear at a predetermined period (e.g., at every generation, at every 23 generations or at every 10 generations) during alternation of the generations. The number of the specific individuals among the population (including, for example, 1000 individuals, or 500 individuals or less) of the generation concerned is, for example, only one, or at most 23 or less. Of them, the setting primarily used in the embodiments of the present invention is that the specific generations are every generation (i.e., all generations) and the number of the specific individuals of the population of each generation is only one. Therefore, in the embodiments of the present invention, the number of the local optimization operation having a large amount of calculation is limited to be very small, in comparison with the number of the newborn individuals.

The reason for distributing, although scattered, the specific generations in the almost whole range of all generations is not only to decrease a calculation load by reducing the number of the local optimization operation, but also to make directivity applied uniformly to the evolution in the whole range of alternation of the generations.

Also, the reason for limiting the number of the specific individuals of the population concerned to be very small, for example, to one, is not only to decrease a calculation load by reducing the number of the local optimization operation, but also to frequently apply directivity to the evolution by increasing the number of the specific generations as much as possible.

Accordingly, the embodiment constituted such that all new generations become specific generations at every alternation of the generations and the number of the specific individuals in the specific generations is very small (e.g., only one), is probably the best embodiment. This is because the number of the local optimization operation is very small relatively to the number of the newborn individuals, thereby a calculation load being drastically decreased from that of the Lamarckian GA and the evolution being accelerated owing to the continuous proper application of directivity. Moreover, different from the Lamarckian GA, because the number of the newborn individuals is overwhelmingly larger than the number of the individuals which are locally optimized, alternation of the generations is performed without damage of diversity of the individuals constituting the population.

As such, because the number of the local optimization operation in the predetermined generation is extremely smaller than that of prior art 2 shown in FIG. 2 (b), the HGA has no problem that high-speed properties that the genetic algorithm originally has is damaged. Further, since directivity is applied to the evolution in the GA by the local optimization operation which is sometimes performed, the HGA has an effect that the convergence on the wide area optimal solution is remarkably more improved than a general GA in which directivity is not applied to the evolution. That is, there is no necessity of waiting for a considerably long time until the GA (in which only the stochastic searching is performed, like prior art 1 shown in FIG. 2 (a)) converges on approximation to the optimal value.

As a result, even when searching the multi-dimensional parameter space with strong multi-peak features, the amount of calculation until the wide area optimal solution is obtained is remarkably decreased from that of any one of prior art 1 and prior art 2. That is, even when the dimension (i.e., degree of freedom) of the parameter space to be searched is high and the multi-peak features thereof is strong, it is possible to avoid falling into a pit of the local optimization and to very efficiently perform the wide area searching.

Accordingly, the HGA can precisely solve the optimization problem, which has not yet been solved due to excessively many parameters or excessively strong multi-peak features of the parameter space, in a practical calculation time. As a result, the HGA has an effect of low calculation load and high-speed calculation. In addition, since the wide area searching is performed very efficiently, the wide area optimization of a plurality of parameters, which could not be practically realized by any prior art, can be achieved.

* Second Features: Selection of Object Subjected to Local Optimization Operation

However, because all of the newborn individuals cannot be locally optimized due to circumstances of diversity security of the population or calculation load, it should be considered how to select the individual subjected to the local optimization operation which is sometimes performed.

In this regard, the HGA has the second features such that when selecting the individuals (specific individuals) subjected to the local optimization among the population of the specific generation, the individuals with low fitness are selected instead of selecting the individuals with high fitness according to the elite strategy included in the selection process of the GA.

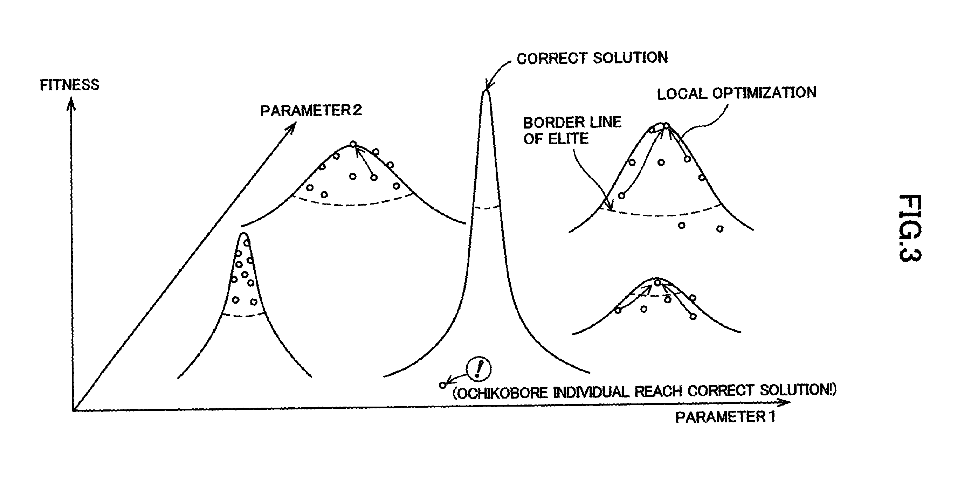

The reason for taking the above selection pattern in the HGA is that, as shown in FIG. 3, the individuals with low fitness among the population concerned have high possibility to include the individuals capable of reaching the wide area optimal solution (which will be called "correct solution") by the local optimization.

In the HGA, when choosing the specific individuals from the inferior group with comparatively low fitness among the population of the generation concerned, a choosing method named the "inverted roulette wheel selection" (more particularly, "inverted roulette wheel selection with value restriction") is adopted.

In such a method, of the individuals belonging to the population of the generation (i.e., specific generation) concerned, the individuals with high fitness (e.g., top 10 %) corresponding to a predetermined ratio are excluded as the elite group. Then, the remaining individuals (in this example, bottom 90 %) are given with an order of precedence according to the fitness, and the fitness is assigned to the individuals within a range of the real number 0 to 1 at an equi-interval, from the individual with worst fitness (corresponding to 0) to the individual with best fitness (corresponding to 1). Thereafter, by generating a uniform random number α, the "inferior group" including the individuals belonging to the range of 0 to α is formed. And, the fitness is again assigned to the individuals belonging to the inferior group within a range of the real number 0 to 1 according to the order of precedence of the fitness. Then, by generating a uniform random number β, the individual corresponding to β is selected from the inferior group. The individual selected thus is defined as the specific individual, and the local optimization is performed for only the specific individual among the population concerned. In a case where the number of the specific individuals is set to be plural, the above process is repeated plural times, or the uniform random number β is generated by as many times as the number of the specific individuals, so that an appointed number of specific individuals are selected from the inferior group.

The effect of the selection of the specific individuals by applying the "inverted roulette wheel selection" to the HGA will be shown in the following table 1, in comparison with the effect of a general roulette wheel selection in which the individuals with high fitness are preferentially selected as the specific individuals.

[Table 1]

| SELECTION METHOD | FITNESS | EFFECT (CALCULATION TIME) |
|---|---|---|
| ROULETTE WHEEL SELECTION | ABOUT 0,75 AS AVERAGE | ABOUT ONE WEEK IN DEGREE OF FREEDOM OF 12~14 (ABOUT 100~200 HRS.) |
| INVERTED ROULETTE WHEEL SELECTION | ABOUT 0.25 AS AVERAGE | ONLY ABOUT ONE HOUR IN DEGREE OF FREEDOM OF 12~14 (STRUCTURE DETERMINATION FROM DIFFRACTION CIRCLES IN DEGREE OF FREEDOM OF 20) |

In the HGA, in a case where the individuals subjected to the local optimization operation are selected by the "inverted roulette wheel selection" in which the average fitness of the specific individuals is set to about 0.25, the wide area searching capability is rapidly enhanced from that when the roulette wheel selection of about 0.25 is adopted. As shown in the above table 1, according to the numerical analysis performed by inventors of the present invention, the time necessary to wide area search the multi-peak parameter space having a degree of freedom of 12 to 14 is shortened to about 1/100 to 1/200.

Therefore, if the inverted roulette wheel selection is adopted to the selection method of the specific individuals, the searching capability of the HGA is more enhanced by two digits or more than a general roulette wheel selection. As a result, the HGA can achieve the structure determination for a material structure model, in which a degree of freedom is more than 20, by analysis of a data of diffraction circles.

Incidentally, inventors call the individuals with low fitness among the population of a certain generation "Ochikobore(dropout)" (which means a poor student or fallen ears of grain) among them. From such a meaning, the selection of the specific individuals is usually called "picking up Ochikobore(dropout)" (which means "gleaning", which is a word having similar pronunciation and meaning in Japanese).

In plural embodiments forming the basis of table 1, in order to determine the material structure in which each molecule includes about 100 atoms and a degree of freedom to be determined is about 12 to 14, the program of the present invention is executed with 1000 populations to analyze the data of diffraction circles. At this time, the specific generations occur at every generation, and the number of the specific individual in each generation is one. The powder specimen material subjected to the material structure determination in each embodiment in table 1 is the same as the material whose structure is determined in embodiment 1 or embodiment 2, which will be described later.

In practice, a phenomenon that the calculation time was extraordinarily shortened occurred in these embodiments. Inventors made an investigation into the reasons therefor, and discovered a program error corresponding to the "inverted roulette wheel selection". That is, the specific individuals were selected by the unintended "inverted roulette wheel selection" due to a bug of the program in the embodiment in which the convergence was extraordinarily fast. However, as a result of such a chance luck, inventors discovered that the calculation time necessary for wide area searching for an optimal set of parameters was drastically shortened when the individuals with low fitness were preferentially selected and locally optimized.

However, the data shown in table 1 were obtained at the time of such discovery, and the program of the present invention using HGA had room for tuning of the set parameters such as the number of individuals of the population. Therefore, if the set parameters of the program are appropriately tuned, there is possibility of more shortening the calculation time described in table 1.

* Conclusion

Concluding briefly, so as to efficiently wide area search even the multi-peak parameter space by the GA and the local optimization making up for each other, the HGA has two features, i.e., the first features and the second features. The first features is to decrease the frequency of the local optimization operation by considering how to combine the GA and the local optimization. The second features is to increase the probability that the individuals can reach the correct solution (i.e., wide area optimal solution) by the local optimization by considering how to select the individuals to be locally optimized from the population.

This is because the purpose of incorporating the local optimization in the GA is to make up for the capability of the GA that the wide area searching is performed at a high speed (i.e., with a small amount of calculation) by local precision of the local optimization.

The GA has an advantage of performing the wide area searching at a high speed, and a shortcoming that a mistake easily occurs and the finish is weak. On the other hand, the local optimization has an advantage that the individual starting from approximation to the wide area optimal value can precisely reach the optimal value without mistake, and a shortcoming that it is not suitable to the wide area searching. In this regard, the HGA is constituted to have the above-described first features and second features, in order to combine the GA and the local optimization very fittingly, thereby maximizing the respective advantages.

(2) Comparison between Embodiments 1 and 2 of the Present Invention and Comparative Example

The effect of the embodiments of the present invention will be clear at a glance with reference to the following table 2.

[Table 2]

| | CASE→ | | COMPARATIVE EXAMPLE | | EMBODIMENT1 | | EMBODIMENT2 | |
|---|---|---|---|---|---|---|---|---|
| | TEST APPARATUS→ | | SPring8 | | | | LABORATORY LEVEL | |
| MARK | COMPOUND NAME OF SPECIMEN | DEGREE OF FREEDOM | ANALYSIS TIME | AGREEMENT | ANALYSIS TIME | AGREEMENT | ANALYSIS TIME | AGREEMENT |
| (a) | Pd(tmdt)$_2$ | 6 | 67.6 SEC. | 8.53% | 1.1 SEC. | 8.00% | 0.6 SEC. | 10.50% |
| (b) | Au(tmdt)$_2$ | 6 | 36.7 SEC. | 5.30% | 0.2 SEC. | 5.11% | 0.2 SEC. | 3.40% |
| (c) | CYTIDINE | 6 | 33.3 SEC. | 2.10% | 0.8 SEC. | 2.10% | 0.8 SEC. | 8.60% |
| (d) | TAURINE | 8 | INCAPABLE OF STRUCTURE DETERMINATION | | (NOT PERFORMED) | | 0.4 SEC. | 5% |
| (e) | 1-FcAqH(C$\ell_4$O) | 12 | INCAPABLE OF STRUCTURE DETERMINATION | | 7 SEC. | 9.00% | 29 SEC. | 9% |
| (f) | SUCCINIC ACID PREDNISOLONE | 26 | INCAPABLE OF STRUCTURE DETERMINATION | | ABOUT 8 HRS. | 3.00% | (NOT PERFORMED) | |

Six kinds of materials (a to f), whose structures were determined by the "method of estimating structure of materials based on radiation diffraction data", are shown in the above table, together with a degree of freedom of the three-dimensional molecule models thereof. The above table comparatively shows an analysis time necessary for the structure determination of the materials and agreement of the results between the two embodiments (embodiment 1 and embodiment 2) and a comparative example.

(Summary of Embodiments)

The embodiment 1 is an embodiment of the present invention in which the structures of the powder specimen materials are determined by the method according to the present invention, based on the data of diffraction circles having the top-level precision measured by the aforementioned SPring-8.

The embodiment 2 uses an X-ray diffraction measurement apparatus installed in a laboratory of a university where inventors conduct researches, instead of the SPring-8 of embodiment 1, as the apparatus for measuring the data of X-ray diffraction circles on the same six kinds of powder specimens as those in embodiment 1. This measurement apparatus is manufactured by Rigaku Corporation (name of organization), based on the specifications that inventors submitted. The acquisition cost of this measurement apparatus is about fifty million yen (about four hundred thousand US dollars), which is only a thousandth of installation cost of the SPring-8. The specifications of this apparatus are substantially as follows.

* Wavelength of X-ray: 0.7 $[\text{Å}]$ (substantially equivalent to that of SPring-8)
* Energy Density of X-ray: although not accurate, probably about $10^{7\sim8}$ [photon number/sec mm$^2$ (mrad)$^2$ 0.1 % bandwidth] (substantially a thousandth of that of SPring-8)
* Resolution of Sensor: 50 [$\mu$m] x 50 [$\mu$m] (substantially equivalent to that of SPring-8)

The comparative example is constituted such that the method of prior art 1 is adopted for analysis of the data measured by the same SPring-8 as in embodiment 1. The reason for not adopting the method of prior art 2 to the comparative example is that the calculation time becomes too long in prior art 2. For example, if the method of prior art 2 is adopted to the specimen (e), it takes several days or more in calculation.

(Specimen Materials)

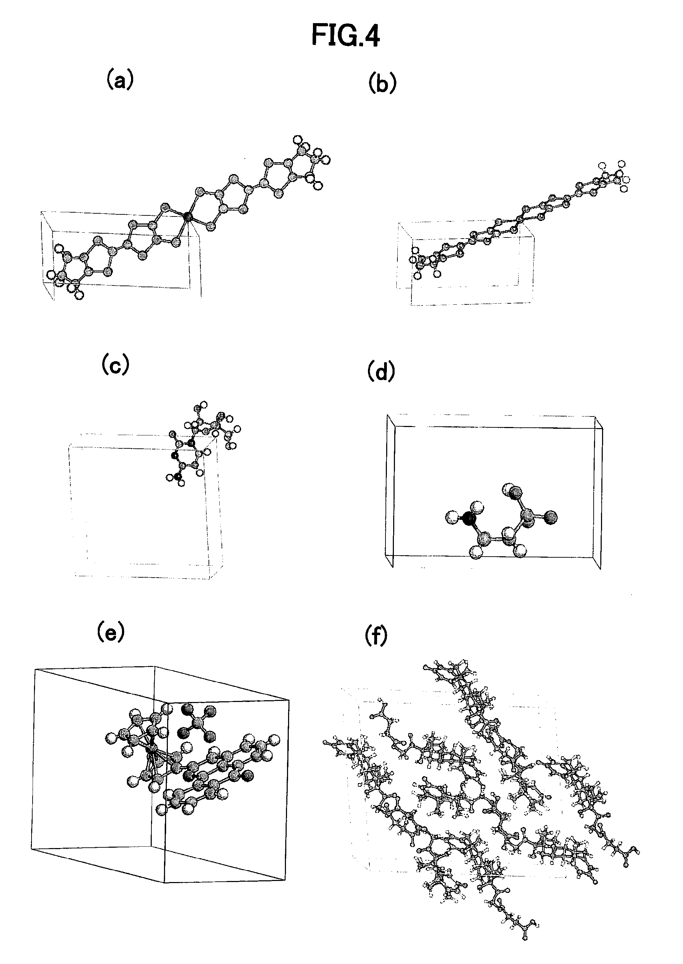

As described above, the structure determination of the six kinds of materials are attempted in embodiment 1, embodiment 2 and the comparative example. The material structure determined in embodiment 1 is shown in FIGS. 4 (a) to 4 (f). Thus, more particularly, embodiment 1 is a series of embodiments, from embodiment 1 (a) to embodiment 1 (f). The same goes for embodiment 2 and the comparative example.

FIG. 4 (a) is a perspective view illustrating three-dimensional atomic arrangement in molecules and a crystal structure of the molecules of Pd(tmdt)$_2$. Similarly, FIGS. 4 (b), 4 (c), 4 (d), 4 (e) and 4 (f) are perspective views illustrating a material structure of Au(tmdt)$_2$, Cytidine, Taurine, 1-FcAqH(ClO$_4$) and Succinic Acid Prednisolone, respectively.

For reference, the six kinds of specimen materials will be described below.

(a) Pd(tmdt)$_2$: Pd-trimethylenetetrathiafulvalenedithiolate
(b) Au(tmdt)$_2$: Au-trimethylenetetrathiafulvalenedithiolate
(c) Cytidine: a kind of Pyrimidine Nucleotide
(d) Taurine: Aminoethyl Sulfonic Acid
(e) 1-FcAq(ClO$_4$): 1-ferrocenylethynyl-anthraquinone, ClO$_4$
(f) Succinic Acid Prednisolone: a kind of Synthetic Adrenocortical Hormone

(Comparative Study)

Because the degree of freedom to be determined is small in the specimen materials (a) to (c) having the degree of freedom of 6, the comparative example can achieve the structure determination in a calculation time of about several tens seconds necessary for data analysis, and can obtain agreement substantially equivalent to that of embodiment 1 in which the same data was analyzed.

However, according to embodiment 1 of the present invention in which the same data was analyzed by the method of the present invention, the calculation time was shortened to a several tenth to a hundred and several tenth, and the agreement (i.e., fitness) of two of the three kinds of specimen materials was improved. Here, because the agreement refers to a degree of mismatch between the measured data and the assumed data based on a square error, the evaluation is high (i.e., the fitness is high) as the agreement is close to zero.

Therefore, from aspects of the calculation time and the agreement, it is estimated that the structure determination capability of embodiment 1 of the present invention, searching for a wide area optimal value based on the high-precisely measured data from the SPring-8, is improved by two digits from that of the comparative example according to the prior art.

In embodiment 2, because the measurement is performed by a laboratory-level X-ray diffraction measurement apparatus (not by the SPring-8), the precision of the measured data is low. Nevertheless, embodiment 2 can achieve the structure determination in the calculation time substantially equivalent to the calculation time in embodiment 1, and also can obtain the optimal solution substantially equivalent to the optimal solution of embodiment 1. Accordingly, it is verified that the present invention can realize the material structure determination based on an effect that even the measured data from a laboratory-level measurement apparatus can be comparable to the measured data having top-level precision. The comparison regarding the agreement is not so meaningful, because embodiment 1 and embodiment 2 perform the material structure determination based on the measured data different from each other.

Although based on the measured data from the SPring-8, the comparative example cannot achieve the structure determination of the specimen materials (d) to (f) whose degrees of freedom to be determined are 8, 12 and 26, respectively. Embodiment 1 according to the present invention can determine the structure of even the specimen material (f) having a degree of freedom of 26.

Embodiment 2 (d) according to the present invention can achieve the material structure determination of taurine in only 0.4 seconds since the analysis of data was measured in a laboratory of a university.

In embodiment 1 (e), it takes about 7 seconds to determine the structure of the specimen material (e) having a degree of freedom of 12. In embodiment 2 (e), it takes about 29 seconds to determine the structure of the specimen material (e) having a degree of freedom of 12. Because the precision of the measured data forming the basis of the calculation time necessary for the material structure determination is different, the calculation time in embodiment 2 (e) is several times longer than that in embodiment 1 (e). However, the absolute value of the calculation time in embodiment 2 (e) is small enough to be ignored.

The reason for not performing embodiment 1 (d) in this situation is that a machine time of the SPring-8 could not be secured to get the measured data of the powder specimen of taurine. However, the degree of freedom of taurine is only 8, and in embodiment 2 (d) as described above, the structure determination is achieved by even the measured data from the laboratory-level apparatus. Therefore, it is guessed that if the measured data of taurine can be obtained by sparing the machine time of the SPring-8, embodiment 1 (d) can get substantially the same analysis result as that of embodiment 2 (d).

Also, the reason for not performing embodiment 2 (f) is that experiment data to be supplied to the data analysis by the present invention could not be prepared. It takes a time from a week to 10 days to perform the measurement using the laboratory-level X-ray diffraction apparatus. However, the machine time of the X-ray diffraction apparatus could not be allotted to this embodiment before this patent application.

(Difference from Table 1)

In embodiment 1 (e), the optimal solution is obtained in 7 seconds under the degree of freedom of 12. The inverted roulette wheel selection described in the above table 1 has the analysis time shorter by two or three digits than the embodiment which requires about an hour under the degree of freedom of 12 to 14. There are two reasons for this, as follows.

First, while the number of atoms in one molecule of the material to be analyzed in the embodiment described in table 1 is 100, the number in embodiment 1 (e) is decreased to a half or less and thus the material structure is simplified. That is, if the material structure assumed corresponding to each individual is simple, a calculation load required to calculate an X-ray diffraction image formed by the powder specimen becomes low.

Second, while the number of individuals of the population of the HGA in executing the program of the present invention in the embodiment described in table 1 is set to 1000, the number of individuals of the population in embodiment 1 (e) is optimized and thus restricted to only 10 to 50. That is, embodiment 1 (e) has features of the highest speed, by which some setting parameters, such as the number of individuals in the population, in executing the program according to the present invention are appropriately set.

The comparative example cannot determine the structure of the specimen material (f) having a degree of freedom of 26 at all. Only embodiment 1 of the present invention can determine the structure of the specimen material (f) in the analysis time of about 8 hours. Since such analysis time is short to such an extent that the computer is driven just in a single night, the structure determination of the specimen material (f) by embodiment 1 of the present invention can be sufficiently put to practical use.

As described above, although based on the laboratory-level measured data (not by the SPring-8), embodiment 2 of the present invention can determine the structure of even the specimen material (e) having a degree of freedom of 12 in a short time. Accordingly, the effectiveness of the present invention can be verified.

As described above, according to the embodiments of the present invention, when the structure determination of the specimen materials, whose degree of freedom to be determined is up to 6, is performed based on the data of diffraction circles of high precision from the SPring-8, the data analysis can be completed in a time considerably shorter than that of prior art. The structure determination of the specimen materials, whose degree of freedom is 8 or more (e.g., specimen material (d)), cannot be achieved by prior art, but can be achieved by the embodiments of the present invention. Further, also the structure determination of the specimen materials, whose degree of freedom is even 26 (e.g., specimen material (f)), can be achieved by analyzing the measured data from the SPring-8 in several hours.

The structure of succinic acid prednisolone as the specimen material (f) was determined for the first time by embodiment 1 of the present invention.

The research group, to which inventors of the present invention belong, has already reported the material structure determined by the embodiments of the present invention to several learned societies. For reference, the principal contents in reports to the learned societies and papers will be described below.

[Reports to Learned Societies]

* "MEM Electron Density Distribution of Ni(tmdt)2 and Au(tmdt)2 of Neutral Single-component Molecular Metal", Yuichi Fujishiro1, Eiji Nishibori1, Masaki Takata1, Makoto Sakata1, Wakako Suzuki2, Emiko Fujiwara2, Akiko Kobayashi2, Hideki Fujiwara3, Hayao Kobayashi3,4 (Dept. of Applied Physics, Nagoya Univ.1, Dept. of Chemistry, School of Science, The Univ. of Tokyo2, Institute for Molecular Science3, CREST4), The Crystallographic Society of Japan Annual Meeting 2003, Dec. 1 - 2, 2003, Kumamoto City Industrial and Culture Center
* "Crystal Structure of Large Ferrocene-Anthraquinone Complex Added with Benzene", Masanori Yoshida, Shinobu Aoyagi, Eiji Nishibori, Makoto Sakata, Mio Kondo, Masaki Murata and Hiroshi Nishihara (Dept. of Applied Physics, Nagoya Univ., Dept. of Chemistry, School of Science, The Univ. of Tokyo), The Crystallographic Society of Japan, Dec. 6 - 7, 2005, Eegret Himeji

[Papers]

* "The Development of a Method for an Accurate Structural Analysis by Synchrotron X-ray Powder Diffraction", Nishibori Eiji, Journal of the Crystallographic Society of Japan, Volume 48 (3), 2006. p 216 - 223
* "Recent progress in development of single-component molecular metals", Kobayashi A., Fujiwara E., Suzuki W., Sasa M., Fujishiro Y., Eiji Nishibori, Masaki Takata, Makoto Sakata, Okano Y., Fujiwara H., Kobayashi H., Journal De Physique IV 114 (2004) 419 - 424
* "Structures of a single-component palladium complex with extended TTF-type dithiolate ligands, bis-(tetrathiafulvalenedithiolato) palladium determined by powder X-ray diffraction", Suzuki W., Fujiwara E., Kobayashi A., Fujishiro Y., Eiji Nishibori, Masaki Takata, Makoto Sakata, Okano Y., Kobayashi H., Chemistry Letters 32 (2003) 1106 - 1107

(Comparison with Prior Arts 1 and 2)

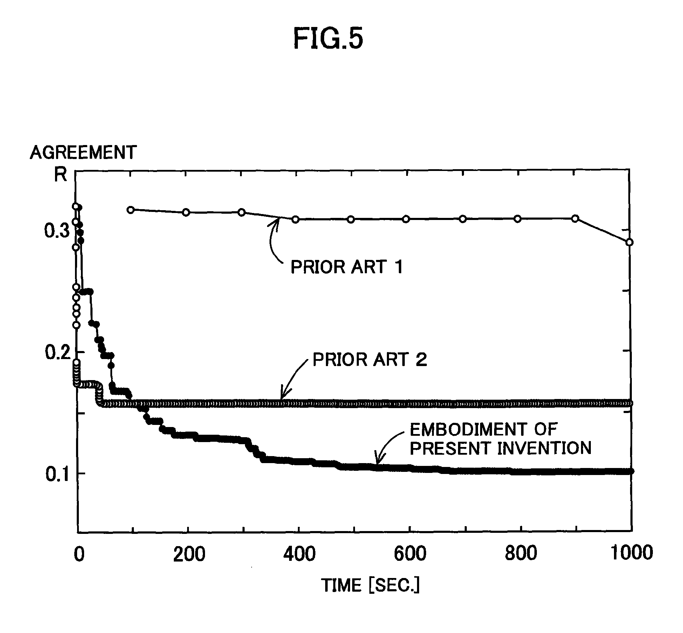

The graph of FIG. 5 comparatively shows change of agreement R as time passes in the embodiment of the present invention and prior arts 1 and 2. More particularly, FIG. 5 is a graph which comparatively shows the convergence of the agreement R of the best individual with highest fitness among the population of each generation in determining the material structure based on the diffraction circle data, in the above-described embodiment 2 (e) of the present invention and prior arts 1 and 2. The diffraction circle data commonly supplied to the analysis in the embodiment of the present invention and prior arts 1 and 2 are data measured by applying the powder specimen of 1-FcAqH(Cl$_4$O) to a laboratory-level X-ray diffraction apparatus, and the data was used in the above-described embodiment 2.

As apparent from the same drawing, because directivity of the evolution is not applied to the GA in prior art 1, the agreement R of the best individual rarely converges. On the other hand, because all of the newborn individuals are locally optimized in prior art 2, the agreement R of the best individual is rapidly improved at an initial step of the calculation. However, at that time, also the diversity of the individuals is rapidly lost, and the convergence of the agreement R makes slow progress after only several tens seconds elapse.

The embodiment (particularly, embodiment 2 (e)) of the present invention is characterized in that directivity of the evolution is appropriately applied and also the diversity of the individuals of the population is not lost. Therefore, the agreement R of the best individual in this embodiment surpasses that in prior art 2 at the moment of only about 100 seconds, and keeps converging thereafter. When about 1000 seconds (ten and several minutes) elapse, the agreement R almost perfectly converges, and the agreement at that step is much more improved than that in prior art 1 or 2.

(3) Means Performed according to Embodiments

Means performed according to embodiments 1 and 2 of the present invention will be described hereinafter, depending on the above description of the means.

[Method Invention]

* Method of Optimizing Multiple Parameters

Both embodiments 1 and 2 are preferred embodiments of the "method of optimizing multiple parameters by hybrid GA" according to the present invention. Of embodiments 1 (a) to (f) and embodiments 2 (a) to (f), most of ten cases except for two non-performed cases correspond to any one of the first means to the fifteenth means, which relate to the method of optimizing a plurality of parameters according to the present invention, except for the second means and the fourth to sixth means.

The reason that these most cases do not correspond to the second means, is that the HGA in these cases are set such that only one individual is locally optimized in each generation at every alternation of the generations. That is, it is difficult to define the constitution that all generations except for the initial generation are specific generations as the constitution that the specific generations are a part of all generations like the second means.

The optimization method of the two embodiments has the purpose that at least a part of code strings constituting each individual are a plurality of parameters corresponding to predetermined physical quantities and an appropriate set of parameters are searched for. This method uses the genetic algorithm (GA) which repeats alternation of the generations by appropriately crossing over the mutation process while the evaluation process, the crossover process and the selection process are repeated.

This method has several features.

The first features is that one individual among the population of each generation in all generations except for the initial generation is locally optimized.

In the two embodiments, in principle, the specific individuals occur at every alternation of the generations (i.e., in respective successive generations), and the number of specific individual among the population concerned is only one. Therefore, all cases of the two embodiments correspond to the third means. However, there is a little difference in distribution of the specific generations between the system of embodiment 1 and the system of embodiment 2. In the respective cases of embodiment 1, the specific generations are succeeded from the first. In the respective cases of embodiment 2, the specific generations do not occur until the tenth generation, and then occur successively from the eleventh generation. Therefore, the respective cases of embodiment 2 correspond to the second means and the fifth means.

Such a first features relates to a frequency of occurrence of the specific generations and the number of the specific individuals in the population of the generation concerned. And, the average number of performing the local optimization operation at each generation is approximately decided by multiplication of the frequency of occurrence of the specific generations and the number of the specific individuals. If the multiplication of the frequency of occurrence of the specific generations and the number of the specific individuals can be properly reduced while appropriately keeping the balance of both factors, the number of performing the local optimization operation having a large calculation load is decreased, so that the diversity can be maintained and proper directivity can be applied to the evolution while alternation of the generations is repeated at a high speed.

Next, the second features of this method is that when selecting the specific individuals subjected to the local optimization operation in the optimization process, the individuals with comparatively low fitness have possibility to be selected as the specific individuals.

In any case of the two embodiments, the specific individuals are selected from an inferior group, which includes the individuals with low fitness belonging to the population of the specific generation at a predetermined rate (the rate is set at random), by a random selection. If such a method is adopted to selection of the specific individuals, the specific individuals are practically selected by a roulette wheel selection having a tendency of weak priority, in which the individuals with low fitness are selected with higher possibility than the individuals with high fitness. As described above, inventors call such a specific individual selection method an "inverted roulette wheel selection". Therefore, all cases of the two embodiments correspond to any one of the seventh means to the eleventh means.

The third features of this method is that an inverted roulette wheel strategy, in which the individuals with comparatively low fitness of the population of the generation concerned have high possibility to be selected, is adopted to the selection process of the HGA.

As a result, rather the individuals with comparatively low fitness have high possibility to survive in the next generation thereof. However, in order to avoid such occurrence that the individual especially reaching the wide area optimal value cannot survive, a top preservation strategy is also used with the selection strategy in alternation of the generations in order to make a top individual with highest fitness of the population of the generation concerned survive in the next generation thereof without fail. Therefore, all cases of the two embodiments correspond to any one of the twelfth means to the fourteenth means.

\* Data Analysis Method

The two embodiments are embodiments of the "method of data analysis by pattern matching" according to the present invention, and correspond to the sixteenth means among the above-described means.

The two embodiments have the following features in the above-described "method of optimizing multiple parameters by hybrid GA". The fitness of each individual is an index which shows how much a pattern of assumed data, which is provided by an arithmetic operation based on an assumption of the physical quantities corresponding to a plurality of parameters encoded in the individual code concerned, agrees with a pattern of measured data. The measured data is analyzed by performing pattern matching between the assumed data of the individual concerned and the measured data, for the purpose of estimating the physical quantities by generating the individuals with higher fitness.

\* Structure Determination Method

The two embodiments are embodiments of the "method of estimating structure of materials based on radiation diffraction data" according to the present invention, and correspond to the seventeenth to twentieth means, the twenty first means and the twenty second means among the above-described means.

The two embodiments adopt the above-described "method of optimizing multiple parameters by hybrid GA" to a method of estimating the structure of predetermined specimen materials based on a diffraction pattern formed by radiation irradiated to the specimen materials. The aforementioned physical quantities are mainly structural parameters for determining the structure of the specimen material. The fitness of each individual stands for an index showing how much a diffraction pattern to be generated if the specimen material has the structural parameters decoded from the individual concerned agrees with the measured diffraction pattern.

The structural parameters to be determined in the two embodiments are lattice constants which define the crystal structure of the specimen material, molecular structural parameters which define the three-dimensional atomic arrangement in the molecule of the specimen material, and crystallographic structural parameters which define the three-dimensional atomic arrangement in a crystal or crystals of the specimen material. The diffraction pattern is X-ray diffraction circles, whose diffraction intensity is magnified and distributed in a concentric circle shape. The fitness is an evaluation function which shows how much a measured data of intensity distribution in a radius direction of the diffraction circles agrees with an assumed data generated based on the structural parameters assumed and decoded from the individual concerned.

Such a method of estimating the material structure will be described below, in conformity to the above-described twenty first means.

This method is a method of estimating the structural parameters by data matching based on diffraction data of intensity distribution of the diffraction circles of the X-ray irradiated to the specimen material, in order to determine the structure of the powder specimen material including a plurality of fine crystals. The algorithm used at this time is based on a genetic algorithm (GA) that performs a genesis process in which multiple individuals including the structural parameters encoded are generated with a certain diversity for the population of the initial generation, and a digenesis process which repeats crossover and replication of the individuals, selection to select the individuals by evaluating the fitness indicating the data matching, and mutation occurring stochastically. The GA is characterized in that the local optimization operation is performed for some individuals of the population concerned in a plurality of generations during the digenesis process, and the individuals with comparatively low fitness among the population concerned have possibility to be subjected to the local optimization operation.

Also, such a method of estimating the material structure can be described by each process as follows, in conformity to the above-described twenty second means.

The "method of estimating structure of materials based on radiation diffraction data" of the two embodiments has a purpose of, based on intensity distribution data of diffraction circles obtained by irradiating an X-ray as radiation to a specimen material, determining the material structure suitable to the intensity distribution data. In order to achieve such a purpose, a background scattering elimination process, a basic structure determination process, a space group narrowing-down process, a basic structure determination process and a structure refinement process are performed in sequence.

The lattice constant determination process is a process to determine a set of lattice constants of the crystals included in the specimen material, and the background scattering elimination process is a process to eliminate or decrease an influence of background scattering from the intensity distribution data. The space group narrowing-down process is a process to narrow down candidates of space groups which the crystals belong to, and the basic structure determination process is a process to determine a basic structure of the crystals in an initial stage, in order to identify the space group. Finally, the structure refinement process is a process to refine the basic structure, in order to more precisely determine the structure of the material constituting the crystals.

In the lattice constant determination process and the basic structure determination process, the material structure determination using the hybrid GA, in which the local optimization operation is incorporated in the genetic algorithm (GA), is performed. In the hybrid GA, the local optimization operation takes place on the specific individuals as a part of each population in the multiple specific generations during alternation of the generations, and the specific individuals can be chosen also from an inferior group which includes multiple individuals with relatively low fitness, indicating agreement with measured data, among the population in the generation concerned.

[Software Invention]

* Program of Searching for an Optimal Set of Multiple Parameters

The two embodiments use the "program of searching for an optimal set of multiple parameters", which is the embodiment of the above-described twenty third to twenty fifth means according to the present invention. That is, in the two embodiments, this program is executed to analyze the data of X-ray diffraction circles, and the material structure is determined by an optimal set of multiple parameters calculated by the wide area searching function of the program.

* Program of Estimating Structure of Materials

Similarly, the two embodiments also use the "program of estimating structure of materials", which corresponds to the embodiment of the above-described twenty sixth means and twenty seventh means.

* Recording Medium

If it is supposed that at least one of the above-described "program of searching for an optimal set of multiple parameters" and "program of estimating structure of materials based on radiation diffraction data" used in the two embodiments is recorded in a computer-readable recording medium, the recording medium corresponds to the embodiment of the twenty eighth means according to the present invention. Inventors primarily use CD-ROMs or USB memories, which are widely on the market, as the recording medium.

[Apparatus Invention]

* Computer Equipped with HGA

When analyzing the data in the two embodiments, as described above, the above programs are executed in an upper-grade apparatus of a common PC or a workstation. The PC has a calculation performance of about 3 [GFLOPS], and more particularly, is an apparatus of model Silent-SCC (product name) manufactured by HPC Systems Inc. (name of organization, which is founded by mergence between former HOT Inc. and another company). The constitution of such a PC is called a PC cluster (20 CPU and 8 CPU). Although there is an opinion that it is not appropriate to call such a PC cluster simply a PC or a workstation, such argument is not relevant to the essence of the present invention, and thus it should be understood that the PC cluster is simply a powerful common PC.

The PC is installed with the above-described "program of searching for an optimal set of multiple parameters" or "program of estimating structure of materials based on radiation diffraction data". Therefore, such a PC corresponds to the embodiment of the "computer equipped with hybrid GA" of the twenty ninth means according to the present invention.

* Analyzing Apparatus Equipped with HGA

If the PC is considered as an analyzing apparatus, the PC is the analyzing apparatus which can execute the above-described "program of searching for an optimal set of multiple parameters" or "program of estimating structure of materials based on radiation diffraction data". Therefore, the PC also corresponds to the embodiment of the "analyzing apparatus equipped with hybrid GA" of the thirtieth means according to the present invention.

* Apparatus for Estimating Structure of Materials

The equipment used to obtain the result of the material structure determination in the two embodiments has a measurement apparatus which irradiates radiation to a certain specimen material to measure a diffraction pattern generated from the specimen material, and an analyzing apparatus which makes analysis based on a measured data obtained from the diffraction pattern to estimate the structure of the specimen material. As the measurement apparatus, the SPring-8 is used in embodiment 1, and the aforementioned laboratory-level X-ray diffraction apparatus is used in embodiment 2. As the analyzing apparatus, the aforementioned PC is commonly used in the two embodiments.

Therefore, the "apparatus for estimating structure of materials based on radiation diffraction pattern" used in any one of the two embodiments, also corresponds to the embodiment of the thirty first means according to the present invention.

3. Order of Material Structure Determination

(0) Outline

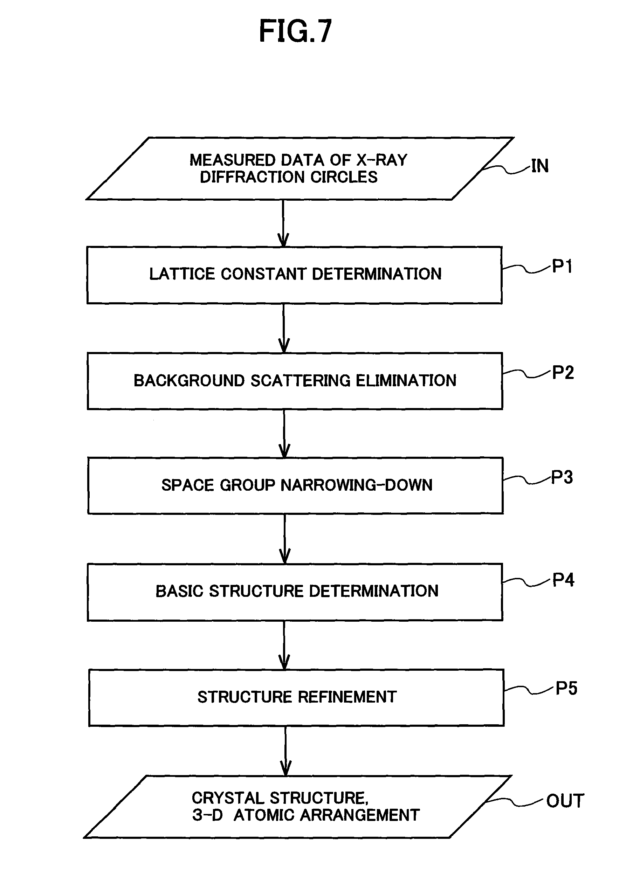

The "method of estimating structure of materials based on radiation diffraction data" as the embodiment according to the present invention is a method of estimating (i.e., determining) the structure of a powder specimen material with high accuracy and precision according to an analyzing order (processes P1 to P5) shown in FIG. 7. This embodiment includes a lattice constant determination process P1, a background scattering elimination process P2, a space group narrowing-down process P3, a basic structure determination process P4 and a structure refinement process P5.

First, the lattice constant determination process P1 refers to a process to determine a set of lattice constants of a plurality of fine crystals included in the powder specimen. In such a process, if the crystal is identified to a triclinic system crystal, the lattice constants defining a unit lattice of the crystal concerned, for example, the lattice constants (a, b, c, $\alpha$, $\beta$, $\gamma$) are determined.

Second, the background scattering elimination process P2 refers to a process to eliminate or decrease an influence of background scattering from the intensity distribution data of X-ray diffraction as an input data IN of this embodiment.

Third, the space group narrowing-down process P3 refers to a process to narrow down the space groups having possibility to contain fine crystals included in the powder specimen to a certain small number of candidates. In such a process, based on the positions of occurrence of peaks or reflection of the diffraction intensity as the input data IN, the space groups having low possibility among 230 kinds of space groups that the crystals can form are excluded, and the space groups having high possibility are narrowed down to several kinds.

Fourth, the basic structure determination process P4 refers to a process to determine a basic structure of the crystals in an initial stage, in order to identify the space group. In such a process, the space group, which seems to be most certain among the candidates of the space groups narrowed-down in the aforementioned space group narrowing-down process, is determined, and the positions and postures of the molecules and the three-dimensional atomic arrangement in the unit lattice are determined with a little rough precision.

Fifth, the structure refinement process P5 refers to a process to refine the basic structure, in order to more precisely determine the structure of the material constituting the crystals. Also in such a structure refinement process, the electron density distribution in the molecules can be estimated or determined.

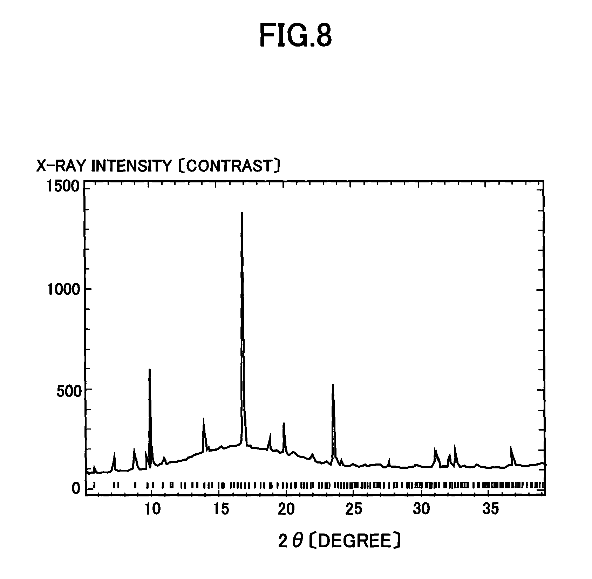

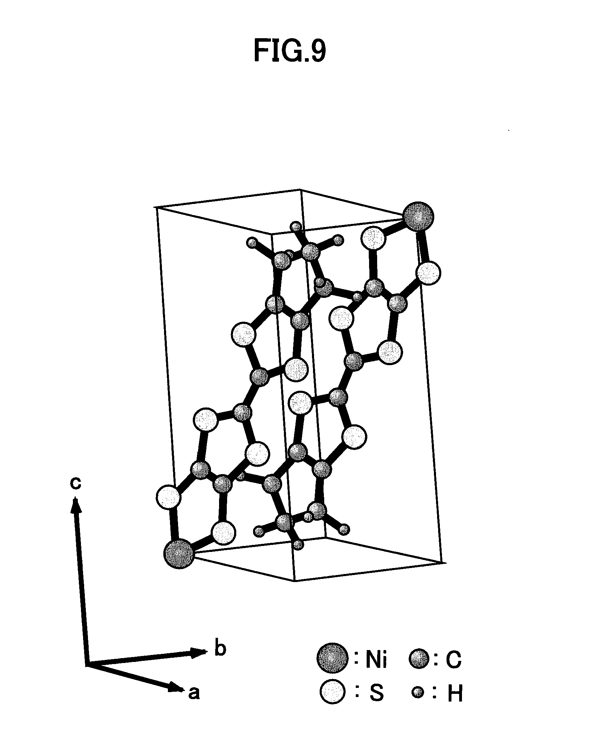

In this embodiment, the powder specimen is sealed in a glass capillary, and the intensity distribution data of diffraction circles measured by irradiating the high-energy radiation X-ray of the SPring-8 (proper noun) to the specimen material is set to an input data IN. Because the input data IN, as shown in FIG. 1 (b), is a measured data of intensity distribution of diffraction circles formed by the X-ray diffracted from the powder specimen, the input data IN, as shown in FIG. 8, is an intensity distribution data of the diffraction X-ray spreading out unidimensionally along a diffraction angle 2θ. Also in this embodiment, the material structure suitable to the input data IN is determined through the processes P1 to P5 in sequence, and is outputted as an output result OUT. The output result OUT, as shown in FIG. 9, includes lattice constants of a plurality of fine crystals included in the powder specimen, and three-dimensional atomic arrangement which the molecule of the material constituting the fine crystals has also in the crystal concerned.

According to this embodiment, the structure determination of the specimen material using the hybrid GA, in which the local optimization operation is incorporated in the genetic algorithm (GA), is performed in both the lattice constant determination process P1 and the basic structure determination process P4.

In such a hybrid GA, the local optimization operation takes place on the specific individuals as a part of each population in the multiple specific generations during alternation of the generations of the GA. And, the specific individuals can be chosen also from an inferior group which includes multiple individuals with relatively low fitness, indicating agreement with measured data, among the population in the generation concerned.

As described above, in the "method of estimating structure of materials based on radiation diffraction data" of this embodiment, the structure determination of the specimen material using the hybrid GA, in which the local optimization operation is incorporated in the GA, is performed in both the lattice constant determination process P1 and the basic structure determination process P4. Both the processes P1 and P5 themselves are an embodiment of the "method of estimating structure of materials based on radiation diffraction data", which has a condition that the method is processed by using the hybrid GA as a core of the present invention.

In the above description, the outline of the processing order of the "method of estimating structure of materials based on radiation diffraction data" of this embodiment was explained. Hereinafter, the respective processes P1 to P5 will be explained in detail.

(1) Lattice Constant Determination Process

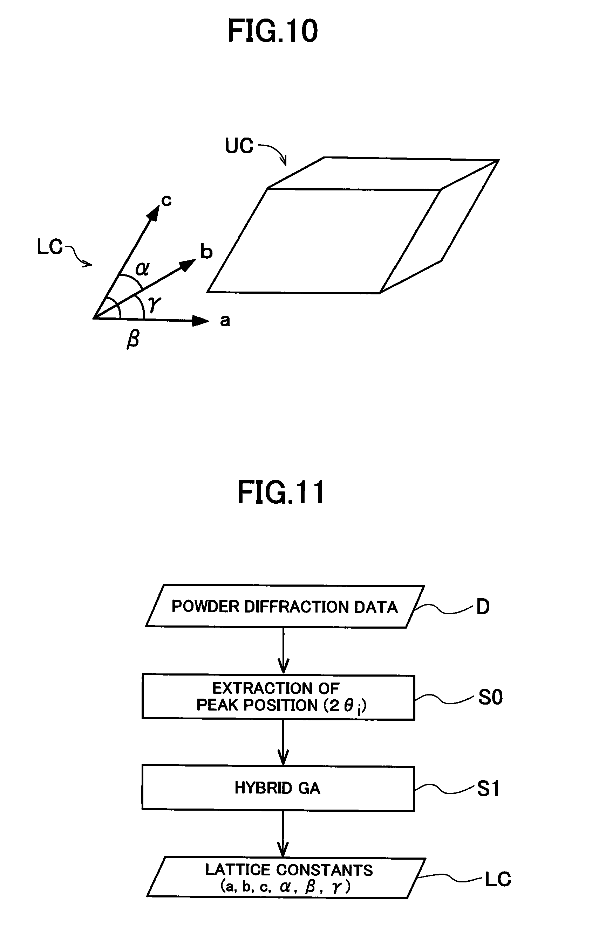

The lattice constant determination process P1, as described above, refers to a process to determine a set of lattice constants. For example, if the crystal is a triclinic system crystal, as shown in FIG. 10, the lattice constants LC having six parameters, which include lengths a, b, c of respective sides of the unit lattice UC and angles $\alpha$, $\beta$, $\gamma$ between the sides, are determined.

As shown in FIG. 11, first, a computer (not shown) reads a measured data of X-ray diffraction circles obtained from the powder specimen by the SPring-8 (proper noun) at a reading-in step D, and peak positions are extracted and a diffraction peak position table is made at a pre-processing step S0 However, in embodiment 2 (a) to 2 (f), as described above, a peak position table based on the diffraction circle data measured by a laboratory-level X-ray diffraction apparatus is used.

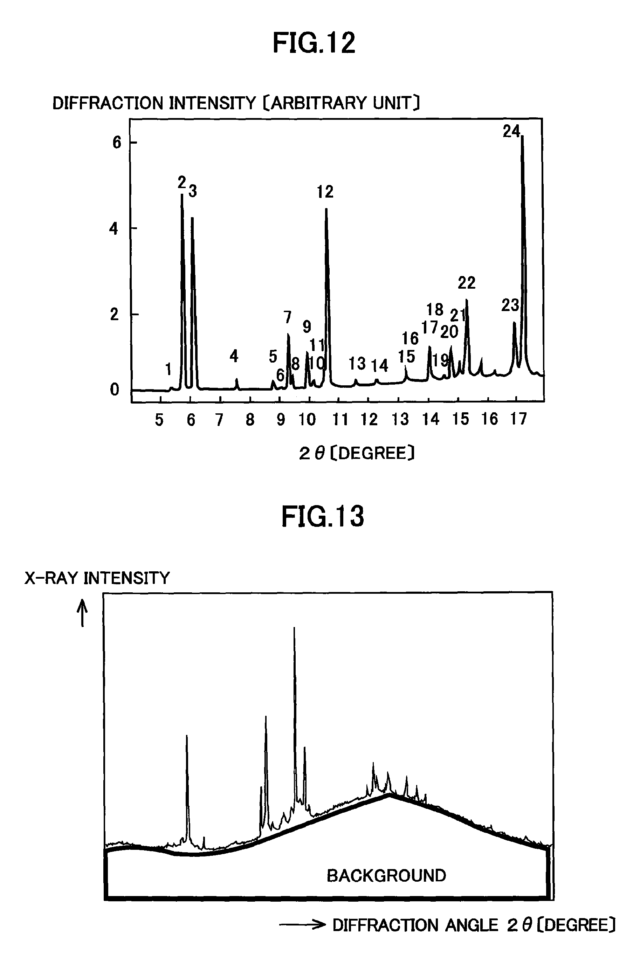

Here, in a case where the intensity distribution data of diffraction circles is as shown in FIG. 12, the diffraction peak position table is made such that the peaks are numbered in sequence from one having the smallest diffraction angle $2\theta$. That is, as shown in the following table 3, a peak data table in which the diffraction angles $2\theta$ of the respective peaks are described is the diffraction peak position table.

[Table 3]

| No. | $2\theta_i[°]$ |
|---|---|
| 1 | 5.352514 |
| 2 | 5.788506 |
| 3 | 6.141745 |
| 4 | 7.544511 |
| 5 | 8.8211 |
| 6 | 9.05712 |
| 7 | 9.324903 |
| 8 | 9.452379 |
| 9 | 9.982389 |
| 10 | 10.17055 |
| 11 | 10.54705 |
| 12 | 10.68341 |
| 13 | 11.6108 |
| 14 | 12.30847 |
| 15 | 13.30555 |
| 16 | 13.40638 |
| 17 | 14.08942 |
| 18 | 14.17574 |
| 19 | 14.60032 |
| 20 | 14.82903 |
| 21 | 15.13145 |
| 22 | 15.39832 |
| 23 | 16.99598 |
| 24 | 17.33527 |

Referring again to FIG. 11, the optimal (i.e., correct-solution) lattice constants are searched for by performing the data matching for the peak data, and the lattice constants (a, b, c, $\alpha$, $\beta$, $\gamma$) are determined at a hybrid GA step S1. The concrete processing of the lattice constant determination performed in the hybrid GA step S1 will be explained in detail in the description of the "hybrid GA", which will be made later.

The peak data used in this process includes only information about the peak positions, and does not include information about peak intensity.

This is because a magnitude of a distance d between the planes of each peak can be obtained from the information about only the each diffraction peak position, based on a condition equation $(2d \cdot \sin\theta = \lambda)$, by which the X-ray diffraction occurs. At this time, the distance d between the planes of each peak is calculated from a predetermined relation equation by using a Miller-index (hkl) expressed by combination of vectors of one integral-number-th of axes of the unit lattice representing the plane and the lattice constants $(a, b, c, \alpha, \beta, \gamma)$. That is, if the combination of the lattice constants $(a, b, c, \alpha, \beta, \gamma)$ capable of realizing the distance d corresponding to all (in some cases, most) peak positions included in the measured data can be found, the correct lattice constants can be determined thereby. In this process, the hybrid GA is used to search for the lattice constants.

(2) Background Scattering Elimination Process

The background scattering elimination process P2, as described above, refers to a process to eliminate or decrease an influence of background scattering from the intensity distribution data of X-ray diffraction.

As schematically shown in FIG. 13, in the measured data of the X-ray intensity of diffraction circles, besides the diffraction X-ray from the powder specimen itself which is really intended to be inspected, X-rays due to background scattering generated by various reasons are mixed up. In order to make a correct estimate of the diffraction intensity from the specimen subjected to the structure determination, it is necessary to eliminate the intensity of the background. According to the recent powder X-ray diffraction, because the amount of the powder specimen necessitated is extremely small and the data measurement is frequently performed by the Debye-Scherrer method owing to its simplicity of the experiment, the powder specimen is sealed in a glass capillary when conducting the experiment. However, because of a halo pattern of the glass, the background easily becomes complicated.

Four primary scattering causes constituting the background are as follows.

* scattering by air existing from an X-ray generating source to a detector via the powder specimen
* isotropic scattering of a fluorescent X-ray generated from the glass capillary and the powder specimen
* scattering generating a halo pattern from the glass capillary
* temperature diffuse scattering from the powder specimen

For example, when the X-ray diffraction specimen is formed by powder of $CsPbCl_3$, the measured data of X-ray intensity as shown in FIG. 14 (a) is obtained. However, this measured data also includes scattering by the above four causes. That is, the halo pattern of the glass is distributed as shown in FIG. 14 (b), the air scattering is distributed as shown in FIG. 14 (c), and the temperature diffuse scattering is distributed as shown in FIG. 14 (d). Because it is already known that the fluorescent X-ray is isotropically scattered, the distribution pattern thereof is obvious. Thus, as shown in FIG. 14 (e), if the background scattering due to the above four causes is eliminated, the almost pure intensity distribution of only the diffraction X-ray from the powder specimen can be calculated.

(3) Space Group Narrowing-down Process

The space group narrowing-down process P3, as described above, refers to a process to exclude the space groups having low possibility among 230 kinds of space groups that the crystals can form, and to narrow down the space groups having high possibility to a certain number of candidates, based on the measured data of X-ray diffraction circles.

In this process, from the lattice constants $(a, b, c, \alpha, \beta, \gamma)$ extracted from the above-described structure refinement process P5, it is determined that the crystals included in the powder specimen belong to which one of seven crystal systems (triclinic, monoclinic, orthorhombic, tetragonal, rhombohedral, hexagonal, cubic). This is because, in order to determine the structure by the X-ray diffraction, it is necessary to determine the space group from the crystal system.

Here, the space group refers to a group in which the atoms of the crystals are symmetrically arranged, and all crystals belong to any one of the 230 space groups. For example, the number of space groups included in each crystal system is two in the triclinic system, thirteen in the monoclinic system, fifty nine in the orthorhombic system, sixty eight in the tetragonal system, twenty five in the rhombohedral system, twenty seven in the hexagonal system, and thirty six in the cubic system. A difference between the space groups belonging to the same crystal system is an extinction rule which determines the reflection to be extinguished, from a point of view of the X-ray diffraction data. The extinction rule presents a rule by which the reflection occurring from the crystal system is periodically extinguished by the symmetric operation of the space group. For example, when the translational operation having a magnitude of a half of an axis in a b-axis direction is performed, the reflection of "k = 2n + 1 (odd number)" among the reflection expressed by 0K0 as the Miller-index (hkl) is extinguished.

Inventors have developed a method, from the powder diffraction data, of applying the Le Bail analysis (A. Le Bail et al., Mat. Res. Bull. 23,447, (1988)) to all space groups included in the crystal system and narrowing down the space groups having possibility from the reliability factor Rwp of the Le Bail analysis. Here, the reliability factor Rwp is a numerical value defined by the following equation 1.

[Equation 1]

$$R_{wp} = \left[ \frac{\sum_{i}^{N} w_i [Y(2\theta_i)_{obs} - Y(2\theta_i)_{calc}]^2}{\sum_{i}^{N} w_i Y(2\theta_i)^2_{obs}} \right]^{\frac{1}{2}}$$

In equation 1, N refers to the number of observation points, wi refers to a load with respect to the $i^{th}$ observation point, and a reciprocal of observation intensity wi = $Y(2\theta_i)_{obs-1}$ is used. $Y(2\theta_i)_{caLC}$ refers to calculation profile intensity, and $Y(2\theta_i)_{obs}$ refers to observation profile intensity. In this method, the Le Bail analysis is performed by the space group which does not have the extinction in each crystal system, at the beginning. From such an analysis, diffraction profile parameters for determining the shape of the diffraction reflection are calculated. Thereafter, the Le Bail analysis is automatically performed for the overall space groups having possibility, by using the profile parameters.

The space group with a low value of the reliability factor Rwp obtained as the result of the Le Bail analysis is a space group having high possibility to correspond to an actual state, and becomes a candidate for a correct space group (in such a sense, a "distrust factor Rwp" or an "error probability index Rwp" is more proper than the "reliability factor Rwp").

In a conventional method used to determine the space group, enormous labor and time were needed to check the extinction one by one in a plurality of space groups. When the extinction is determined from the measured data and the reflection positions and the space groups are intended to be narrowed down, the diffraction intensity is weak in comparison of the powder diffraction data and the single-crystal diffraction data. Therefore, it is difficult to verify whether the reflection invisible to the naked eyes is actually distinguished. Accordingly, in the conventional method, if the reflection is not observed in the intensity data, even the correct solution may be excluded from the candidates, and the space group of the correct solution has possibility to escape from the narrowed-down space groups.

In the method developed by inventors, as described above, since the Le Bail analysis is automatically repeated by changing the space groups, all space groups as objects can be exhaustively searched for from the crystal system. As a result, all space groups having possibility can be extracted as candidates for the correct solution without omission.

For instance, the analysis of 1-FcAqH($ClO_4$), i.e., "1-ferrocenylethynyl-anthraquinone($ClO_4$)" will be described in the following table 4.

[Table 4]

|  | Rwp[%] | |  | Rwp[%] |
|---|---|---|---|---|
| P222 | O | 3.93 | Pnnn(1) | 23.37 |
| P222 | O | 3.89 | Pnnn(2) | 23.35 |
| P2:2:2 | O | 3.97 | Pccm | 32.24 |
| P2:2:2 | O | 3.90 | Pban(1) | 24,69 |
| C222 | | 34.72 | Pban(2) | 24.68 |
| C222 | | 34.73 | Pmma | 9.12 |
| F222 | | 40.27 | Pnna | 21.37 |
| 1222 | | 23.84 | Pmna | 21.21 |
| 12:2:2 | | 23.84 | Pcca. | 32.23 |
| Pmm2 | O | 4.26 | Pbam | 23.55 |
| Pmc2 | | 7,90 | Pccn | 33.41 |
| Pcc2 | | 32.23 | Pbcm | 32.15 |
| Pma2 | O | 4.42 | Pnnm | 8.34 |
| Pca2 | | 23.65 | Pmmn(1) | 8.48 |

(continued)

| | Rwp[%] | | | Rwp[%] |
|---|---|---|---|---|
| Pnc2 | 8.39 | Pmmn(2) | 8.43 |
| Pmn2 | 7.86 | Pbcn | 31.79 |
| Pba2 | 23.59 | Pbca | 31.96 |
| Pna2 | O 4.82 | Pnma | 9,51 |
| Pnn2 | 8.34 | Cmcm | 40.31 |
| Cmm2 | 34.76 | Cmca | 41.55 |
| Cmc2 | 40.31 | Cmmm | 34.78 |
| Cce2 | 39.62 | Cccm | 39.63 |
| Amm2 | 25.06 | Cmma | 36.20 |
| Abm2 | 41.55 | Coca(1) | 40.89 |
| Ama2 | 25.08 | Ccca(2) | 40,90 |
| Aba2 | 36.45 | Fmmm | 40.28 |
| Fmm2 | 40.36 | Fddd(1) | 38.44 |
| Fdd2 | 38.43 | Fddd(2) | 38.43 |
| Imm2 | 23.85 | Immm | 23.86 |
| Ibe2 | 31.61 | Ibam | 31.61 |
| Ima2 | 23.56 | Ibca | 33.04 |
| Pmmm | O 4.12 | Imma | 25.84 |

As shown in the above table, as a result of attempting 384 tests including the replacement of axes and an origin with respect to the space groups of the monoclinic system, the space groups having possibility could be narrowed down to eight kinds in only several minutes (in practice, in about one minute). Here, as a condition of the space groups having possibility, the space groups having the reliability factor Rwp of a value less than 5 % are adopted, and a mark "O" is attached to a front of the percentages thereof in this table. A computer used in the data analysis of X-ray diffraction circles is the aforementioned PC which is on the market.

(4) Basic Structure Determination Process

The basic structure determination process P4, as described above, refers to a process to determine the space group, which seems to be most certain among the candidates of the narrowed-down space groups, as the correct solution, and to roughly determine the positions and postures of the molecules and the three-dimensional atomic arrangement in the unit lattice. Determination of the schematic atomic or molecular arrangement in the unit lattice after the determination of the crystal system and the space group, is called basic structure determination. Because the intensity of diffraction peaks of the X-ray diffraction data reflects the atomic arrangement in the crystal, the basic structure determination is achieved by determining the schematic atomic arrangement satisfying the intensity relationship of the diffraction data.

In general, in a case of single-crystal X-ray diffraction, it is easy to independently calculate the intensity of each diffraction peak. Thus, the basic structure can be determined by the direct crystal structure determination method, to which the Nobel Prize was given in 1985, using the calculated intensity. However, in a case of diffraction data of the powder specimen, because the intensity peaks of diffraction circles are overlapped as described above, the intensity of each diffraction peak cannot be calculated. Accordingly, different from this embodiment, the conventional direct crystal structure determination method cannot achieve the structure determination based on the X-ray diffraction circle data obtained from the powder specimen.

Therefore, in the basic structure determination process P4 of this embodiment, the hybrid GA is applied to a real-space method which finds the positions, postures and shapes of the molecules in the real space of the unit lattice, thereby determining the basic structure from the powder diffraction data.

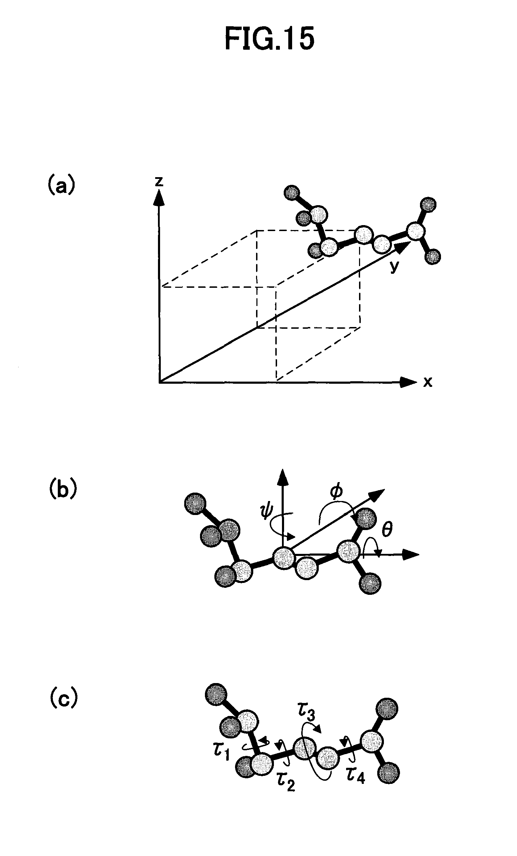

The "real-space method" used herein is a method in which the position and the direction (i.e., posture) of a rigid body (i.e., molecule) containing one or more atoms in the unit lattice are determined, and the shape of the rigid body (molecule) is also determined by giving the solution to the rotational degree of freedom in the rigid body. That is, as shown in FIGS. 15 (a) to 15 (c), the atomic arrangement in the unit lattice is represented by the parameters of positions $(x, y, z)$, directions or postures $(\theta, \varphi, \psi)$ and internal rotation $(\tau 1, \tau 2, \tau 3, ....)$ of the atom and the rigid body (molecule). In the basic structure determination process P4, the above parameters are determined by the real-space method by the hybrid GA. In general, the number of the parameters to be determined is a sum of six degrees of freedom of positions and postures that the molecule has in the unit lattice and the number of points of internal rotation.

The hybrid GA used in the basic structure determination process P4 is basically the same as that used in the above-described structure refinement process P5, except for the definition of the parameters to be optimized and fitness and all kinds of setting. The hybrid GA developed by inventors will be described in detail later.

(5) Structure Refinement Process

The structure refinement process P5 of this embodiment, as described above, refers to a process to refine the basic structure, determined in the above-described basic structure determination process P4, with higher precision. In this process, the determination of electron density distribution in the molecule can also be achieved, if intended.

Here, the structure refinement is to find the position of each atom by minimum square optimization, based on the structure calculated by the basic structure determination. As a structure optimization method of powder diffraction, the Rietveld method (H. M. Rietveld, J. Appl. Cryst. 2(1969), 65) is used. In general, the position of the atom is found with precision of about 0.001 nm. Inventors have developed a method of smoothening the processes of the basic structure determination and refinement by the Rietveld method and increasing the precision of the structure in the final structure refinement, by combining the Rietveld method and the maximum entropy method (M. Sakata et al., Acta Cryst. A46, 263, (1990)). As a result, the structure determination can be realized very precisely such that the agreement between the material structure determined from the powder diffraction data and the diffraction circle data is almost 98 % and the error of the atomic arrangement is only 0.0001 nm. If the material structure can be determined with such high precision, this method can be sufficiently used for estimation of functions of new materials or medicine development.

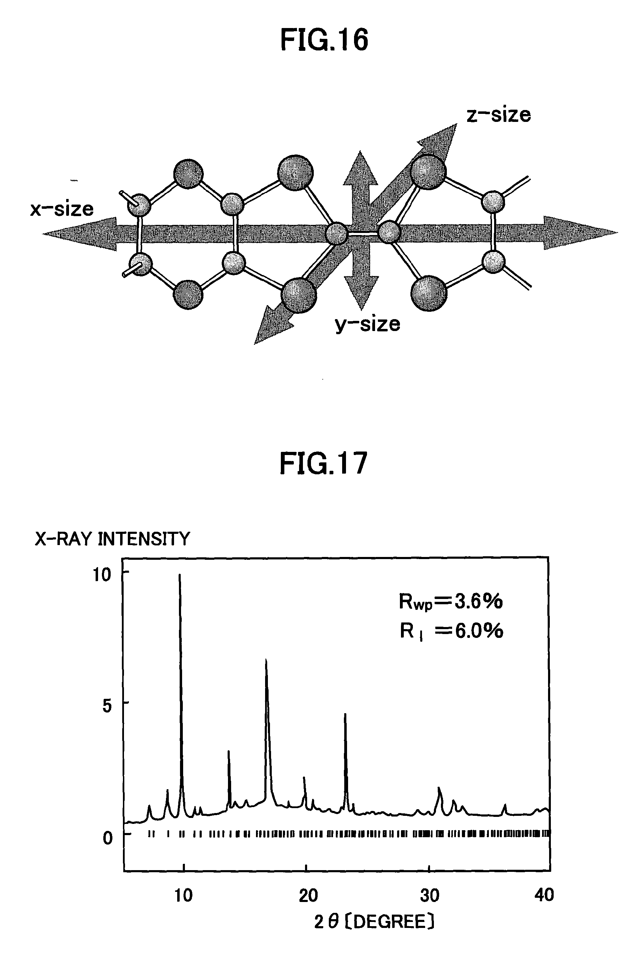

Similar to the above-described basic structure determination process, according to the structure refinement process P5, the molecule is treated as a rigid body, and the same parameters of positions, directions and internal rotation as in the basic structure determination are refined. Also, as shown in FIG. 16, size parameters (x-size, y-size, z-size) in a three-axis direction, which indicate an overall size of the rigid body, are adopted as the parameters to be optimized, and are refined by the minimum square optimization. The atoms in the crystals in a finite temperature cause thermal vibration, and the thermal vibration has a comparatively large influence on the diffraction pattern. Thus, also the thermal vibration of the overall rigid body is refined. As a result, the agreement with the diffraction pattern can be more increased than that in the basic structure determination, while the molecule is treated as the rigid body.

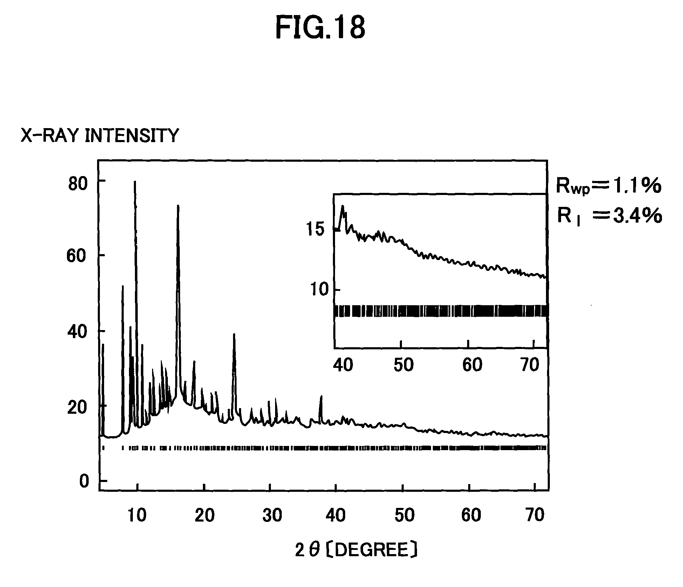

As a result of the structure refinement process P5, a fitting graph showing the agreement with the measured data of X-ray diffraction by the determined structure of $Pd(dt)_2$ is illustrated in FIG. 17. Similarly, a fitting graph showing the agreement of $Au(tmdt)_2$ is illustrated in FIG. 18. For example, a value of the reliability factor Rwp as the agreement with the measured data is 3.6 % in $Pd(dt)_2$, and is 1.1 % in $Au(tmdt)_2$. It can be known that any one of the above two cases is applied with the analysis of high precision including a distance and an angle between the atoms.

As a result of calculating an electron state from the structure of $Pd(dt)_2$ by band calculation, an estimation that this material was a semiconductor was drawn. In order to verify such estimation, an electric conductivity thereof was measured in practice. As a result of the verification, this material was proved to be a semiconductor. Also from this verification, it can be understood that the structure refined thus has precision sufficient to estimate a function of a material.

$Pd(dt)_2$ is a chemical formula of Pd-tetrathiafulvalenedithiolato, and the result of the structure determination of this material according to this embodiment was reported in the latter of the aforementioned publications. For reader's convenience, the publication concerned will be described again below. "Structures of a single-component palladium complex with extended TTF-type dithiolate ligands, bis-(tetrathiafulvalenedithiolato) palladium determined by powder X-ray diffraction", Suzuki W., Fujiwara E., Kobayashi A., Fujishiro Y., Eiji Nishibori, Masaki Takata, Makoto Sakata, Okano Y., Kobayashi H., Chemistry Letters 32 (2003) 1106 - 1107

4. HGA in Lattice Constant Determination Process

(1) Summary of HGA

Hereinafter, the constitution of the hybrid GA (which may be abbreviated to HGA) used in the lattice constant determination process P1 and the basic structure determination process P4, among the above processes P1 to P5, will be explained. Both the processes P1 and P4 are embodiments of the "method of optimizing multiple parameters by hybrid GA", the "method of data analysis by pattern matching", the "program of searching for an optimal set of multiple parameters" and the "program of estimating structure of materials".

First, the HGA used in the lattice constant determination process P1 will now be described in detail.

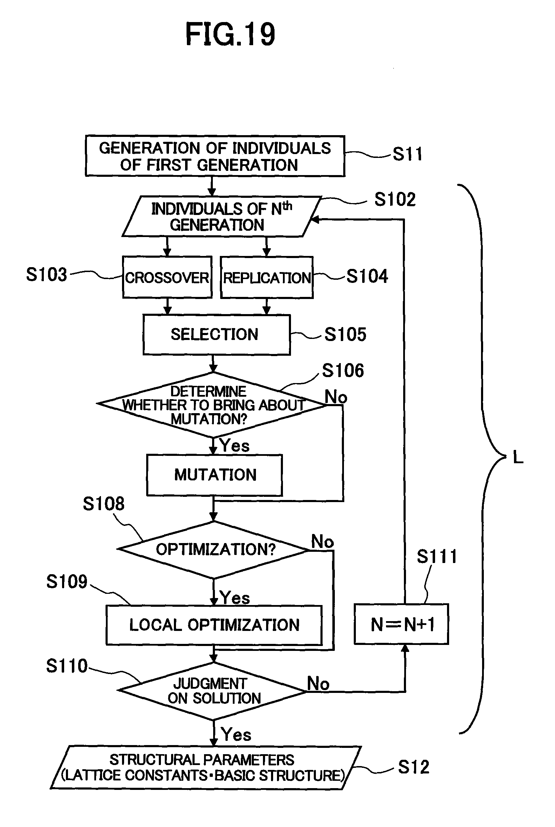

The hybrid GA as a core of the "method of optimizing multiple parameters by hybrid GA" and the "program of searching for an optimal set of multiple parameters" according to the present invention, as shown in FIG. 19, includes a loop L of alternation of generations which repeats a crossover step S103, a selection step S105, a mutation step S107 and a local optimization step S109 after an initial generation setting step S11. When the present invention is associated with the method invention, the processing order is called a "process". When the present invention is associated with the program, the processing order is called a "step". However, since the technical content of the "process" is substantially the same as that of the "step", there will be no discrimination between the "process" and the "step".

In this HGA, the code strings constituting each individual are lattice constants (e.g., (a, b, c, $\alpha$, $\beta$, $\gamma$)), which are one set of physical quantity parameters, and an objective is to wide area search for an appropriate combination of the lattice constants.

In the initial generation setting step S11, population of an initial generation (which may be called a first generation) including a predetermined number of individuals, in which the respective lattice constants are properly distributed, is generated. Each generation is provided with the loop L of alternation of the generations, which includes a recording step S102 to record the population of the generation concerned, an evaluation step (not shown), the crossover step S103, the selection step S105, the mutation step S107 occurring stochastically and the local optimization step S109.

The evaluation step (not shown) is a step to evaluate fitness of newborn individuals which are newly generated among the population of the generation concerned. In the evaluation step, the fitness of all newborn individuals generated in the initial generation setting step S11, the crossover step S103 and the mutation step S107 is calculated. The crossover step S103 is a step to select a plurality of individuals of the population as parent individuals and perform the crossover among the parent individuals by a predetermined method in order to generate new individuals. The selection step S105 is a step to select the individuals to survive in the next generation thereof, among the newborn individuals by the crossover step S103 and the individuals replicated from the population of the $N^{th}$ generation in a replication step S104, and to weed out the other individuals.

The mutation step S107 is a step which is performed stochastically by a determination step S106 preceding the mutations step, and applies a forcible change to the code strings constituting the individuals selected stochastically.

The local optimization step S109 is a step to locally optimize parameters of lattice constants regarding the fitness of only the individuals (specific individuals) selected under a predetermined stochastic rule in a part of generations (specific generations) selected according to a stochastic rule by a determination step S108 preceding the local optimization step. A determination logic of the determination step S106 can be adjusted. However, a frequency of occurrence of the specific generations is, for example, once per every 10 generations, and the appointment of the specific individuals is restricted to one or at most several among a predetermined number of individuals constituting the population of the specific generations.

As a result of determination of convergence on the solution at a convergence determination step S110, if not converges on the solution, generation numbers are changed at an increment step S111 within a limited range of the number of appointment, and the process returns to the step S102, and then the loop L of alternation of the generations is repeated in the population of the $N^{th}$ generation. While the loop L of alternation of the generations is repeated over and again and thus the alternation of the generations is repeated, it is expected that the individuals with very good fitness among the population are generated. Based upon the determination on the convergence of the individuals on the correct solution or best solution, an optimal set of lattice constants are searched for.

If it is determined that the individuals with best fitness are generated (or alternation of the generations reaches a limited value) at the convergence determination step S110, the loop L of alternation of the generations is terminated. At a result output step S12, the determined structural parameters and the fitness of the optimal individual are outputted. In addition, the information about all individuals constituting the population of the final generation is recorded, identically to the recording step S102.

(2) Details of HGA

As described above, the HGA of this embodiment, i.e., the hybrid GA in the lattice constant determination process P1 determines a set of lattice constants (a, b, c, $\alpha$, $\beta$, $\gamma$), which will be explained in detail hereinafter.

(Position Disagreement Parameter t)

According to the HGA (refer to FIG. 19) of this embodiment, an evaluation step (not shown) to calculate the fitness of the newborn individuals is contained in the initial generation setting step S11, the crossover step S103, the mutation step S107 and the local optimization step S109. At the evaluation step, the measured data as a reference for fitness calculation, as described above, is a peak data of calculating the peak position by the diffraction angle 2θ from the measured powder diffraction data (refer to FIG. 11, FIG. 12 and Table 3).

The basic data of the powder X-ray diffraction is obtained as an intensity data at separate points having an equi-interval or non-equi-interval step with respect to the diffraction angle 2θ. Thus, a minute origin position disagreement (t) occurs at the measured value of the diffraction angle 2θ, within a range of a space resolution that an X-ray detector has near the origin (center point of the diffraction circles). A value of the origin disagreement (t) is unclear only from the measured data from the X-ray detector.

Besides the lattice constants (a, b, c, α, β, γ), the position disagreement (t) is added to a plurality of parameters which are searched for by finding the optimal solution by the HGA. That is, the number of the parameters to be searched for is seven (a, b, c, α, β, γ). In order to achieve the accurate data matching with the peak data, the seven parameters including the position disagreement (t) should be searched for and also the position disagreement (t) should be accurately determined.

(Initial Generation Generating Process)

At the initial generation setting step S11 (refer to FIG. 19), the lattice constants (a, b, c, α, β, γ) and the origin disagreement (t) of a number Np of individuals set by a user at the beginning, among the individuals constituting the population of the initial generation, are generated by a proper random number.

A constraint that a parallelepiped should be formed and a constraint that each minimum value of magnitudes of axes a, b and c of the unit lattice is smaller than a size of each atom, particularly less than 0.25 nm, are imposed on the lattice constants (a, b, c, α, β, γ). The conditions for forming the parallelepiped are as follows: α + β + γ < 360°, α ≤ β + γ, β ≤ α + γ, γ ≤ α + β. If these conditions are not satisfied, for example, α + β + γ = 360°, the axes a, b and c are directed on a single plane, and the unit lattice lies on the plane, thereby failing to form the parallelepiped. Also, the lattice is generated in a range of a, b, c > 0.25 nm from the restriction that the lattice is larger than a size of each atom. By the above restrictions, a set of lattice constants (a, b, c, α, β, γ) capable of forming the parallelepiped can be generated by a random number.

Regarding the origin disagreement (t), a range of disagreement corresponding to a step width (i.e., space resolution) of data points is set, and the parameter (t) is generated within the range at random. A typical value of the origin disagreement (t) is an order of 0.001°. Regarding (a, b, c, α, β, γ), the following multiple constraints may be added to the parameters to be generated.

In order to efficiently search for the solution by restricting the searching range, a maximum value and a minimum value may be set for each value of the parameters (a, b, c, α, β, γ). As needed, constraints, such as a > b > c, a > c, b > c, c > a, etc., may also be provided. In a case where a volume of the unit lattice can be roughly estimated from the constitutional atom or molecule, a maximum value (Vmax) and a minimum value (Vmin) of the volume are input, so as to generate a set of parameters (a, b, c, α, β, γ) forming the parallelepiped having a volume (V) within the range between the maximum value (Vmax) and the minimum value (Vmin).

(Evaluation Process)

The lattice constants (a, b, c, α, β, γ) and the origin disagreement (t) are encoded to each individual. At the evaluation step (not shown), it is evaluated whether the lattice constants of each individual satisfy the diffraction peaks obtained from the experiment.

The evaluation of fitness is performed by using an agreement between assumed data ($2\theta_{cal}$) of diffraction peak positions calculated by substituting d obtained by the following equation 2 from the parallelepiped of the lattice constants of the individual for a diffraction condition equation ($2d \cdot \sin\theta = \lambda$) and measured data ($2\theta_{obs}$) of the diffraction peak positions extracted from the experiment data.

$$\frac{1}{d_{hkl}^2} = \frac{\frac{h^2}{a^2}\sin^2\alpha + \frac{k^2}{b^2}\sin^2\beta + \frac{l^2}{c^2}\sin^2\gamma + \frac{2hk}{ab}(\cos\alpha\cos\beta - \cos\gamma) + \frac{2kl}{bc}(\cos\beta\cos\gamma - \cos\alpha) + \frac{2lh}{ca}(\cos\gamma\cos\alpha - \cos\beta)}{1 - \cos^2\alpha - \cos^2\beta - \cos^2\gamma + 2\cos\alpha\cos\beta\cos\gamma}$$

An evaluation function showing the agreement is calculated from the following equation 3.

$$R = \frac{\sum_i^N \frac{|2\theta_{obs} - 2\theta_{cal}|}{2\theta_{obs}}}{N}$$

Here, N refers to the number of inputted reflection. A range of ± delta value from $2\theta_{obs}$ is set, and the agreement R is calculated between $2\theta_{obs}$ and $2\theta_{cal}$ included in the above range. The delta value is a value from a half of a half-width of the diffraction peak to a half-width of the diffraction peak. When using the equation, if $2\theta_{cal}$ is not in the range of $2\theta_{obs}$ ± delta, a value of numerator ($|2\theta_{obs} - 2\theta_{cal}| / 2\theta_{obs}$) in the above equation 3 is set to 1. On the other hand, if

$2\theta_{cal}$ is in the range of $2\theta_{obs} \pm$ delta, a value of ($|2\theta_{obs} - 2\theta_{cal}| / 2\theta_{obs}$) is about 0.005. Thus, when the peak of 1 exists, the value of the agreement R is remarkably increased.

At the above-described initial generation setting step S11, restriction may be applied to the range of parameters representing the generated individuals, by the value of agreement R. In a case where the individual corresponding to the parameter larger than a value set by the agreement R, the individual is destroyed, and the individual corresponding to another parameter is generated. If a number Np of individuals satisfying the constraints set by a user are obtained, the generation of the population of the first generation is terminated.

(Crossover Process)

A crossover is operation modeled after a cross between organisms. In the crossover operation performed at the crossover step S103, the parent individuals (a set of lattice constant parameters and origin disagreement) subjected to the crossover are selected by using fitness $\rho$ of the $i^{th}$ individual found from the following equation 4.

[Equation 4]

$$\rho(i) = 1 - \frac{R - R_{min}}{R_{max} - R_{min}}$$

Here, Rmax and Rmin are a maximum value and a minimum value, respectively, of the evaluation function R calculated from the above equation 3, among the individuals belonging to the population of the $N^{th}$ generation.

At the crossover step S103, a roulette wheel selection is used for the selection of the parent individuals. The roulette wheel selection is a selection method, in which if the fitness $\rho$ of the individual selected at random from the population of the specific generation is larger than a uniform random number generated in the range of 0 to 1, the individual is adopted as the parent individuals. On the other hand, if the fitness $\rho$ of each individual is smaller than the uniform random number, another individual is selected, and the above operation is successively repeated until a predetermined number of parent individuals are selected.

There are several kinds of crossover methods performed at the crossover step S103. The number of parent individuals selected for the crossover is different according to the crossover method. Any one selected from: any one of parameter-exchanging types including a one-point crossover type, a two-point crossover type and a uniform crossover type; and a blend type crossover used in the GA of a real number value, can be performed. At this time, when the crossover is performed in the one-point, two-point or uniform crossover type, the number of the selected parent individuals is 2Nm which is set by a user, i.e., Nm groups because each group includes two individuals. When the crossover is performed in the blend crossover type, the number of the selected parent individuals is 2 to Nb.

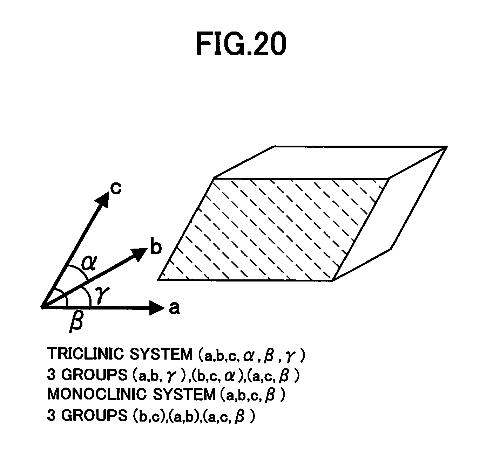

At the crossover step S103, a specific design was made in order to improve a parameter searching efficiency with respect to the monoclinic and triclinic systems, in which the molecular crystals of an organic body are observed well. Without crossing over the lattice constant parameters (a, b, c, $\alpha$, $\beta$, $\gamma$) as they are, as shown in FIG. 20, the grouping of the parameters is performed in consideration of a heredity according to the features of the parameters.

For example, in the grouping of the triclinic system, one plane of the parallelepiped is preserved. Because three planes of the unit lattice, which are not parallel with each other, are respectively represented by two axes and one angle, the three parameters are divided into three groups of (a, b, $\gamma$), (b, c, $\alpha$) and (a, c, $\beta$). In a case of the monoclinic system, the four lattice constants (a, b, c, $\beta$), which constitute each group, are divided into three groups of (b, c), (a, b) and (a, c, $\beta$).

As a result of such grouping, one of three planes of the parallelepiped of the parent individual is inherited to an offspring.

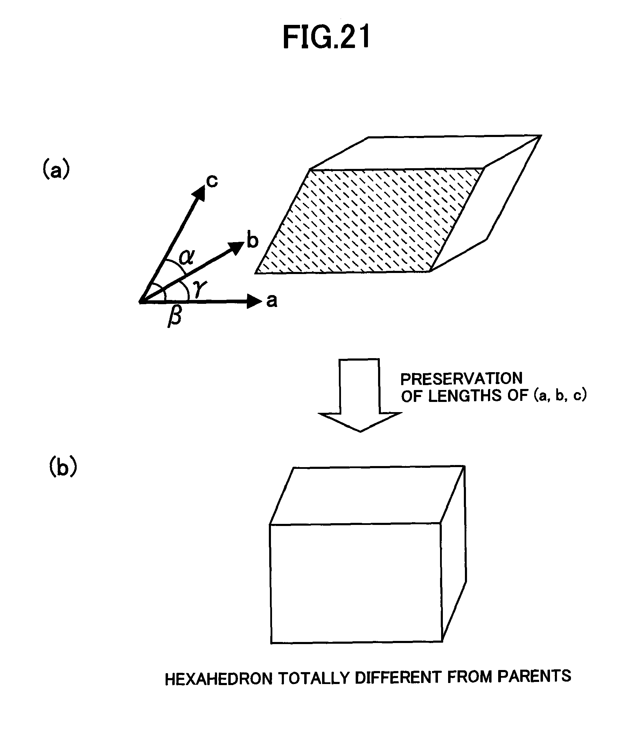

Through a thought experiment for estimating a result when the grouping is not performed, the meaning of the grouping can be understood. For example, if the material included in the powder specimen is a triclinic system, as shown in FIGS. 21 (a) and 21 (b), the parameters $\alpha$, $\beta$ and $\gamma$ are extracted from the six parameters (a, b, c, $\alpha$, $\beta$, $\gamma$). If the values of the parameters $\alpha$, $\beta$ and $\gamma$ are changed, an offspring individual corresponding to a parallelepiped having a shape totally different from the original parent individual is generated. Because the diffraction peak position calculated from this parallelepiped is totally different from that of the parent individual, it is very inadequate.

This is because the general genetic algorithm (GA) is constituted such that the gene of the parent individual is transmitted to the offspring individual, thereby enhancing the solution searching performance. Thus, like this example, if the offspring individual corresponding to the parallelepiped having a shape and a diffraction peak position totally different from those of the parent individual is generated, an excellent searching efficiency as a merit of the GA is completely deteriorated. In the lattice constant determination process P1, the grouping of the parameters is performed at the crossover process for such a reason.

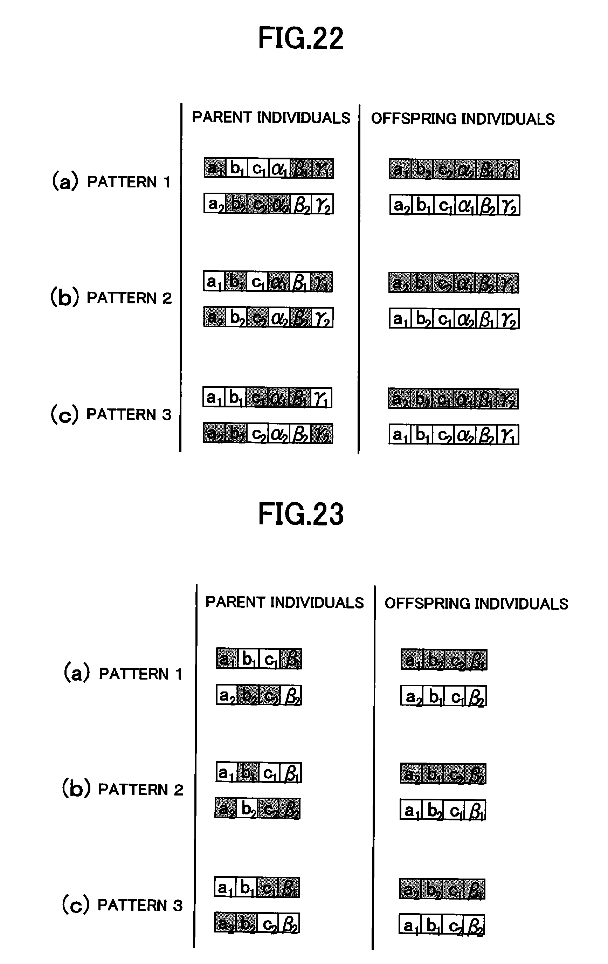

Accordingly, when the crossover type is any one of the one-point type, the two-point type and the uniform type, one group of the grouped parameters is preserved at the crossover, and only the parameters belonging to other groups are exchanged between the parents (two parent individuals). In a case where the grouping is performed at the crossover process, the crossover method possible in the triclinic system is limited to three patterns shown in FIGS. 22 (a) to 22 (c), and the crossover method possible in the monoclinic system is also limited to three patterns shown in FIGS. 23 (a) to 23 (c). As a result of performing the crossover, a number 2Nm of offspring individuals are generated from a group Nm of parent individuals.

When the crossover type is a blend crossover type, the grouped parameters are preserved at the crossover, and other parameters are generated by a uniform random number / normal random number near an average value of two to Nb individuals. That is, the parameter Pc of the offspring individual is calculated from the parameters Pp and $\alpha$ and the random number of the parent individual, based on the following equation 5.

[Equation 5]

$$ Pc = \frac{\sum_{i=1}^{N} Pp_i}{Nb} + \frac{\sum_{j=1}^{N}\left|\frac{\sum_{i=1}^{N} Pp_i}{Nb} - Pp_j\right|}{Nb} \times (1 - \alpha) \times (\text{RANDOM NUMBER}) $$

However, at the blend type crossover process, the calculation of the equation 5 is repeated by 2Nm times, and thus a number 2Nm of offspring individuals are generated.

All individuals generated at the crossover process without regard to crossover type are evaluated (evaluation step is performed) by the evaluation function R (refer to equation 3) indicating the aforementioned agreement.

(Selection Process)

At the mutation step S107, from a number Np + 2Nm of individuals, which are sum of a number Np of parameters of the $N^{th}$ generation concerned and a number 2Nm of offspring individuals newly generated by the crossover process, a number Np of individuals are selected to survive in the next generation thereof. At this time, there are two kinds of selection strategies, as follows.

A first selection strategy is an elite strategy in which the fitness $\rho$ of each individual is calculated, and a number Np of individuals are selected in sequence from one with the highest fitness.

The other selection strategy is to select two individuals, which remain by excluding a number Np - 2 of individuals from a number Np of individuals of the $N^{th}$ generation, from a number 2Nm + 2 of individuals which are sum of a number 2Nm of individuals generated by the crossover and two of the individuals selected as the parent of the crossover. At this time, one of the selected individuals is set to an individual with the highest fitness (best individual) among a number 2Nm + 2 of individuals, and the other one is selected from a number 2Nm + 1 of individuals excluding the best individual, by the roulette wheel selection.

A user of the "program of searching for an optimal set of multiple parameters" selects to use which one of the two selection methods.

(Mutation Process)

The mutation process is a process of adopting operation modeled after the mutation occurring at the evolution of organisms to the GA.

In the lattice constant determination process P1 according to this embodiment, a number Nx of individuals are selected as a displacement object by a uniform random number among a number Np of individuals, and the mutation operation is performed for the selected individuals. The lattice constant parameters and the origin disagreement parameters of the selected individuals are changed by a random number.

At this time, when considering the heredity of the parameters in the lattice constant determination process P1, as described above, one parameter is selected from (a, b, c, $\alpha$, $\beta$, $\gamma$) in the triclinic system, and one parameter is selected from (a, b, c, $\beta$) in the monoclinic system. The value of the selected parameter is substituted by a random number. The origin disagreement parameter (t) is always substituted by a random number.

Such operation is repeated for a number Nx of individuals, and the individual generated by the mutation is substituted with an individual before the mutation among the population of the generation concerned. Accordingly, in this operation, the number (Np) of the individuals of the generation is not changed.

Also, the number (Nx) of the individuals subjected to the mutation is set in advance by a user.

(Replication Process)

At the replication step S104, all parameters and all evaluation function values R of a number Np of individuals of the population of the N$^{th}$ generation are preserved, and then are transmitted to the operation of the next selection step S105 (i.e., weeding-out process or selection process).

(Local Optimization Process)

The local optimization step S109 is a processing step to locally optimize the values of seven parameters (a, b, c, $\alpha$, $\beta$, $\gamma$, t) by a minimum square method with respect to non-linear constraints. A number Nn of individuals are selected from a number Np of individuals, and the local optimization is performed for the fitness $\rho$. The constraints at this time conform to the above-described constraints at generation of the first generation.

The method of selecting a number Nn of individuals subjected to the local optimization operation is characteristic, in which the individuals are selected from one with the lowest fitness by the roulette wheel selection, contrary to common sense. There are two reasons for this. One of the reasons, as described above, is that the individual already having high fitness has high possibility to fall into a pit in the multi-dimensional parameter space with multi-peak features. The other reason is that the individual with low fitness has high possibility not to be locally optimized before and thus the local optimization effect can be anticipated.

There is a limitation in the number (Nn) of performing the local optimization, which is set to a hundredth or less of the number of individuals included in the population. This is because the calculation time necessary for one local optimization operation is ten to hundred times longer than that necessary for one evaluation function. Thus, if the number (Nn) of individuals subjected to the local optimization is increased more than the above limitation, the original merit of the GA that a calculation load is low is damaged.

The individuals newly generated by the local optimization operation are replaced with the original individuals. Therefore, also in this operation, the number (Np) of the individuals included in the population of the generation concerned is not changed.

The frequency of occurrence of the specific generations performing the local optimization operation and the number (Nn) of the specific individuals subjected to the local optimization operation are set in advance by a user.

(Convergence Determination)

According to the convergence determination of the hybrid GA, it is determined that the convergence is achieved when the value of the evaluation function as the fitness is lower than a value inputted by a user. In a case where the convergence is not ever achieved, the calculation is terminated by the cycle number of alternation of the generations which is preset by a user, and a message for informing such situation is outputted.

5. HGA in Basic Structure Determination Process

(1) Summary of HGA

Hereinafter, the HGA used in the basic structure determination process P4 will be explained in detail.

Referring again to FIG. 19, the "method of optimizing multiple parameters by hybrid GA" substantially uses a program of the HGA used in the above-described lattice constant determination process P1.

However, the primary difference is that a plurality of parameters which are searched for to reach the correct solution, as described above (refer to FIGS. 15 (a) to 15 (c)), are the positions (x, y, z) and postures ($\theta$, ($\varphi$, $\psi$) of the

molecule and the internal rotational angle ($\tau$i) of the molecule concerned. The fitness $\rho$ of each individual is calculated from an equation made by substituting R in the above equation 4 by Rwp. The detailed difference will be described later.

(2) Details of HGA

Referring again to FIG. 19, the HGA used in the basic structure determination process P4 will now be explained in detail.

(Initial Generation Generating Process)

At the initial generation setting step S11, a set of structural parameters corresponding to the code strings of a number Np of individuals preset by a user among the population of the initial generation are generated by using a random number. If a structure model corresponding to the number (Np) of the individuals is made from the generated structural parameters, the calculation diffraction pattern is calculated by using the structure model, the lattice constants, the space groups and the profile parameters calculated previously. The calculation diffraction pattern is evaluated by the reliability factor Rwp (refer to equation 1) with the diffraction pattern obtained from the experiment. That is, at the initial generation setting step S11, the structural parameters corresponding to the number (Np) of the generated individuals and the reliability factor Rwp for the same are calculated.

(Crossover Process and Evaluation Process)

At the crossover step S103, as described above, the parent individuals performing the crossover are selected by using the fitness $\rho$ calculated from the equation made by substituting the agreement R in the right side of equation 4 by the reliability factor Rwp. Here, Rmax and Rmin are a maximum value and a minimum value, respectively, of the evaluation function among the individuals of the $N^{th}$ generation.
As a selection strategy of the parent individuals, the roulette wheel selection is used, identically to the above-described lattice constant determination process P1. The crossover type is preset by a user, among the aforementioned one-point crossover and uniform crossover, and the blend type crossover used in the GA of a real number value. The above respective crossover types are the same as explained with reference to the lattice constant determination process P1. (Selection Process, Mutation Process, Local Optimization Process and Convergence Determination)
The selection step S105, the mutation step S107, the local optimization step S109 and the convergence determination step S110 are performed at the same manner as the respective steps of the above-described lattice constant determination process P1.

6. Other Embodiments

As other embodiments of the present invention, the lattice constants (a, b, c, $\alpha$, $\beta$, $\gamma$) were determined from the powder specimen of Pd(tmdt)$_2$, by the lattice constant determination process P1 of the "method of estimating structure of materials based on radiation diffraction data" of this embodiment. As a result, as described in the following table 5, the lattice constant determination process P1 adopting the HGA as a core of the present invention has a remarkable effect in the success probability of the lattice constant determination and the average cycle number (number of alternation of the generations) necessary therefor, when compared to a lattice constant determination method by a general GA with no local optimization.

[Table 5]

| SPECIMEN | Nn=100(10%) | | Nn=0(NO MINIMUM SQUARE) | | DICVOL SUCCESS OR FAILURE | CRYSTAL SYSTEM | A(A) | B(A) | C(A) | α (degree) | β (degree) | γ (degree) |
|---|---|---|---|---|---|---|---|---|---|---|---|---|
| | SUCCESS PROBABILITY (%) | AVERAGE CONVERGENCE CYCLE | SUCCESS PROBABILITY (%) | AVERAGE CONVERGENCE CYCLE | | | | | | | | |
| Pd(tmdt)₂ | 100 | 732.8 | 100 | 1799.5 | FAILURE | TRICLINIC TRICLINIC | 12.08904 | 8.53774 | 6.37215 | 122.64774 | 83.73503 | 95.20243 |

An item corresponding to "Nn = 100 (10 %)" described in a left side portion of the above table is an analysis result by this embodiment. In this embodiment, the above-described inverted roulette wheel selection is not performed, and the random selection is used to select the specific individuals from the population of the specific generations.

The analysis in this embodiment was performed under the conditions that a limit value of the cycle number in the HGA is 5000, the number (Np) of individuals of the population is 1000, the number (Nm) of crossover is 500, the number (Nx) of mutation is 500 (i.e., one mutation at every 10 generations), the specific generation occurs in each generation at every alternation of the generations, and the number (Nn) of local optimization (i.e., the number of specific individuals) is 100 (i.e., 10 % of the population is multiplied by local optimization). In the program for determining the lattice constants by the HGA, because realization or failure is dependent upon an initial random number and a delta value, ten analyses were performed with respect to the respective measured data by changing the values.

An item corresponding to "Nn = 0 (no minimum square)" described on the right side thereof is a comparative example which calculates a processing result of the simple GA made by eliminating the local optimization operation from the HGA set as above. According to the comparative example by the GA, the individual converged on the optimal value with the cycle number (number of alternation of the generations), which is two and a half times as many as in the embodiment by the above-described HGA.

An item corresponding to "Realization or Failure of DICVOL" described on the right side thereof is another comparative example different from the above example, which shows an analysis result by a free program commonly-used for the material structure determination. That is, as a result of analyzing the same data by using the "DICVOL04" (proper program name) applicable to also the triclinic system, which was developed and opened to the public by Louer & Louer (proper person's name), the lattice constants could not be determined. The method of analyzing the diffraction data by this free program is performed by a so-called carpet bombing manner in a certain volume.

As a result, according to the lattice constant determination process P1 of this embodiment, the analysis can be achieved and the solution can be obtained in all cases, including Pd(tmdt)₂, from which the solution could not be obtained by the conventional program, "DICVOL". Also, in the above two examples, if the grouping of the parameters is not performed, even the HGA can not obtain the solution. If the local optimization operation is not performed, the success probability drops, or the cycle number (i.e., the number of alternation of the generations) necessary for the convergence is increased by double or more.

From the above comparison, it can be known that the excellent calculation result can be more clearly obtained, even in the lattice constant determination process P1, from the "program of estimating structure of materials" of this embodiment, than the simple GA or the conventional free program.

[Effects of Invention]

The "method of estimating structure of materials based on radiation diffraction data" or the "program of estimating structure of materials" according to the present invention has an effect of determining the structure of a specimen material from intensity distribution data of diffraction circles obtained by irradiating an X-ray to the powder specimen, even though it is difficult to make a single crystal from the material. Accordingly, by this method, the structure of medicines or new materials can be rapidly determined, and the development of new materials is highly accelerated, thereby making a great contribution to all kinds of industries or research and development of medicines.

Further, according to the "method of optimizing multiple parameters by hybrid GA", the "method of data analysis by pattern matching" or the "program of searching for an optimal set of multiple parameters" of the present invention, the considerably powerful wide area searching capability and the precise optimization capability are shown in a multi-dimensional space with multi-peak features. That is, according to the programs or the computer equipped therewith of the present invention, a larger number of parameters can be more precisely and efficiently optimized, determined or estimated than a prior art, by the pattern matching with respect to measured data. As a result, the optimal value determination or the determination based on data analysis can be achieved, which has not yet been realized due to a too small amount of information included in the measured data, a too large number of parameters to be estimated, or excessively high precision required for the optimization of a plurality of parameters.

[Industrial Applicability]

(Research and Development of New Materials)

Since the "method of estimating structure of materials based on radiation diffraction data" according to the present invention, as described above, has remarkably enhanced capability of determining the structure of materials from radiation diffraction circles, the method is applicable to various industrial fields, such as material design, medicine development, nanotechnology, liquid crystal technology, etc. The "hybrid GA" as the core technical features of the present invention is applicable to wider industrial fields, as described below.

(Data Analysis)

The "method of optimizing multiple parameters by hybrid GA", the "program of searching for an optimal set of multiple parameters" or the "method of data analysis by pattern matching" according to the present invention, as described above, is applicable to a technology of analyzing measured data and a design technology of conducting an optimal design. **[0498]** A representative analysis technology of measured data by data matching, like the above-described embodiment, is to precisely estimate or determine a plurality of physical quantities. Further, the analysis technology is applicable to very wide fields, such as sound analysis of a sonar, reflective image analysis of a radar, crustal structure analysis or vein exploration by seismic wave propagation, etc.

(Optimal Design)

By using the present invention as a resolver for solving inverse problems, the present invention is applicable to a design technology (optimization of design parameters) to search for an optimal or proper set of multiple design parameters. As such optimal design technical fields, for example, there are a wing shape design of an aircraft, a plane structure design including a main wing, an optimal design of a multi-stage rocket, an optimal design of a communication network, an orbit design of a spacecraft such as a rocket or an artificial satellite, an optimal aircraft route problem considering an airport noise problem, etc.
In order to easily understand the inverse problem or the resolver, a wing shape design will be exemplified. The inverse problem in the wing shape design is not a forward direction problem of finding a two-dimensional air flow and finding features of the given shape of a wing placed in the air flow, but is a problem of designing an optimal shape of the wing in order to show a desired aerodynamic characteristics. In order to solve this problem, first, the wing is formed in an appropriate initial shape. A flow field around the wing is calculated, and the shape of the wing is modified so as to approximate the desired aerodynamic characteristics. Through the repetition of such trials and errors, the shape of the wing is gradually modified toward the optimal shape. A calculation means for finding a solution by performing the above calculation is called a resolver of the inverse problem.
Because the shape of wing is changed and modified over and again until the most preferable shape of the wing is obtained to show the desired aerodynamic characteristics, the amount of calculation becomes enormous. Therefore, in such an inverse problem, if the setting of the problem is not proper or if the capability of the resolver is not sufficient, the shape of the wing as a solution satisfying the conditions cannot be obtained due to enormous cost or time in practice. Accordingly, if the "program of searching for an optimal set of multiple parameters" according to the present invention is used as the resolver of such an inverse problem, since remarkable capability improvement of the resolver can be anticipated, there is possibility of solving the inverse problem that has not yet been solved within a practical range. As a result, the technology of the present invention can make a contribution to the development of the optimal design technical fields.

(Optimal Management Problem)

The hybrid GA as a core of the present invention has an effect of optimizing a plurality of parameters and drastically decreasing a calculation load, irrespective of whether the parameters correspond to physical quantities or not.
Although there are many difficulties to overcome, such as modeling of a phenomenon or fitness setting, the "program of searching for an optimal set of multiple parameters" according to the present invention has possibility to be applicable to an optimal management problem having very many parameters to be adjusted. The optimal management problem described herein, for example, is a kind of optimal design problem of how to distribute all management resources of a company or how to distribute all resources of a country.

(Artificial Intelligence)

According to the technology of the present invention, for the same reasons as above, since a processing speed of the GA as one field of artificial intelligence (AI) can be increased and a convergence time or a learning time can be reduced, there is possibility that a new practical range is opened to the GA as artificial intelligence.

For example, there is a space exploration mission that a space probe flies by or wings by several planets so as to collect an orbit energy by using gravity of the planets and to successively observe the planets or satellites thereof while changing orbital elements. However, in many cases, the orbit design requires very many trials and errors, and exacts inhuman efforts from researchers. In this regard, there has been an idea that searching for optimal parameters are performed by artificial intelligence using the GA and the orbit design is automatically achieved. The present invention has possibility to easily achieve the mission design by saving the searching time. Specifically, in a mission of successively observing the satellites of the planets, because the space probe is influenced by the gravity of the satellites and has many constraints, there may be many difficulties in the orbit design. Therefore, it is anticipated that a mission which can be designed for the first time by the present invention will occur.

Further, the HGA according to the present invention has possibility to be an effective means for solving a problem that has not yet been solved in practice due to increase in parameters caused by complication of a model representing a situation or due to restriction by a calculation time while the parameters can be theoretically calculated by the GA. As fields of application of the HGA of the present invention, for example, there are a weather forecast, a stock price forecast, etc. If it takes a calculation time of one month to forecast the matters expected to happen in a week, it is not helpful. However, if it takes one hour to forecast the matters expected to happen in a week, it is very helpful.

(Conclusion)

According to the hybrid GA of the present invention, since the powerful wide area searching capability can be shown even in a wide parameter space with strong multi-peak properties, the present invention can solve a problem which has not yet been solved by prior art 1 or prior art 2. As a result, the present invention can be used for the determination of structure of materials by X-ray diffraction of a powder specimen and also can be used in very wide industrial fields. Moreover, the present invention can be a powerful optimal value searching tool in various fields.

While the invention has been shown and described with respect to the preferred embodiments, it will be understood by those skilled in the art that various changes and modifications may be made without departing from the spirit and scope of the invention as defined in the following claims.

**Claims**

1. A method of optimizing multiple parameters by Hybrid GA (Genetic Algorithm),
   which is a kind of GA to search for an appropriate combination of a plurality of parameters at least some of which are corresponding to a predetermined set of physical quantities,
   wherein the parameters are encoded to form at least a part of a code string in each individual,
   the GA starts with an initial generation which population includes a plurality of the individuals that stands for the parameters distributed moderately,
   in every generation, the GA repeats:

   an Evaluation process at least to evaluate fitness of newborn individuals which are newly generated among the population in the generation concerned;
   a Crossover process to generate new individuals as offspring by performing crossing-over between the plurality of individuals as parents among the population; and
   a Selection process to select a plurality of the proper individuals which should be left as survivals in the next generation and to weed out the other individuals,
   also the GA repeats a Mutation process to change a part of some of the individuals occasionally among the generations,
   expecting some individuals with better fitness are generated while alternation of the generations is repeated in order to search for the optimum combination of the plurality of the parameters,

**characterized in that** the GA is Hybrid GA, further comprising a Local optimization process in which local optimization operation is given to at least one selected from:

one specific individual or more as at least a part of the population in a plurality of specific generations as a part among all generations; and
one specific individual or more as a part of the population in a plurality of specific generations as at least a part among the all generations.

2. The method of optimizing multiple parameters by Hybrid GA according to claim 1,
wherein the Local optimization process is a process for giving the local optimization operation to the specific individual or more as a part of the population in the plurality of specific generations as at least a part among the all generations.

3. The method of optimizing multiple parameters by Hybrid GA according to claim 1,
wherein the local optimization operation is given to only one specific individual among the population in the specific generation concerned.

4. The method of optimizing multiple parameters by Hybrid GA according to claim 1,
wherein the Local optimization process is performed in the specific generations which lie scattered among at least a part of the all generations.

5. The method of optimizing multiple parameters by Hybrid GA according to claim 1,
wherein frequency of occurrence of the specific generation increases as the generation goes down.

6. The method of optimizing multiple parameters by Hybrid GA according to claim 1,
wherein the specific generation occurs periodically in every certain number of generations at least a latter part of the all generations.

7. The method of optimizing multiple parameters by Hybrid GA according to claim 1,
wherein the specific individual or more can be appointed from the individuals with comparatively low fitness among the population of the generation concerned.

8. The method of optimizing multiple parameters by Hybrid GA according to claim 7,
wherein the individual or more can be appointed from an Inferior group which is a group consists of the plurality of individuals with comparatively low fitness among the population of the specific generation concerned.

9. The method of optimizing multiple parameters by Hybrid GA according to claim 8,
wherein the Inferior group consists of the plurality of individuals, each individual belongs to at least one selected from a predetermined number and a predetermined percentage of the individuals with the lower fitness among the population concerned.

10. The method of optimizing multiple parameters by Hybrid GA according to claim 8,
wherein the specific individual or more are appointed from the Inferior group by one of Roulette wheel selection and Random selection.

11. The method of optimizing multiple parameters by Hybrid GA according to claim 1,
wherein the Local optimization process is a process of appointing the specific individual or more as a part of the population in the specific generation concerned in order to give the local optimization operation on each specific individual,
the Local optimization process shows a tendency of Weak priority to appoint each specific individual with lower fitness in a higher probability.

12. The method of optimizing multiple parameters by Hybrid GA according to claim 1,
wherein the Selection process adopts a Selection strategy in which even the individuals with comparatively low fitness among the population in the generation concerned have possibility to survive in the next generation thereof.

13. The method of optimizing multiple parameters by Hybrid GA according to claim 1,
wherein a Selection strategy is a rule of selection adopted in the Selection process, the Selection strategy is selected from:

a Random strategy to select each individual at random regardless of its fitness;
an Inverted elite strategy to give higher priority to select each individual with comparatively low fitness;
an Inverted roulette wheel strategy in which each individual with comparatively low fitness is selected in higher probability; and
any one of an Inverted expectation value selection, an Inverted ranking selection and an Inverted tournament selection, wherein higher priority is given to each individual with comparatively low fitness to be selected.

14. The method of optimizing multiple parameters by Hybrid GA according to at least one selected from claim 12 and claim 13,
wherein a top individual is an individual who has the best fitness among the population in the generation concerned,
a Top preservation strategy is also used with the Selection strategy in alternation of generations in order to make the top individual survive without fail into the next generation thereof.

15. A method of optimizing multiple parameters by Hybrid GA,
which is a kind of GA (Genetic Algorithm) to optimize a plurality of parameters at least some of which are corresponding to predetermined physical quantities, wherein the parameters are encoded into each individual as a member of population of each generation,
the GA starts with an initial generation in which these parameters are distributed for some variety among the population thereof, and repeats alternation of the generations under certain rules to generate the individuals with higher fitness while the generation descends in order to optimize the multiple parameters,
**characterized in that** local optimization operation is given to at least one selected from:

one specific individual or more as at least a part of the population in a plurality of specific generations as a part among all generations; and
one specific individual or more as a part of the population in a plurality of specific generations as at least a part among the all generations.

16. A method of analyzing data by pattern matching,
which belongs to the "Method of optimizing multiple parameters by Hybrid GA" as described in any one of claims 1 to 15,
wherein the fitness of each individual is an index which shows how much a pattern of the assumed data agrees with the pattern of actual measurement data,
and the pattern of the assumed data is provided by an arithmetic operation based on an assumption of the physical quantity corresponding to the plurality of parameters encoded in the individual code concerned,
then, the actual measurement data is analyzed by performing a pattern matching between the assumed data of the individual concerned and the actual measurement data, for the purpose of estimating the physical quantities by generating an individual or more with higher fitness.

17. A method of estimating structure of materials based on radiation diffraction data,
**characterized in that**:

the "Method for optimizing a plurality of parameters by Hybrid GA" as described in any one of claims 1 to 15 are applied to the concerned method of estimating material structure of predetermined specimen material based on the diffraction pattern formed by radiation irradiated to the specimen material,

wherein at least some of the physical quantities are structural parameters which determine the structure of the specimen,
and the fitness of each individual stands for an index showing how much a diffraction pattern to be generated if the specimen had a structure following to these structural parameters decoded from the individual concerned agree with the diffraction pattern which is measured actually.

18. A method of estimating structure of materials based on radiation diffraction data according to claim 17,
wherein the structural parameters are at least one selected from:

lattice constants which define the crystal structures of the specimen material;
structural parameters of a molecule which define the three-dimensional atomic arrangement in the molecule of the specimen material;
distribution parameters of electron density which define the probabilistic distribution of electron density in the molecule; and
crystallographic structural parameters which define the three-dimensional atomic arrangement in a crystal or crystals of the specimen material.

**19.** A method of estimating structure of materials based on radiation diffraction data according to claim 17, wherein the diffraction pattern is diffraction circles, i.e., a set of concentric circles of the diffraction intensity.

**20.** A method of estimating structure of materials based on radiation diffraction data according to claim 19, wherein the fitness is an evaluation function which shows how much an assumed data agree with measured data which is actually measured diffraction intensity distribution along a radius line of the diffraction circles, on the other hand, the assumed data is generated based on the structure parameters assumed and decoded from the individual concerned.

**21.** A method of estimating structure of materials based on radiation diffraction data, in which GA (Genetic Algorithm) is used as an algorithm to determine the structure of a specimen material which is at least one of a powder specimen including multiple crystals, a polycrystalline specimen as polycrystalline aggregation, an amorphous specimen and a solution specimen, in order to estimate some structure parameters which show the structure of the specimen materials by data matching based on diffraction data indicating intensity distribution of the diffraction circles provided from radiation diffracted by the specimen material, and the GA starts with a Genesis process in which multiple individuals are generated with certain diversity for population of an initial generation, wherein every individual includes the structure parameters encoded, then, the GA runs repeatedly a Digenesis process which comprises crossover of these individuals, replication of the same, selection of the same with fitness evaluation by the data matching, and stochastic occurrence of mutation, **characterized in that** the GA gives a local optimization operation to an individual or more as a part of a population concerned in a plurality of generations while the Digenesis process are made repeatedly, and **in that** among the population concerned, the individuals with comparatively low fitness have possibility to be objects of the local optimization operation.

**22.** A method of estimating structure of materials based on radiation diffraction data, which is a method for estimating material structure based on radiation diffraction data as intensity distribution of the diffraction circles measured from a specimen material irradiated with certain radiation, in order to determine the material structure of the specimen which agrees with the distribution intensity data, **characterized in that**, among the following process group made of:

a Lattice constants determination process which is to determine a set of lattice constants of the crystals in the specimen material;
a Background scattering elimination process which is to eliminate influence of background scattering from the distribution intensity data, or to decrease the same;
a Space group narrowing-down process which is to narrow down the candidates of a space group which the crystals belong to;
a Basic structure determination process which is to determine basic structure as in the primary stage, in order to identify the space group; and
a Structure refinement process which is to refine the basic structure, in order to determine more precisely the structure of the material constituting the crystals;
the method concerned includes at least the Lattice constants determination process, the Space group narrowing-down process and the Basic structure determination process,

wherein structure determination of materials is made by Hybrid GA which is a sort of GA (Genetic Algorithm) combined with local optimization operation in at least one of the Lattice constants determination process and the Basic structure determination process,
further **characterized in that** the local optimization operation takes place on a specific individual or more as a part of each population in multiple specific generations along alternation of generations in the Hybrid GA,
and the specific individual or individuals can be chosen from an Inferior group whose members are multiple individuals with relatively low fitness among the population in the generation concerned, wherein fitness shows how much an individual concerned agrees with measured data.

**23.** A computer-executable program of searching for an optimal set of multiple parameters,
which is a computer program for a certain computer to perform a function of searching for an appropriate set of multiple parameters corresponding to a plurality of predetermined physical quantities,
in order to perform the "Method of optimizing multiple parameters by Hybrid GA" set forth in any one of claims 1 to 14, comprising:

a step of setting an initial generation wherein the population of the initial generation is generated or read in; and a plurality of calculation steps, including a step of evaluation, a step of selection, a step of crossover, a step of mutation and a step of local optimization, corresponding with the Evaluation process, the Selection process, the Crossover process, the Mutation process and the Local optimization process described in the claim concerned.

**24.** A computer-executable program of searching for an optimal set of multiple parameters,
which is a computer program for a certain computer to perform a function of searching for an appropriate set of multiple parameters corresponding to a plurality of predetermined physical quantities,
wherein the program includes a kind of GA (Genetic Algorithm) to optimize a plurality of parameters at least some of which are corresponding to predetermined physical quantities, and the parameters are encoded into each individual as a member of population of each generation,
the GA starts with an initial generation in which these parameters are distributed for some variety, and repeats alternation of the generations under certain rules to generate the individuals with higher fitness while the generation descends in order to optimize the multiple parameters,
**characterized in that** the GA is incorporated with a local optimization step which gives local optimization operation to one specific individual or more to improve fitness thereof, wherein the local optimization step is a step of calculation applied to at least one selected from:

one specific individual or more as at least a part of the population in a plurality of specific generations as a part among all generations made under the GA; and
one specific individual or more as a part of the population in a plurality of specific generations as at least a part among all generations made under the GA.

**25.** A computer-executable program of searching for an optimal set of multiple parameters,
which is a computer program for a certain computer to perform a function of searching for an appropriate set of multiple parameters,
wherein the program contains GA (Genetic Algorithm) which is to optimize the multiple parameters by generating some individuals with higher fitness while alternation of generations is repeated under certain rule, and the parameters are encoded into each individual of population in every generation, then the GA starts with an initial generation whose population contains individuals corresponding to the parameters distributed with some diversity,
**characterized in that** the GA is incorporated with a local optimization step which gives local optimization operation to one specific individual or more in order to improve fitness thereof, wherein the local optimization step is a step of calculation applied to at least one selected from:

one specific individual or more as at least a part of the population in a plurality of specific generations as a part among all generations; and
one specific individual or more as a part of the population in a plurality of specific generations as at least a part among all generations.

**26.** A computer-executable program of estimating structure of materials based on radiation diffraction data,
which is a computer program for a certain computer to perform a function of estimating material structure of predetermined specimen material based on the diffraction pattern formed by radiation irradiated to the specimen,
**characterized in that** the program comprises:

a step of measured data reading-in to read measured data of the diffraction pattern numerically into the computer; and
the step of setting an initial generation, the step of evaluation, the step of selection, the step of crossover, the step of mutation and the step of local optimization as described in the "A computer-executable program of searching for an optimal set of multiple parameters" set forth in claim 23,

wherein the fitness is an index which shows how much an expected pattern of the assumed data agrees with a pattern of measurement data, wherein the expected pattern is calculated based on supposed structure parameters corresponding to the code of each individual concerned.

**27.** A computer-executable program of estimating structure of materials based on radiation diffraction data,
which is a computer program for a certain computer to perform a function of estimating structure parameters defining material structure of predetermined specimen material based on measured diffraction pattern formed by radiation irradiated to the specimen,
wherein the program includes GA (Genetic Algorithm), in which each of multiple individuals forming population of every generation contains code corresponding to the structure parameters, and fitness of each individual is an index which shows how much expected diffraction pattern calculated from these structure parameters of the individual concerned agrees with the measured diffraction pattern,
the GA has a step of generating population of an initial generation which contains the individuals, wherein each element of the structure parameters corresponding to the individuals are diverted to some extent,
starting with the population of the initial generation, the GA repeats alternation of generation according to a certain sequence including steps of selection, steps of crossover and steps of mutation in order to optimize the structure parameters in the expectation that some individuals with higher fitness are generated among the population in generation concerned,
**characterized in that** the GA is incorporated with a local optimization step which gives local optimization operation to one specific individual or more to improve fitness thereof, wherein the local optimization step is a step of calculation applied to at least one selected from:

one specific individual or more as at least a part of the population in a plurality of specific generations as a part among all generations made under the GA; and
one specific individual or more as a part of the population in a plurality of specific generations as at least a part among all generations made under the GA.

**28.** A computer-readable recording medium,
**characterized in that** the medium contains at least one selected from:

"A computer-executable program of searching for an optimal set of multiple parameters" set forth in any one of claims 23 to 25; and
"A computer-executable program of estimating structure of materials based on radiation diffraction data" set forth in any one of claims 26 to 27.

**29.** A computer equipped with Hybrid GA,
**characterized in that** the computer is installed with at least one selected from:

"A computer-executable program of searching for an optimal set of multiple parameters" set forth in any one of claims 23 to 25; and
"A computer-executable program of estimating structure of materials based on radiation diffraction data" set forth in any one of claims 26 to 27.

**30.** An analyzing apparatus equipped with Hybrid GA,
**characterized in that** the apparatus is able to execute at least one selected from:

"A computer-executable program of searching for an optimal set of multiple parameters" set forth in any one of claims 23 to 25; and
"A computer-executable program of estimating structure of materials based on radiation diffraction data" set forth in any one of claims 26 to 27.

**31.** An apparatus for estimating structure of materials based on radiation diffraction pattern, comprising:

a measurement apparatus which irradiate a certain specimen material in order to measure radiation diffraction pattern thereof; and
one selected from the computer set forth in claim 29 and the analyzing apparatus set forth in claim 30, which makes analysis based on measured data obtained from the diffraction pattern to estimate the structure of the specimen material.

**Amended claims under Art. 19.1 PCT**

**1.** (Amended) A method of optimizing multiple parameters by Hybrid GA (Genetic Algorithm),
which is a kind of GA to search for an appropriate combination of a plurality of parameters at least some of which are corresponding to a predetermined set of physical quantities,
wherein the parameters are encoded to form at least a part of a code string in each individual,
the GA starts with an initial generation which population includes a plurality of the individuals that stands for the parameters distributed moderately,
in every generation, the GA repeats:

an Evaluation process at least to evaluate fitness of newborn individuals which are newly generated among the population in the generation concerned;
a Crossover process to generate new individuals as offspring by performing crossing-over between the plurality of individuals as parents among the population; and
a Selection process to select a plurality of the proper individuals which should be left as survivals in the next generation and to weed out the other individuals,
also the GA repeats a Mutation process to change a part of some of the individuals occasionally among the generations,
expecting some individuals with better fitness are generated while alternation of the generations is repeated in order to search for the optimum combination of the plurality of the parameters,

**characterized in that** the GA is Hybrid GA, further comprising a Local optimization process in which local optimization operation is given to one specific individual or more as a part of the population in a plurality of specific generations as at least a part among the all generations.

**2.** (Amended) The method of optimizing multiple parameters by Hybrid GA according to claim 1,
wherein the Local optimization process is a process for giving the local optimization operation to the specific individual or more in the plurality of specific generations as at least a part among the all generations.

**3.** The method of optimizing multiple parameters by Hybrid GA according to claim 1,
wherein the local optimization operation is given to only one specific individual among the population in the specific generation concerned.

**4.** The method of optimizing multiple parameters by Hybrid GA according to claim 1,
wherein the Local optimization process is performed in the specific generations which lie scattered among at least a part of the all generations.

**5.** The method of optimizing multiple parameters by Hybrid GA according to claim 1,
wherein frequency of occurrence of the specific generation increases as the generation goes down.

**6.** The method of optimizing multiple parameters by Hybrid GA according to claim 1,
wherein the specific generation occurs periodically in every certain number of generations at least a latter part of the all generations.

**7.** The method of optimizing multiple parameters by Hybrid GA according to claim 1,
wherein the specific individual or more can be appointed from the individuals with comparatively low fitness among the population of the generation concerned.

**8.** The method of optimizing multiple parameters by Hybrid GA according to claim 7,
wherein the individual or more can be appointed from an Inferior group which is a group consists of the plurality of individuals with comparatively low fitness among the population of the specific generation concerned.

**9.** The method of optimizing multiple parameters by Hybrid GA according to claim 8,
wherein the Inferior group consists of the plurality of individuals, each individual belongs to at least one selected from a predetermined number and a predetermined percentage of the individuals with the lower fitness among the population concerned.

**10.** The method of optimizing multiple parameters by Hybrid GA according to claim 8,

wherein the specific individual or more are appointed from the Inferior group by one of Roulette wheel selection and Random selection.

**11.** The method of optimizing multiple parameters by Hybrid GA according to claim 1,
wherein the Local optimization process is a process of appointing the specific individual or more as a part of the population in the specific generation concerned in order to give the local optimization operation on each specific individual,
the Local optimization process shows a tendency of Weak priority to appoint each specific individual with lower fitness in a higher probability.

**12.** The method of optimizing multiple parameters by Hybrid GA according to claim 1,
wherein the Selection process adopts a Selection strategy in which even the individuals with comparatively low fitness among the population in the generation concerned have possibility to survive in the next generation thereof.

**13.** The method of optimizing multiple parameters by Hybrid GA according to claim 1,
wherein a Selection strategy is a rule of selection adopted in the Selection process, the Selection strategy is selected from:

a Random strategy to select each individual at random regardless of its fitness;
an Inverted elite strategy to give higher priority to select each individual with comparatively low fitness;
an Inverted roulette wheel strategy in which each individual with comparatively low fitness is selected in higher probability; and
any one of an Inverted expectation value selection, an Inverted ranking selection and an Inverted tournament selection, wherein higher priority is given to each individual with comparatively low fitness to be selected.

**14.** The method of optimizing multiple parameters by Hybrid GA according to at least one selected from claim 12 and claim 13,
wherein a top individual is an individual who has the best fitness among the population in the generation concerned,
a Top preservation strategy is also used with the Selection strategy in alternation of generations in order to make the top individual survive without fail into the next generation thereof.

**15.** (Amended) A method of optimizing multiple parameters by Hybrid GA,
which is a kind of GA (Genetic Algorithm) to optimize a plurality of parameters at least some of which are corresponding to predetermined physical quantities, wherein the parameters are encoded into each individual as a member of population of each generation,
the GA starts with an initial generation in which these parameters are distributed for some variety among the population thereof, and repeats alternation of the generations under certain rules to generate the individuals with higher fitness while the generation descends in order to optimize the multiple parameters,
**characterized in that** local optimization operation is given to one specific individual or more as a part of the population in a plurality of specific generations as at least a part among the all generations.

**16.** A method of analyzing data by pattern matching,
which belongs to the "Method of optimizing multiple parameters by Hybrid GA" as described in any one of claims 1 to 15,
wherein the fitness of each individual is an index which shows how much a pattern of the assumed data agrees with the pattern of actual measurement data,
and the pattern of the assumed data is provided by an arithmetic operation based on an assumption of the physical quantity corresponding to the plurality of parameters encoded in the individual code concerned,
then, the actual measurement data is analyzed by performing a pattern matching between the assumed data of the individual concerned and the actual measurement data, for the purpose of estimating the physical quantities by generating an individual or more with higher fitness.

**17.** A method of estimating structure of materials based on radiation diffraction data,
**characterized in that**:

the "Method for optimizing a plurality of parameters by Hybrid GA" as described in any one of claims 1 to 15 are applied to the concerned method of estimating material structure of predetermined specimen material based on the diffraction pattern formed by radiation irradiated to the specimen material,

wherein at least some of the physical quantities are structural parameters which determine the structure of the specimen,

and the fitness of each individual stands for an index showing how much a diffraction pattern to be generated if the specimen had a structure following to these structural parameters decoded from the individual concerned agree with the diffraction pattern which is measured actually.

**18.** A method of estimating structure of materials based on radiation diffraction data according to claim 17, wherein the structural parameters are at least one selected from:

lattice constants which define the crystal structures of the specimen material;
structural parameters of a molecule which define the three-dimensional atomic arrangement in the molecule of the specimen material;
distribution parameters of electron density which define the probabilistic distribution of electron density in the molecule; and
crystallographic structural parameters which define the three-dimensional atomic arrangement in a crystal or crystals of the specimen material.

**19.** A method of estimating structure of materials based on radiation diffraction data according to claim 17, wherein the diffraction pattern is diffraction circles, i.e., a set of concentric circles of the diffraction intensity.

**20.** A method of estimating structure of materials based on radiation diffraction data according to claim 19, wherein the fitness is an evaluation function which shows how much an assumed data agree with measured data which is actually measured diffraction intensity distribution along a radius line of the diffraction circles, on the other hand, the assumed data is generated based on the structure parameters assumed and decoded from the individual concerned.

**21.** A method of estimating structure of materials based on radiation diffraction data, in which GA (Genetic Algorithm) is used as an algorithm to determine the structure of a specimen material which is at least one of a powder specimen including multiple crystals, a polycrystalline specimen as polycrystalline aggregation, an amorphous specimen and a solution specimen, in order to estimate some structure parameters which show the structure of the specimen materials by data matching based on diffraction data indicating intensity distribution of the diffraction circles provided from radiation diffracted by the specimen material, and the GA starts with a Genesis process in which multiple individuals are generated with certain diversity for population of an initial generation, wherein every individual includes the structure parameters encoded, then, the GA runs repeatedly a Digenesis process which comprises crossover of these individuals, replication of the same, selection of the same with fitness evaluation by the data matching, and stochastic occurrence of mutation, **characterized in that** the GA gives a local optimization operation to an individual or more as a part of a population concerned in a plurality of generations while the Digenesis process are made repeatedly, and **in that** among the population concerned, the individuals with comparatively low fitness have possibility to be objects of the local optimization operation.

**22.** A method of estimating structure of materials based on radiation diffraction data, which is a method for estimating material structure based on radiation diffraction data as intensity distribution of the diffraction circles measured from a specimen material irradiated with certain radiation, in order to determine the material structure of the specimen which agrees with the distribution intensity data, **characterized in that**, among the following process group made of:

a Lattice constants determination process which is to determine a set of lattice constants of the crystals in the specimen material;
a Background scattering elimination process which is to eliminate influence of background scattering from the distribution intensity data, or to decrease the same;
a Space group narrowing-down process which is to narrow down the candidates of a space group which the crystals belong to;
a Basic structure determination process which is to determine basic structure as in the primary stage, in order to identify the space group; and

a Structure refinement process which is to refine the basic structure, in order to determine more precisely the structure of the material constituting the crystals;
the method concerned includes at least the Lattice constants determination process, the Space group narrowing-down process and the Basic structure determination process,

wherein structure determination of materials is made by Hybrid GA which is a sort of GA (Genetic Algorithm) combined with local optimization operation in at least one of the Lattice constants determination process and the Basic structure determination process,
further **characterized in that** the local optimization operation takes place on a specific individual or more as a part of each population in multiple specific generations along alternation of generations in the Hybrid GA,
and the specific individual or individuals can be chosen from an Inferior group whose members are multiple individuals with relatively low fitness among the population in the generation concerned, wherein fitness shows how much an individual concerned agrees with measured data.

**23.** A computer-executable program of searching for an optimal set of multiple parameters,
which is a computer program for a certain computer to perform a function of searching for an appropriate set of multiple parameters corresponding to a plurality of predetermined physical quantities,
in order to perform the "Method of optimizing multiple parameters by Hybrid GA" set forth in any one of claims 1 to 14, comprising:

a step of setting an initial generation wherein the population of the initial generation is generated or read in; and
a plurality of calculation steps, including a step of evaluation, a step of selection, a step of crossover, a step of mutation and a step of local optimization, corresponding with the Evaluation process, the Selection process, the Crossover process, the Mutation process and the Local optimization process described in the claim concerned.

**24.** Amended) A computer-executable program of searching for an optimal set of multiple parameters,
which is a computer program for a certain computer to perform a function of searching for an appropriate set of multiple parameters corresponding to a plurality of predetermined physical quantities,
wherein the program includes a kind of GA (Genetic Algorithm) to optimize a plurality of parameters at least some of which are corresponding to predetermined physical quantities, and the parameters are encoded into each individual as a member of population of each generation,
the GA starts with an initial generation in which these parameters are distributed for some variety, and repeats alternation of the generations under certain rules to generate the individuals with higher fitness while the generation descends in order to optimize the multiple parameters,
**characterized in that** the GA is incorporated with a local optimization step which gives local optimization operation to one specific individual or more to improve fitness thereof, wherein the local optimization step is a step of calculation applied to one specific individual or more as a part of the population in a plurality of specific generations as at least a part among all generations made under the GA.

**25.** Amended) A computer-executable program of searching for an optimal set of multiple parameters,
which is a computer program for a certain computer to perform a function of searching for an appropriate set of multiple parameters,
wherein the program contains GA (Genetic Algorithm) which is to optimize the multiple parameters by generating some individuals with higher fitness while alternation of generations is repeated under certain rule, and the parameters are encoded into each individual of population in every generation, then the GA starts with an initial generation whose population contains individuals corresponding to the parameters distributed with some diversity,
**characterized in that** the GA is incorporated with a local optimization step which gives local optimization operation to one specific individual or more in order to improve fitness thereof, wherein the local optimization step is a step of calculation applied to one specific individual or more as a part of the population in a plurality of specific generations as at least a part among all generations.

**26.** A computer-executable program of estimating structure of materials based on radiation diffraction data,
which is a computer program for a certain computer to perform a function of estimating material structure of predetermined specimen material based on the diffraction pattern formed by radiation irradiated to the specimen,
**characterized in that** the program comprises:

a step of measured data reading-in to read measured data of the diffraction pattern numerically into the computer;

and

the step of setting an initial generation, the step of evaluation, the step of selection, the step of crossover, the step of mutation and the step of local optimization as described in the "A computer-executable program of searching for an optimal set of multiple parameters" set forth in claim 23,

wherein the fitness is an index which shows how much an expected pattern of the assumed data agrees with a pattern of measurement data, wherein the expected pattern is calculated based on supposed structure parameters corresponding to the code of each individual concerned.

**27.** Amended) A computer-executable program of estimating structure of materials based on radiation diffraction data, which is a computer program for a certain computer to perform a function of estimating structure parameters defining material structure of predetermined specimen material based on measured diffraction pattern formed by radiation irradiated to the specimen,
wherein the program includes GA (Genetic Algorithm), in which each of multiple individuals forming population of every generation contains code corresponding to the structure parameters, and fitness of each individual is an index which shows how much expected diffraction pattern calculated from these structure parameters of the individual concerned agrees with the measured diffraction pattern,
the GA has a step of generating population of an initial generation which contains the individuals,
wherein each element of the structure parameters corresponding to the individuals are diverted to some extent,
starting with the population of the initial generation, the GA repeats alternation of generation according to a certain sequence including steps of selection, steps of crossover and steps of mutation in order to optimize the structure parameters in the expectation that some individuals with higher fitness are generated among the population in generation concerned,
**characterized in that** the GA is incorporated with a local optimization step which gives local optimization operation to one specific individual or more to improve fitness thereof, wherein the local optimization step is a step of calculation applied to one specific individual or more as a part of the population in a plurality of specific generations as at least a part among all generations made under the GA.

**28.** A computer-readable recording medium,
**characterized in that** the medium contains at least one selected from:

"A computer-executable program of searching for an optimal set of multiple parameters" set forth in any one of claims 23 to 25; and
"A computer-executable program of estimating structure of materials based on radiation diffraction data" set forth in any one of claims 26 to 27.

**29.** A computer equipped with Hybrid GA,
**characterized in that** the computer is installed with at least one selected from:

"A computer-executable program of searching for an optimal set of multiple parameters" set forth in any one of claims 23 to 25; and
"A computer-executable program of estimating structure of materials based on radiation diffraction data" set forth in any one of claims 26 to 27.

**30.** An analyzing apparatus equipped with Hybrid GA,
**characterized in that** the apparatus is able to execute at least one selected from:

"A computer-executable program of searching for an optimal set of multiple parameters" set forth in any one of claims 23 to 25; and
"A computer-executable program of estimating structure of materials based on radiation diffraction data" set forth in any one of claims 26 to 27.

**31.** An apparatus for estimating structure of materials based on radiation diffraction pattern, comprising:

a measurement apparatus which irradiate a certain specimen material in order to measure radiation diffraction pattern thereof; and
one selected from the computer set forth in claim 29 and the analyzing apparatus set forth in claim 30, which makes analysis based on measured data obtained from the diffraction pattern to estimate the structure of the

specimen material.

# FIG.1

(a)

DIFFRACTION X-RAY

SINGLE CRYSTAL SPECIMEN

DIFFRACTION ANGLE

INCIDENT X-RAY

$\theta$  $2\theta$

$\theta$

LATTICE PLANE(hkl)

SINGLE CRYSTAL

(b)

DIFFRACTION X-RAY

$2\theta$

INCIDENT X-RAY

POWDER SPECIMEN
(IN GLASS CAPILLARY)

POWDER CRYSTAL

# FIG.2

# FIG.3

# FIG.4

(a)

(b)

(c)

(d)

(e)

(f)

# FIG.5

AGREEMENT R

PRIOR ART 1

PRIOR ART 2

EMBODIMENT OF PRESENT INVENTION

TIME [SEC.]

# FIG.6

# FIG.7

```
        ┌─────────────────────────────────┐
        │    MEASURED DATA OF X-RAY       ╱──IN
        │    DIFFRACTION CIRCLES          │
        └─────────────────────────────────┘
                       │
                       ▼
        ┌─────────────────────────────────┐
        │  LATTICE CONSTANT DETERMINATION  │──P1
        └─────────────────────────────────┘
                       │
                       ▼
        ┌─────────────────────────────────┐
        │ BACKGROUND SCATTERING ELIMINATION │──P2
        └─────────────────────────────────┘
                       │
                       ▼
        ┌─────────────────────────────────┐
        │   SPACE GROUP NARROWING-DOWN     │──P3
        └─────────────────────────────────┘
                       │
                       ▼
        ┌─────────────────────────────────┐
        │  BASIC STRUCTURE DETERMINATION   │──P4
        └─────────────────────────────────┘
                       │
                       ▼
        ┌─────────────────────────────────┐
        │     STRUCTURE REFINEMENT         │──P5
        └─────────────────────────────────┘
                       │
                       ▼
        ┌─────────────────────────────────┐
        │    CRYSTAL STRUCTURE,           ╱──OUT
        │    3-D ATOMIC ARRANGEMENT        │
        └─────────────────────────────────┘
```

75

# FIG.8

# FIG.9

: Ni  : C
: S  : H

# FIG.10

# FIG.11

# FIG.12

DIFFRACTION INTENSITY [ARBITRARY UNIT]

2 θ [DEGREE]

# FIG.13

X-RAY INTENSITY

BACKGROUND

DIFFRACTION ANGLE 2 θ [DEGREE]

# FIG.14

# FIG.15

(a)

(b)

(c)

# FIG.16

# FIG.17

# FIG.18

X-RAY INTENSITY

$R_{wp}=1.1\%$

$R_I=3.4\%$

2 θ [DEGREE]

EP 1 962 234 A1

# FIG.19

```
        ┌──────────────────────────────┐
        │  GENERATION OF INDIVIDUALS   │──── S11
        │     OF FIRST GENERATION      │
        └──────────────┬───────────────┘
                       ▼
        ╱──────────────────────────────╲
        │   INDIVIDUALS OF Nth          │──── S102
        │       GENERATION              │◄──────────┐
        ╲──────────────────────────────╱           │
           │                    │                   │
           ▼                    ▼                    │
     ┌───────────┐        ┌───────────┐             │
S103─│ CROSSOVER │        │REPLICATION│──── S104     │
     └─────┬─────┘        └─────┬─────┘             │
           │                    │                    │
           └────────┬───────────┘                    │
                    ▼                                 │
            ┌───────────────┐                         │
            │   SELECTION   │──── S105                │
            └───────┬───────┘                         │
                    ▼                                 │
              ╱───────────╲  S106                     │
             ╱  DETERMINE   ╲                         │
        ╱ WHETHER TO BRING ABOUT ╲──No               │
             ╲  MUTATION?   ╱                         │
              ╲─────┬─────╱                           │
                    │ Yes                             │
                    ▼                                 │
            ┌───────────────┐                         │
            │   MUTATION    │                         │
            └───────┬───────┘                         │
     S108           │                                 │
                    ▼                                 │
              ╱───────────╲                           │
             ╱ OPTIMIZATION? ╲──No          S111      │
              ╲───────────╱                  │        │
                    │ Yes                     │        │
                    ▼                    ┌─────────┐   │
     S109  ┌──────────────────┐         │ N=N+1   │───┘
          │ LOCAL OPTIMIZATION│         └─────────┘
           └────────┬─────────┘               ▲
     S110           │                          │
                    ▼                          │
              ╱───────────╲                    │
             ╱  JUDGMENT    ╲────No─────────────┘
             ╲ ON SOLUTION  ╱
              ╲─────┬─────╱
                    │ Yes
                    ▼
        ╱──────────────────────────────╲
        │  STRUCTURAL PARAMETERS         │──── S12
        │(LATTICE CONSTANTS·BASIC STRUCTURE)│
        ╲──────────────────────────────╱
```

84

# FIG.20

TRICLINIC SYSTEM $(a,b,c,\alpha,\beta,\gamma)$
3 GROUPS $(a,b,\gamma),(b,c,\alpha),(a,c,\beta)$
MONOCLINIC SYSTEM $(a,b,c,\beta)$
3 GROUPS $(b,c),(a,b),(a,c,\beta)$

# FIG.21

(a)

PRESERVATION
OF LENGTHS OF (a, b, c)

(b)

HEXAHEDRON TOTALLY DIFFERENT FROM PARENTS

# FIG.22

|  | PARENT INDIVIDUALS | OFFSPRING INDIVIDUALS |
| (a) PATTERN 1 | | |
| (b) PATTERN 2 | | |
| (c) PATTERN 3 | | |

# FIG.23

|  | PARENT INDIVIDUALS | OFFSPRING INDIVIDUALS |
| (a) PATTERN 1 | | |
| (b) PATTERN 2 | | |
| (c) PATTERN 3 | | |

<table>
<tr><td colspan="2">**INTERNATIONAL SEARCH REPORT**</td><td colspan="2">International application No.<br>PCT/JP2006/324614</td></tr>
</table>

A.  CLASSIFICATION OF SUBJECT MATTER
*G06N3/00(2006.01)i, G01N23/20(2006.01)i*

According to International Patent Classification (IPC) or to both national classification and IPC

B.  FIELDS SEARCHED

Minimum documentation searched (classification system followed by classification symbols)
G06N3/00, G01N23/20

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 2005-190372 A  (Evolvable Systems Reseach Institute Inc.), | 1-7,12,15,<br>16,23-25,<br>28-30 |
| | 14 July, 2005 (14.07.05), | |
| Y | Par. Nos. [0022] to [0037]; Figs. 2, 5, 6 | 8-11,13,14,<br>17-21,26,27, |
| | & EP 1701299 A1        & WO 2005/064534 A1 | 31 |
| A | | 22 |
| X | JP 2003-248809 A  (Fujitsu Ltd.), | 1-7,12,15,<br>23-25,28-30 |
| | 05 September, 2003 (05.09.03), | |
| Y | Par. Nos. [0020] to [0051] | 8-11,13,14,<br>16-21,26,27, |
| | & US 6052678 A | 31 |
| A | | 22 |

| ☒ | Further documents are listed in the continuation of Box C. | ☐ | See patent family annex. |

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    07 March, 2007 (07.03.07) | Date of mailing of the international search report<br>    20 March, 2007 (20.03.07) |
|---|---|
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

| International application No. |
|---|
| PCT/JP2006/324614 |

C (Continuation).   DOCUMENTS CONSIDERED TO BE RELEVANT

| Category* | Citation of document, with indication, where appropriate, of the relevant passages | Relevant to claim No. |
|---|---|---|
| X<br><br>Y<br><br><br>A | JP 2003-219558 A  (Hitachi, Ltd.),<br>31 July, 2003 (31.07.03),<br>Par. Nos. [0032] to [0042]<br>(Family: none) | 1,3,7,12,15,<br>23-25,28-30<br>2,4-6,8-11,<br>13,14,16-21,<br>26,27,31<br>22 |
| Y<br>A | Shuhei OMURA et al., "Heiretsuka ni Tekishita<br>Identeki Local Search ni yoru Hisenkei Kansu<br>Saitekika", Transactions of the Society of<br>Instrument and Control Engineers, The Society<br>of Instrument and Control Engineers, 30 April,<br>2004 (30.04.04), Vol.40, No.4, pages 448 to<br>457, CSDB Bunken Bango: Kokunai Gakkai Ronbun,<br>200500457001 | 8-11<br>22 |
| Y | JP 2001-249953 A  (Canon Inc.),<br>14 September, 2001 (14.09.01),<br>Par. No. [0050]<br>(Family: none) | 13,14 |
| Y | Hiroyuki KAWANISHI et al., "Gyaku Elite Senryaku<br>o Mochiita Kairyo Identeki Algorithm", The<br>Transactions of the Institute of Electrical<br>Engineers of Japan C, The Institute of Electrical<br>Engineers of Japan, 01 May, 1998 (01.05.98),<br>Vol.118-C,No.5, pages 707 to 713, CSDB Bunken<br>Bango: Kokunai Gakkai Ronbun 199800677013 | 13,14 |
| Y<br><br>A | JP 2001-83106 A  (Rigaku Denki Co., Ltd.),<br>30 March, 2001 (30.03.01),<br>Par. Nos. [0002] to [0005], [0033] to [0038],<br>Figs. 1 to 3, 7<br>(Family: none) | 17-21,26,27,<br>31<br>22 |

Form PCT/ISA/210 (continuation of second sheet) (April 2005)

EP 1 962 234 A1

**INTERNATIONAL SEARCH REPORT**

| International application No. |
| --- |
| PCT/JP2006/324614 |

**Box No. II**     **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III**     **Observations where unity of invention is lacking (Continuation of item 3 of first sheet)**

This International Searching Authority found multiple inventions in this international application, as follows:
The matter common to the inventions according to claims 1 to 31 resides in having at least one of the following local optimization steps, i.e., conducting a local optimization procedure on specific individuals corresponding to at least a part of a plural number of specific generations corresponding to a part of the all generations, and conducting a local optimization procedure on specific individuals corresponding to a part of a plural number of specific generations corresponding to at least a part of the all generations. As the results of the search, however, it is clarified that this local optimization step is not novel because of having been already disclosed in a prior art document. (continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2005)

**INTERNATIONAL SEARCH REPORT**

International application No.

PCT/JP2006/324614

Continuation of Box No.III of continuation of first sheet(2)

Thus, this local optimization step falls within the category of prior art and, therefore, it cannot be considered as a special technical feature in the meaning within the second sentence of PCT Rule 13.2. That is, there is no matter common to all of the inventions according to claims 1 to 31 and no technical relevancy can be found out among these different inventions in the meaning within PCT Rule 13. Such being the case, it is clear that the inventions according to claims 1 to 31 do not comply with the requirement of unity of invention.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000086696 A
- JP 2001083106 A
- JP 2002071589 A
- JP 2003149180 A
- JP 2004037345 A
- JP 2005500844 A
- JP 2001117901 A
- JP 2003288579 A

### Non-patent literature cited in the description

- **FUJITA KIKUO ; AKAGI SHINSUKE ; HIROKAWA NORIYASU.** Approach for Optimal Nesting Using Genetic Algorithm and Local Minimization Algorithm. *Transactions of the Japan Society of Mechanical Engineers (C,* 1993, vol. 59 (564), 2576-2583
- **FUJITA KIKUO ; AKAGI SHINSUKE ; HIROKAWA NORIYASU.** Hybrid Approach for Optimal Nesting Using a Genetic Algorithm and a Local Minimization Algorithm. *Proceedings of the 1993 ASME Design Automation Conference,* September 1993, vol. 65-1, 477-484
- **HIROYASU TOMOYUKI.** Development and Parallization of Intelligent Optimization by Evolutionary Computation. *Doshisha University Academic Frontier, Intelligent Information Science (AFIIS) Symposium,* 2002, 2001
- **K. HARRIS ; R. JHONSTON ; B. KARIUKI.** *Acta Cryst.,* 1998, vol. A54, 632-645
- **G. TURNER ; E. TEDESCO ; K. HARRIS ; R. JHONSTON ; B. KARIUKI.** Implementation of Lamarckian Concepts in a Genetic Algorithm for Structure Solution from Powder Diffraction Data. *Chemical Physics Letters,* 2000, vol. 321, 183-190
- **B. KURIUKI ; S. BELMONTE ; M. MCMAHON ; R. JHONSTON ; K. HARRIS ; R. NELMES.** A new approach for indexing powder diffraction data based on whole-profile fitting and global optimization using a genetic algorithm. *Journal of Synchrotron Radiation,* 1999, vol. 6, 87-92
- **L. J. ESHELMAN ; J. D. SCHAFFER.** Real-Coded Genetic Algorithm and Interval Schemata. *Foundation of Genetic Algorithm,* 1993, vol. 2, 187-202
- **D. HARKER ; J. S. KASPER.** Phases of Fourier Coefficients directly from Crystal Diffraction Data. *Acta Cryst.,* 1948, vol. 1, 70
- **D. SAYRE.** The Squaring Method: a New Method for Phase Determination. *Acta Cryst.,* 1952, vol. 5, 60
- **W. COCHRAN.** Relation between the Phases of Structures. *Acta Cryst.,* 1955, vol. 8, 473
- **YUICHI FUJISHIRO ; EIJI NISHIBORI ; MASAKI TAKATA ; MAKOTO SAKATA ; WAKAKO SUZUKI ; EMIKO FUJIWARA ; AKIKO KOBAYASHI ; HIDEKI FUJIWARA ; HAYAO KOBAYASHI.** MEM Electron Density Distribution of Ni(tmdt)2 and Au(tmdt)2 of Neutral Single-component Molecular Metal. *Dept. of Applied Physics, Nagoya Univ.1, Dept. of Chemistry, School of Science, The Univ. of Tokyo2, Institute for Molecular Science3, CREST4), The Crystallographic Society of Japan Annual Meeting 2003,* 01 December 2003
- **MASANORI YOSHIDA ; SHINOBU AOYAGI ; EIJI NISHIBORI ; MAKOTO SAKATA ; MIO KONDO ; MASAKI MURATA ; HIROSHI NISHIHARA.** Crystal Structure of Large Ferrocene-Anthraquinone Complex Added with Benzene. *Dept. of Applied Physics, Nagoya Univ., Dept. of Chemistry, School of Science, The Univ. of Tokyo), The Crystallographic Society of Japan,* 06 December 2005
- **NISHIBORI EIJI.** The Development of a Method for an Accurate Structural Analysis by Synchrotron X-ray Powder Diffraction. *Journal of the Crystallographic Society of Japan,* 2006, vol. 48 (3), 216-223
- **KOBAYASHI A. ; FUJIWARA E. ; SUZUKI W. ; SASA M. ; FUJISHIRO Y. ; EIJI NISHIBORI ; MASAKI TAKATA ; MAKOTO SAKATA ; OKANO Y. ; FUJIWARA H.** Recent progress in development of single-component molecular metals. *Journal De Physique IV,* 2004, vol. 114, 419-424
- **SUZUKI W. ; FUJIWARA E. ; KOBAYASHI A. ; FUJISHIRO Y. ; EIJI NISHIBORI ; MASAKI TAKATA ; MAKOTO SAKATA ; OKANO Y. ; KOBAYASHI H.** Structures of a single-component palladium complex with extended TTF-type dithiolate ligands, bis-(tetrathiafulvalenedithiolato) palladium determined by powder X-ray diffraction. *Chemistry Letters,* 2003, vol. 32, 1106-1107

- **A. LE BAIL et al.** *Mat. Res. Bull.,* 1988, vol. 23, 447
- **H. M. RIETVELD.** *J. Appl. Cryst.,* 1969, vol. 2, 65
- **M. SAKATA et al.** *Acta Cryst.,* 1990, vol. A46, 263